# EUROPEAN PATENT SPECIFICATION

(11) **EP 4 125 105 B1**
(45) Date of publication and mention of the grant of the patent: **25.02.2026**
(21) Application number: 22185412.8
(22) Date of filing: 18.07.2022
(51) Int. Cl.: H01G 9/20

(54) **TITLE OF THE INVENTION PHOTOELECTRIC CONVERSION ELEMENT, PHOTOELECTRIC CONVERSION MODULE, AND ELECTRONIC DEVICE**
FOTOELEKTRISCHES UMWANDLUNGSELEMENT, FOTOELEKTRISCHES UMWANDLUNGSMODUL UND ELEKTRONISCHE VORRICHTUNG
ÉLÉMENT DE CONVERSION PHOTOÉLECTRIQUE, MODULE DE CONVERSION PHOTOÉLECTRIQUE ET DISPOSITIF ÉLECTRONIQUE

(30) Priority: 29.07.2021 JP 2021124575
(43) Date of publication of application: 01.02.2023
(73) Proprietor: Ricoh Company, Ltd., Tokyo 143-8555 (JP)
(72) Inventor: Tamoto, Nozomu, Tokyo, 143-8555 (JP); Tanaka, Yuuji, Tokyo, 143-8555 (JP); Kanei, Naomichi, Tokyo, 143-8555 (JP); Nozoe, Suzuka, Tokyo, 143-8555 (JP)
(74) Representative: Marks & Clerk LLP

(56) References cited:
- WO-A1-2019/181701
- WO-A1-2020/158876
- JP-A- 2016 178 102
- JP-A- 2020 102 602

## Description

### BACKGROUND OF THE INVENTION

### Field of the Invention

The present disclosure relates to a photoelectric conversion element, a photoelectric conversion module, and an electronic device.

### Description of the Related Art

In recent years, driving electricity for electronic circuits has been getting extremely low, and various electronic devices, such as a sensor, can be derived with low electricity (of µW order). As application for a sensor, use of an energy harvesting element as a stand-alone power system capable of generating and consuming electricity in a sensor has been expected. Among such embodiments, a solar battery cell, which is one kind of photoelectric conversion elements, has attracted attentions as an element capable of generating electricity in any environment, as long as light is available, even when the light is weak light.

Especially, a photoelectric conversion element, such as a solar battery cell, is desired to output electric power with light of low illuminance and have durability, depending on intended use thereof.

In order to attain excellent photoelectric conversion properties with very weak irradiation light (from 10 lux through 50 lux), such as indoor light, for example, proposed is a photoelectric conversion element including an electrode, a hole-blocking layer, an electron-transporting layer, a hole-transporting layer, and an electrode disposed in this order, where the hole-transporting layer includes a basic compound represented by a specific structural formula (see Japanese Unexamined Patent Application Publication No. 2016-178102). Further relevant prior art can be found in JP 2016 178102 A, JP 2020 102602 A, WO 2020/158876 A1, and WO 2019/181701 A1, which all disclose photovoltaic devices comprising amine pyridines.

### SUMMARY OF THE INVENTION

According to one aspect of the present disclosure, a photoelectric conversion element in accordance with claim 1 is provided.

### BRIEF DESCRIPTION OF THE DRAWINGS

FIG. 1 is a schematic view illustrating an example of the photoelectric conversion element of the first embodiment;
FIG. 2 is a schematic view illustrating an example of the photoelectric conversion element of the second embodiment;
FIG. 3 is a schematic view illustrating an example of the photoelectric conversion element of the third embodiment;
FIG. 4 is a schematic view illustrating an example of the photoelectric conversion module of the fourth embodiment;
FIG. 5 is a schematic view illustrating an example of the photoelectric conversion module of the fifth embodiment;
FIG. 6 is a block diagram of a mouse for a personal computer as an example of the electronic device of the present disclosure;
FIG. 7 is a schematic external view illustrating an example of the mouse of FIG. 6;
FIG. 8 is a block diagram of a keyboard for a personal computer as an example of the electronic device of the present disclosure;
FIG. 9 is a schematic external view illustrating an example of the keyboard of FIG. 8;
FIG. 10 is a schematic external view illustrating another example of the keyboard of FIG. 8;
FIG. 11 is a block diagram of a sensor as an example of the electronic device of the present disclosure;
FIG. 12 is a block diagram of a turntable as an example of the electronic device of the present disclosure;
FIG. 13 is a block diagram illustrating an example of the electronic device of the present disclosure;
FIG. 14 is a block diagram illustrating an example of the electronic device of FIG. 13, into which a power supply IC is incorporated;
FIG. 15 is a block diagram illustrating an example of the electronic device of FIG. 14, into which an electricity storage device is further incorporated;
FIG. 16 is a block diagram illustrating an example of the power supply module of the present disclosure;
FIG. 17 is a block diagram illustrating an example of the power supply module of FIG. 16, into which an electricity storage device is further incorporated; and
FIG. 18 is a graph depicting an example of an X-ray absorption fine structure (XAFS) spectrum measured by using the photoelectric conversion module of Example 1.

### DESCRIPTION OF THE EMBODIMENTS

### (Photoelectric conversion element)

The photoelectric conversion element of the present disclosure includes a first electrode, a photoelectric conversion layer, and a second electrode, and may further include other layers according to the necessity. The photoelectric conversion layer includes a hole-transporting layer.

The hole-transporting layer includes a tertiary amine pyridine compound, and a secondary amine pyridine compound.

The present inventors have found that a photoelectric conversion element capable of achieving high output even with light of low illuminance, reducing variation in output overtime, and maintaining stable output can be obtained because the photoelectric conversion element of the present disclosure includes a hole-transporting layer that includes a tertiary amine pyridine compound and a secondary amine pyridine compound.

The present disclosure has an object to provide a photoelectric conversion element capable of yielding high output with light of low illuminance, having small variation in output over time, and obtaining stable output.

The present disclosure can provide a photoelectric conversion element capable of yielding high output with light of low illuminance, having small variation in output over time, and obtaining stable output.

In the present specification, the term "photoelectric conversion element" means an element configured to convert photoenergy into electric energy or an element configured to convert electric energy into photoenergy. Specific examples thereof include a solar battery cell, and a photodiode.

In the present disclosure, the term "layer" means a single film (single layer) as well as a structure where a plurality of films are laminated.

Moreover, the term "laminating direction" means a vertical direction relative to a planar direction of each layer of the photoelectric conversion element. The term "connect" means not only a physical connection, but also an electric connection by which an effect of the present disclosure can be exhibited.

The photoelectric conversion element of the present disclosure includes a first electrode, a photoelectric conversion layer, and a second electrode, where the photoelectric conversion layer includes at least an electron-transporting layer, and a hole-transporting layer. The photoelectric conversion element may further include other members, such as a first substrate, a second substrate, a hole-blocking layer, and a sealing member, according to the necessity.

### <First substrate>

A shape, structure, and size of the first substrate are not particularly limited, and may be appropriately selected depending on the intended purpose.

A material of the first substrate is not particularly limited as long as the material has transparency and insolation properties, and may be appropriately selected depending on the intended purpose. Examples thereof include a substrate of glass, a plastic film, or ceramic. Among the above-listed examples, a substrate having heat resistance against a firing temperature is preferable when a step for firing is included in the process for forming an electron-transporting layer as described later. Moreover, the first substrate is more preferably a flexible substrate.

The substrate may be disposed at either or both of the outer sides of the photoelectric conversion element including the outer side that is the side where the first electrode is disposed and the outer side that is the side where the second electrode is disposed.

The substrate disposed at the outer side of the photoelectric conversion element where the first electrode side is disposed is referred to as a first substrate, and the substrate disposed at the outer side of the photoelectric conversion element where the second electrode is disposed is referred to as a second substrate.

The average thickness of the substrate is not particularly limited and may be appropriately selected depending on the intended purpose. For example, the average thickness of the substrate is 50 µm or greater but 5 mm or less.

### <First electrode>

A shape and size of the first electrode are not particularly limited, and may be appropriately selected depending on the intended purpose.

A structure of the first electrode is not particularly limited, and may be appropriately selected depending on the intended purpose. The first electrode may have a single-layer structure, or a structure in which a plurality of materials are laminated.

A material of the first electrode is not particularly limited as long as the material is transparent to visible light and is conductive, and may be appropriately selected depending on the intended purpose. Examples of the material of the first electrode include transparent conductive metal oxide, carbon, and metal.

Examples of the transparent conductive metal oxide include tin-doped indium oxide (referred to as "ITO" hereinafter), fluorine-doped tin oxide (referred to as "FTO" hereinafter), antimony-doped tin oxide (referred to as "ATO" hereinafter), niobium-doped tin oxide (referred to as "NTO" hereinafter), aluminium-doped zinc oxide, indium zinc oxide, and niobium titanium oxide.

Examples of the carbon include carbon black, carbon nanotube, graphene, and fullerene.

Examples of the metal include gold, silver, aluminum, nickel, indium, tantalum, and titanium.

The above-listed examples may be used alone or in combination. Among the above-listed materials, a transparent conductive metal oxide having high transparency is preferable, and ITO, FTO, ATO, NTO, and AZO are more preferable.

The average thickness of the first electrode is not particularly limited, and may be appropriately selected depending on the intended purpose. The average thickness of the first electrode is preferably 5 nm or greater but 100 µm or less, and more preferably 50 nm or greater but 10 µm or less. When the material of the first electrode is carbon or metal, the average thickness of the first electrode is preferably the average thickness allowing the first electrode to obtain translucency or transparency.

The first electrode can be formed by any method known in the art, such as sputtering, vapor deposition, and spraying.

Moreover, the first electrode is preferably formed on the first substrate. As the first electrode, a commercially available integrated product in which a first electrode has been formed on a first substrate in advance can be used.

Examples of the commercially available integrated product include FTO-coated glass, ITO-coated glass, zinc oxide:aluminum-coated glass, FTO-coated transparent plastic films, and ITO-coated transparent plastic films. Examples of other commercially available integrated product include: a glass substrate provided with a transparent electrode where tin oxide or indium oxide is doped with a cation or an anion having a different atomic value; and a glass substrate provided with a metal electrode having such a structure that allows light to pass in the shape of a mesh or stripes.

The above-listed examples may be used alone, or two or more of the above-listed examples may be used together or laminated. Moreover, a metal lead wire may be used in combination for the purpose of reducing an electric resistance value of the first electrode.

In order to produce the below-described photoelectric conversion module by appropriately processing a commercially available integrated electrode, a substrate on which a plurality of first electrodes are formed may be produced.

Examples of a material of the metal lead wire include aluminum, copper, silver, gold, platinum, and nickel.

For example, the metal lead wire can be used in combination by disposing the metal lead wire on the substrate through vapor deposition, sputtering, or pressure bonding, and depositing a layer of ITO or FTO thereon. Alternatively, the metal lead wire can be used in combination by depositing the metal lead wire on ITO or FTO.

### <Hole-blocking layer>

The hole-blocking layer is preferably further formed and is very effective for improving output and improving retention of the output performance.

The hole-blocking layer is formed between the first electrode and the electron-transporting layer. In other words, the photoelectric conversion element of the present disclosure preferably further includes the hole-blocking layer disposed between the first electrode and the photoelectric conversion layer.

The hole-blocking layer is capable of transporting electrons generated by the photosensitization compound and transported to the electron-transporting layer to the first electrode, and preventing contact with the hole-transporting layer. Specifically, the contact between the hole-transporting layer and the electrode is prevented, and therefore holes in the hole-transporting layer and the electrons at the surface of the electrode are prevented from being recombined (so-called reverse electron transfer) to reduce electricity.

As a result, the hole-blocking layer hardly allows holes to flow into the first electrode, and therefore reduction in output due to recombination between electrons and holes can be prevented.

The effect of the hole-blocking layer can be particularly significantly exhibited in a solid dye-sensitized solar battery cell. This is because, compared to a wet dye-sensitized solar battery cell using an electrolytic solution, a solid dye-sensitized solar battery cell using an organic hole-transporting material etc. has the faster recombination speed (reverse electron transfer speed) between the holes in the hole-transporting material and the electrons at the surface of the electrode.

A material of the hole-blocking layer is not particularly limited as long as the material is transparent to visible light and has electron-transporting capabilities, and may be appropriately selected depending on the intended purpose. Examples of the material include: an element semiconductor, such as silicon, and germanium; a compound semiconductor, such as chalcogenide of metal; and a compound having a perovskite structure.

Examples of the chalcogenide of metal include: oxides of titanium, tin, zinc, iron, tungsten, zirconium, hafnium, strontium, indium, cerium, yttrium, lanthanum, vanadium, niobium, tantalum, etc.; sulfides of cadmium, zinc, lead, silver, antimony, bismuth, etc.; selenides of cadmium, lead, etc.; and tellurium compounds of cadmium, etc. Examples of other compound semiconductors include: phosphides of zinc, gallium, indium, cadmium, etc.; gallium arsenide; copper-indium-selenide; and copper-indium-sulfide.

Examples of the compound having the perovskite structure include strontium titanate, calcium titanate, sodium titanate, barium titanate, and potassium niobate.

Among the above-listed materials, an oxide semiconductor is preferable, titanium oxide, niobium oxide, magnesium oxide, aluminium oxide, zinc oxide, tungsten oxide, and tin oxide are preferable, and titanium oxide is more preferable.

The above-listed examples may be used alone or in combination. The hole-blocking layer may be of a single layer structure, or multiple layer structure. Moreover, a crystal type of the above-mentioned semiconductor is not particularly limited, and may be appropriately selected depending on the intended purpose. The semiconductor may be monocrystalline, polycrystalline, or amorphous.

A film formation method of the hole-blocking layer is not particularly limited and may be appropriately selected depending on the intended purpose. In order to reduce loss current with indoor light, it is important that internal resistance is high. Therefore, the film formation method of the hole-blocking layer is important.

The production method of the hole-blocking layer is not particularly limited, and may be appropriately selected depending on the intended purpose. Examples of the production method thereof include a method for forming a thin film in vacuum (a vacuum film formation method), and a wet film formation method.

Typical examples of the wet film formation method include a sol-gel method. However, a film formed by the sol-gel method has low film density, and loss current cannot be sufficiently suppressed. Therefore, the production method of the hole-blocking layer is more preferably a dry film formation method, such as sputtering. According to the dry film formation method, a film having sufficiently high film density can be formed and therefore current loss can be suppressed.

Examples of the vacuum film formation method include sputtering, pulsed laser deposition (PLD), ion-beam sputtering, ion-assisted deposition, ion plating, vacuum vapor deposition, atomic layer deposition (ALD), and chemical vapor deposition (CVD).

Examples of the wet film formation method include a sol-gel method. According to the sol-gel method, a solution is subjected to a chemical reaction, such as hydrolysis, polymerization, and condensation, to form a gel, followed by performing a heat treatment to accelerate densification of the gel. When the sol-gel method is used, a coating method of the sol solution is not particularly limited, and may be appropriately selected depending on the intended purpose. Examples of the coating method include dip coating, spray coating, wire bar coating, spin coating, roller coating, blade coating, and gravure coating. Moreover, a wet printing method may be used as the coating method. Examples of the wet printing method include relief printing, offset printing, gravure printing, intaglio printing, rubber plate printing, and screen printing. Moreover, a temperature of a heat treatment performed after applying the sol solution is preferably 80°C or higher, and more preferably 100°C or higher.

The average thickness of the hole-blocking layer is not particularly limited, and may be appropriately selected depending on the intended purpose. The average thickness of the hole-blocking layer is preferably 5 nm or greater but 1 µm or less, more preferably 500 nm or greater but 700 nm or less in wet film formation, and more preferably 10 nm or greater but 30 nm or less in dry film formation.

### <Photoelectric conversion layer>

The photoelectric conversion layer includes an electron-transporting layer, a photosensitization compound, and a hole-transporting layer, and may further include other members.

The photoelectric conversion layer may be of a single layer structure, or multiple layer structure where a plurality of layers is stacked.

### <<Electron-transporting layer>>

The photoelectric conversion element includes the electron-transporting layer on a surface of which a photosensitization compound is adsorbed.

The electron-transporting layer is preferably disposed between the first electrode and the photosensitization compound.

The electron-transporting layer is formed for the purpose of transporting electrons generated by the photosensitization compound to the first electrode or the hole-blocking layer. Therefore, the electron-transporting layer is preferably disposed next to the first electrode or the hole-blocking layer.

A structure of the electron-transporting layer is not particularly limited and may be appropriately selected depending on the intended purpose. When at least two photoelectric conversion elements are disposed next to one another, the electron-transporting layer of one photoelectric conversion element may be extended to and connected to the electron-transporting layer of another photoelectric conversion element, but the electron-transporting layer of one photoelectric conversion element is preferably not extended to and connected to the electron-transporting layer of another photoelectric conversion element. Moreover, the structure of the electron-transporting layer may be a single layer structure, or multiple layer structure where a plurality of layers is stacked.

The electron-transporting layer includes an electron-transporting material, and may further include other materials according to the necessity.

The electron-transporting material is not particularly limited and may be appropriately selected depending on the intended purpose. The electron-transporting material is preferably a semiconductor material.

The semiconductor material preferably includes particles that are bonded to together to form a porous film. The photosensitization compound is chemically or physically adsorbed on surfaces of the semiconductor particles constituting the porous electron-transporting layer.

The semiconductor material is not particularly limited, and may be appropriately selected depending on the intended purpose. Examples of the semiconductor material include an element semiconductor, a compound semiconductor, and a compound having a perovskite structure.

Examples of the element semiconductor include silicon and germanium.

Examples of the compound semiconductor include chalcogenide of metal. Specific examples thereof include: oxides of titanium, tin, zinc, iron, tungsten, zirconium, hafnium, strontium, indium, cerium, yttrium, lanthanum, vanadium, niobium, tantalum, etc.; sulfides of cadmium, zinc, lead, silver, antimony, bismuth, etc.; selenides of cadmium, lead, etc.; tellurium compounds of cadmium, etc.; and other compound semiconductors. Examples of the above-mentioned other compound semiconductors include: phosphides of zinc, gallium, indium, cadmium, etc.; gallium arsenide; copper-indium-selenide; and copper-indium-sulfide.

Examples of the compound having the perovskite structure include strontium titanate, calcium titanate, sodium titanate, barium titanate, and potassium niobate.

Among the above-listed examples, oxide semiconductors are preferable, and titanium oxide, zinc oxide, tin oxide, and niobium oxide are more preferable. When the electron-transporting material of the electron-transporting layer is titanium oxide, the conduction band thereof is high, and therefore high open circuit voltage is obtained. Moreover, high photoelectric conversion efficiency can be obtained. Therefore, use of titanium oxide as the electron-transporting material is advantageous.

The above-listed examples may be used alone or in combination. Moreover, a crystal type of the semiconductor material is not particularly limited and may be appropriately selected depending on the intended purpose. The semiconductor material may be monocrystalline, polycrystalline, or amorphous.

The semiconductor material is preferably in the form of particles.

The number average particle diameter of the primary particles of the semiconductor material is not particularly limited, and may be appropriately selected depending on the intended purpose. The number average particle diameter thereof is preferably 1 nm or greater but 100 nm or less, and more preferably 5 nm or greater but 50 nm or less. Moreover, a semiconductor material having the larger particle diameter than the above-mentioned number average particle diameter may be blended or laminated, which may lead to improvement of conversion efficiency owing to an effect of scattering incident light. In this case, the number average particle diameter of the semiconductor material having the larger particle diameter is preferably 50 nm or greater but 500 nm or less.

The average thickness of the electron-transporting layer is not particularly limited and may be appropriately selected depending on the intended purpose. The average thickness of the electron-transporting layer is preferably 50 nm or greater but 100 µm or less, more preferably 100 nm or greater but 50 µm or less, and even more preferably 120 nm or greater but 10 µm or less. The average thickness of the electron-transporting layer within the above-mentioned preferable range is advantageous because a sufficient amount of the photosensitization compound per unit projection area can be secured, a high capturing rate of light can be maintained, dispersion distances of injected electrons tend not to be increased, and loss of electric charge due to recombination can be reduced.

A production of the electron-transporting layer is not particularly limited and may be appropriately selected depending on the intended purpose. Examples of the production method thereof include a method where a film is formed in vacuum, such as sputtering, and a wet film formation method. Among the above-listed examples, considering production cost, a wet film formation method is preferable, and a method where a powder or sol of a semiconductor material is dispersed to prepare a paste (a dispersion liquid of the semiconductor material), and the dispersion liquid is applied onto the first electrode serving as an electron collector electrode substrate or the hole-blocking layer is more preferable.

The wet film formation method is not particularly limited and may be appropriately selected depending on the intended purpose. Examples thereof include dip coating, spray coating, wire bar coating, spin coating, roller coating, blade coating, gravure coating, die coating.

As the wet printing method, various methods, such as relief printing, offset printing, gravure printing, intaglio printing, rubber plate printing, and screen printing, may be used.

A method for preparing a dispersion liquid of the semiconductor material is not particularly limited, and may be appropriately selected depending on the intended purpose. Examples thereof include a method including mechanical pulverizing using a milling device known in the art. According to the above-mentioned preparation method, particles of the semiconductor material alone, or a mixture of the semiconductor material and a resin are dispersed in water or a solvent to prepare a dispersion liquid of the semiconductor material.

Examples of the resin include a polymer or copolymer of a vinyl compound (e.g., styrene, vinyl acetate, acrylic acid ester, and methacrylic acid ester), a silicone resin, a phenoxy resin, a polysulfone resin, a polyvinyl butyral resin, a polyvinyl formal resin, a polyester resin, a cellulose ester resin, a cellulose ether resin, an urethane resin, a phenol resin, an epoxy resin, a polycarbonate resin, a polyarylate resin, a polyamide resin, and a polyimide resin. The above-listed examples may be used alone or in combination.

Examples of the solvent include water, an alcohol solvent, a ketone solvent, an ester solvent, an ether solvent, an amide solvent, a halogenated hydrocarbon solvent, and a hydrocarbon solvent.

Examples of the alcohol solvent include methanol, ethanol, isopropyl alcohol, and α-terpineol.

Examples of the ketone solvent include acetone, methyl ethyl ketone, and methyl isobutyl ketone.

Examples of the ester solvent include ethyl formate, ethyl acetate, and n-butyl acetate.

Examples of the ether solvent include diethyl ether, dimethoxy ethane, tetrahydrofuran, dioxolane, and dioxane.

Examples of the amide solvent include N,N-dimethylformamide, N,N-dimethylacetamide, and N-methyl-2-pyrrolidone.

Examples of the halogenated hydrocarbon solvent include dichloromethane, chloroform, bromoform, methyl iodide, dichloroethane, trichloroethane, trichloroethylene, chlorobenzene, o-dichlorobenzene, fluorobenzene, bromobenzene, iodobenzene, and 1-chloronaphthalene.

Examples of the hydrocarbon solvent include n-pentane, n-hexane, n-octane, 1,5-hexadiene, cyclohexane, methylcyclohexane, cyclohexadiene, benzene, toluene, o-xylene, m-xylene, p-xylene, ethylbenzene, and cumene.

The above-listed examples may be used alone or in combination.

**In** order to prevent re-aggregation of particles, an acid, a surfactant, or a chelating agent may be added to a dispersion liquid including the particles of the semiconductor material or a paste including the particles of the semiconductor material obtained by a sol-gel method.

Examples of the acid include hydrochloric acid, nitric acid, and acetic acid.

Examples of the surfactant include polyoxyethylene octylphenyl ether.

Examples of the chelating agent include acetyl acetone, 2-aminoethanol, and ethylene diamine.

Moreover, to add a thickening agent for the purpose of improving film formability is also effective.

Examples of the thickening agent include polyethylene glycol, polyvinyl alcohol, and ethyl cellulose.

After applying the semiconductor material, firing or irradiation of microwaves or electron beams may be performed in order to electrically connect between the particles of the semiconductor material to improve a film strength or adhesion with the substrate. One of the above-mentioned treatments may be performed alone, or two or more of the above-mentioned treatments may be performed in combination.

When the firing of the electron-transporting layer including the semiconductor material is performed, the firing temperature is not particularly limited, and may be appropriately selected depending on the intended purpose. When the firing temperature is too high, resistance of the substrate may be increased or the substrate may be melted. Therefore, the firing temperature is preferably 30°C or higher but 700°C or lower, and more preferably 100°C or higher but 600°C or lower. Moreover, the firing time is not particularly limited, and may be appropriately selected depending on the intended purpose. The duration of the firing is preferably 10 minutes or longer but 10 hours or shorter.

When microwave irradiation is performed on the electron-transporting layer formed of the semiconductor material, the irradiation time is not particularly limited, and may be appropriately selected depending on the intended purpose. The irradiation time is preferably 1 hour or shorter. The irradiation may be performed from the side where the electron-transporting layer is formed, or may be performed from the opposite side where the electron-transporting layer is not formed.

In order to increase a surface area of the electron-transporting layer or improve an electron injection efficiency from the below-described photosensitization compound to the semiconductor material, for example, chemical plating using an aqueous solution of titanium tetrachloride or a mixed solution with an organic solvent, or electrochemical plating using an aqueous solution of titanium trichloride may be performed after firing the electron-transporting layer formed of the semiconductor material.

A film obtained by firing the particles of the semiconductor material having diameter of several tens nanometers forms a porous state. The film having the porous structure has an extremely large surface area, and the surface area thereof can be represented with a roughness factor. The roughness factor is a numerical value representing an actual area of the inner side of pores relative to an area of the semiconductor particles applied on the first substrate. Accordingly, the larger roughness factor is more preferable. Considering the relationship with the average thickness of the electron-transporting layer, the roughness factor is preferably 20 or greater.

Moreover, the photosensitization compound may be disposed between the electron-transporting layer and the hole-transporting layer.

### <<Photosensitization compound>>

In the present disclosure, the photosensitization compound is preferably adsorbed on a surface of the electron-transporting semiconductor of the electron-transporting layer for the purpose of further improving conversion efficiency.

The photosensitization compound is not particularly limited, as long as the photosensitization compound is a compound that is photoexcited by excitation light to be used, and may be appropriately selected depending on the intended purpose. Examples thereof include: metal complex compounds disclosed in Japanese Translation of PCT International Application Publication No. 07-500630, Japanese Unexamined Patent Application Publication No. 10-233238, Japanese Unexamined Patent Application Publication No. 2000-26487, Japanese Unexamined Patent Application Publication No. 2000-323191, and Japanese Unexamined Patent Application Publication No. 2001-59062; coumarine compounds disclosed in Japanese Unexamined Patent Application Publication No. 10-93118, Japanese Unexamined Patent Application Publication No. 2002-164089, Japanese Unexamined Patent Application Publication No. 2004-95450, and J. Phys. Chem. C, 7224, Vol. 111 (2007); polyene compounds disclosed in Japanese Unexamined Patent Application Publication No. 2004-95450, and Chem. Commun., 4887 (2007); indoline compounds disclosed in Japanese Unexamined Patent Application Publication No. 2003-264010, Japanese Unexamined Patent Application Publication No. 2004-63274, Japanese Unexamined Patent Application Publication No. 2004-115636, Japanese Unexamined Patent Application Publication No. 2004-200068, Japanese Unexamined Patent Application Publication No. 2004-235052, J. Am. Chem. Soc., 12218, Vol. 126 (2004), Chem. Commun.,3036 (2003), and Angew. Chem. Int. Ed., 1923, Vol. 47 (2008); thiophene compounds disclosed in J. Am. Chem. Soc., 16701, Vol. 128 (2006), and J. Am. Chem. Soc., 14256, Vol. 128 (2006); cyanine dyes disclosed in Japanese Unexamined Patent Application Publication No. 11-86916, Japanese Unexamined Patent Application Publication No. 11-214730, Japanese Unexamined Patent Application Publication No. 2000-106224, Japanese Unexamined Patent Application Publication No. 2001-76773, and Japanese Unexamined Patent Application Publication No. 2003-7359; merocyanine dyes disclosed in Japanese Unexamined Patent Application Publication No. 11-214731, Japanese Unexamined Patent Application Publication No. 11-238905, Japanese Unexamined Patent Application Publication No. 2001-52766, Japanese Unexamined Patent Application Publication No. 2001-76775, and Japanese Unexamined Patent Application Publication No. 2003-7360; 9-arylxanthene compounds disclosed in Japanese Unexamined Patent Application Publication No. 10-92477, Japanese Unexamined Patent Application Publication No. 11-273754, Japanese Unexamined Patent Application Publication No. 11-273755, and Japanese Unexamined Patent Application Publication No. 2003-31273; triarylmethane compounds disclosed in Japanese Unexamined Patent Application Publication No. 10-93118, and Japanese Unexamined Patent Application Publication No. 2003-31273; phthalocyanine compounds disclosed in Japanese Unexamined Patent Application Publication No. 09-199744, Japanese Unexamined Patent Application Publication No. 10-233238, Japanese Unexamined Patent Application Publication No. 11-204821, Japanese Unexamined Patent Application Publication No. 11-265738, J. Phys. Chem., 2342, Vol. 91 (1987), J. Phys. Chem. B, 6272, Vol. 97 (1993), Electroanal. Chem., 31, Vol. 537 (2002), Japanese Unexamined Patent Application Publication No. 2006-032260, J. Porphyrins Phthalocyanines, 230, Vol. 3 (1999), Angew. Chem. Int. Ed., 373, Vol. 46 (2007), and Langmuir, 5436, Vol. 24 (2008); and polyphyrin compounds.

Among the above-listed examples, the metal complex compounds, the coumarine compounds, the polyene compounds, the indoline compounds, and the thiophene compounds are preferable, and compounds represented by Structural Formulae (1), (2), and (3) below, available from MITSUBISHI PAPER MILLS LIMITED, are also preferably used.

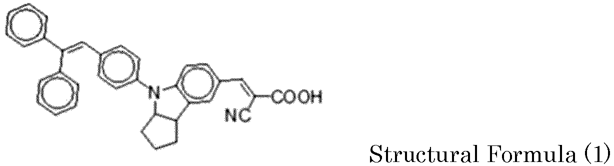

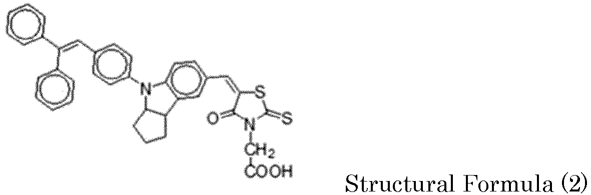

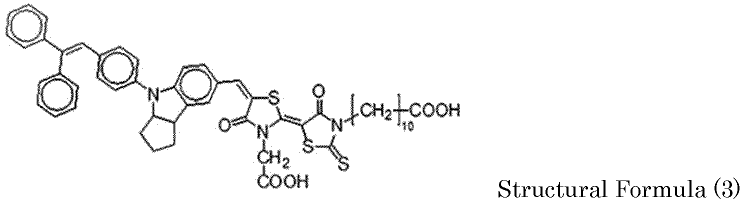

Examples of the photosensitization compound that is more preferably used include a compound represented by General Formula (5) below.

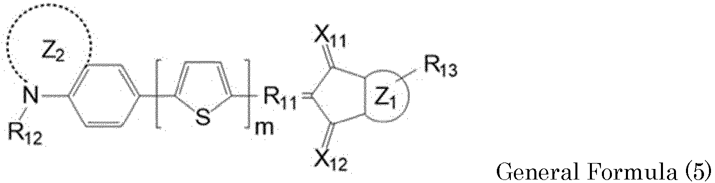

In General Formula (5), X₁₁ and X₁₂ are each independently an oxygen atom, a sulfur atom, or a selenium atom.

R₁₁ is a methane group that may have a substituent. Specific examples of the substituent include an aryl group (e.g., a phenyl group, and a naphthyl group), and a heterocycle (e.g., a thienyl group, and a furyl group).

R₁₂ is an alkyl group, aryl group, or heterocyclic group, which may have a substituent. Examples of the alkyl group include a methyl group, an ethyl group, a 2-propyl group, and a 2-ethylhexyl group. Examples of the aryl group and examples of the heterocyclic group are as described above.

R₁₃ is an acid group, such as carboxylic acid, sulfonic acid, phosphonic acid, boronic acid, and phenols. The number of R₁₃ may be one, or two or more.

Z₁ and Z₂ are each independently a substituent constituting a cyclic structure. Examples of Z₁ include a condensed hydrocarbon compound (e.g., a benzene ring, and a naphthalene ring), and a hetero cycle (e.g., a thiophene ring, and a furan ring), each of which may have a substituent. Specific examples of the substituent include above-described alkyl group, and an alkoxy group (e.g., a methoxy group, an ethoxy group, and a 2-isopropoxy group). Specific examples of Z₂ include (A-1) to (A-22) below.

Note that, m is an integer of from 0 through 2.

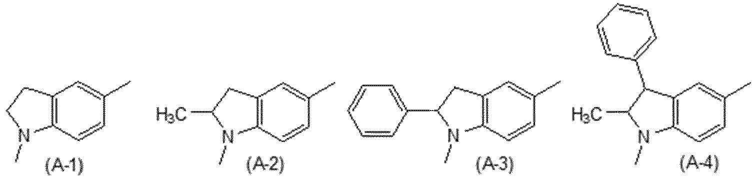

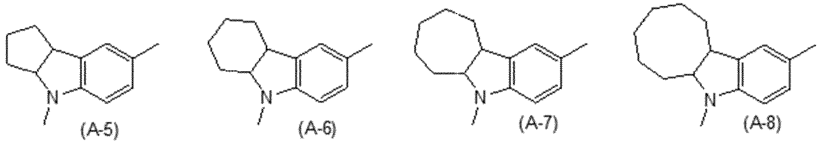

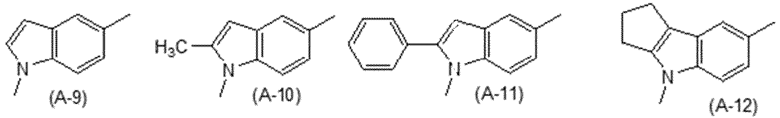

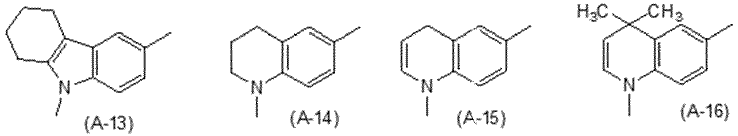

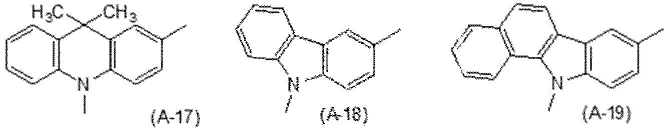

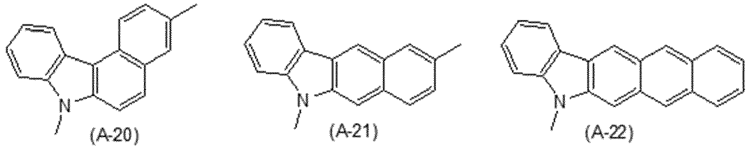

Among the above-listed compounds, a compound represented by General Formula (6) is more preferably used.

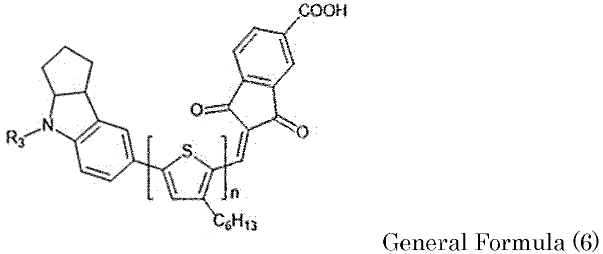

In General Formula (6), n is an integer of 0 or 1; and R₃ is an aryl group that may have a substituent, or a substituent represented by any of the following three structural formulae.

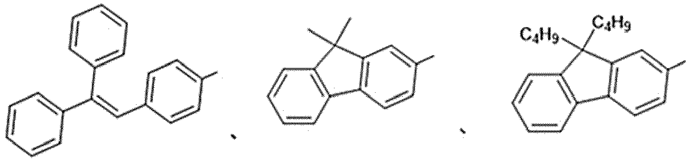

Specific examples of the photosensitization compounds represented by General Formulae (5) and (6) include, but are not limited to, (B-1) to (B-36) below.

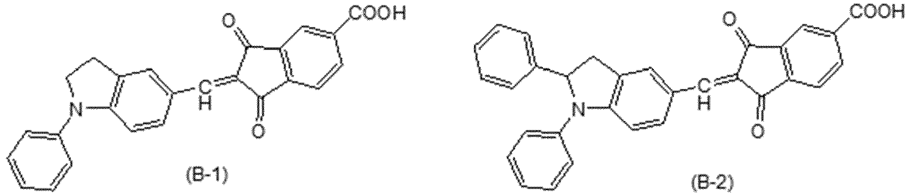

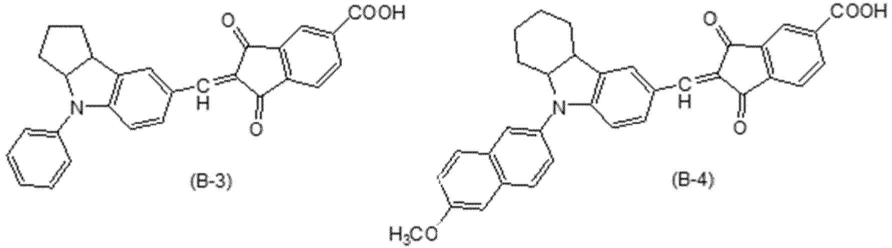

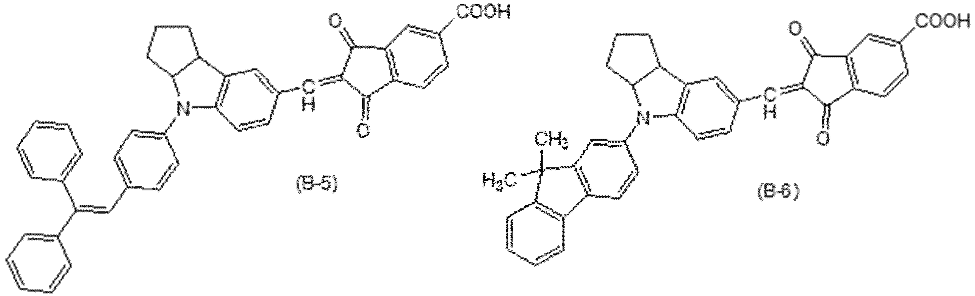

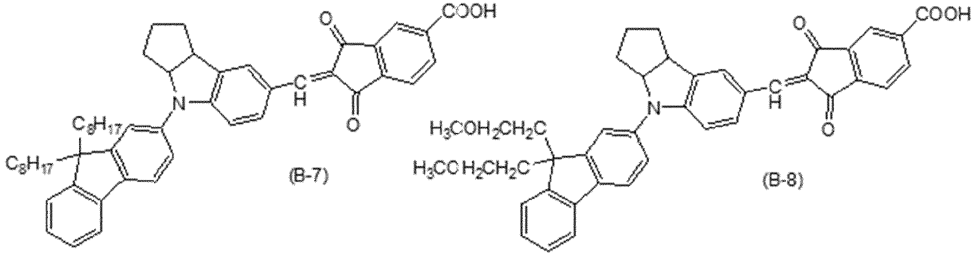

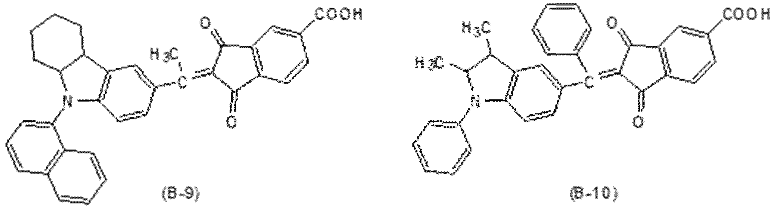

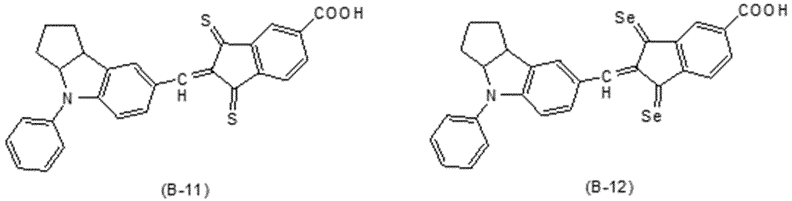

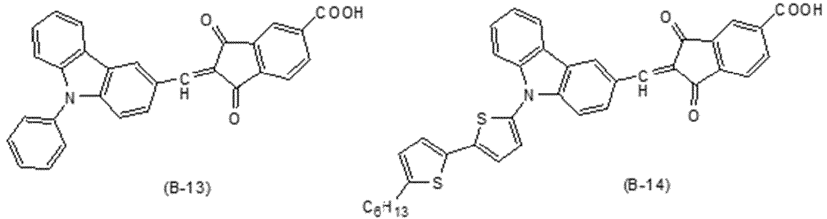

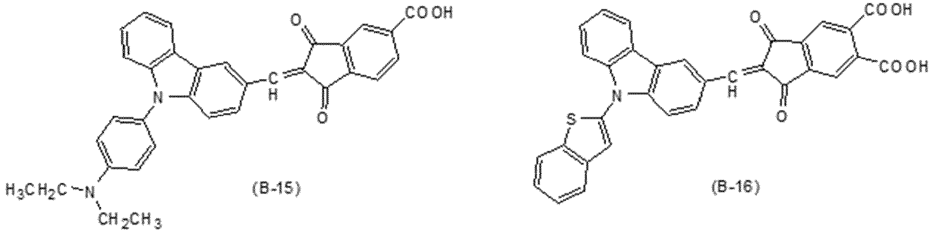

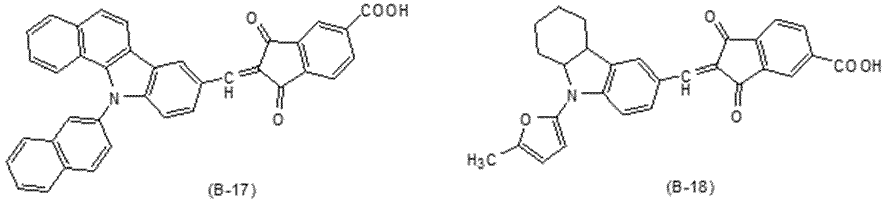

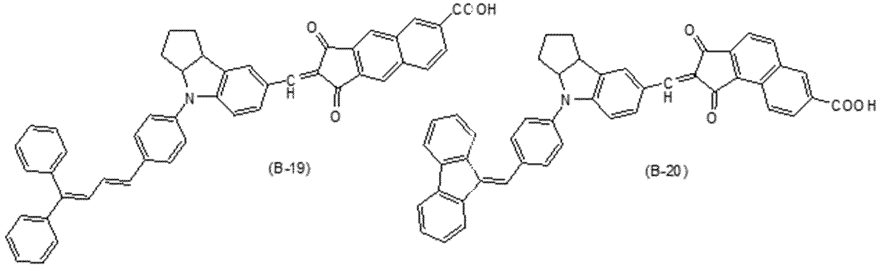

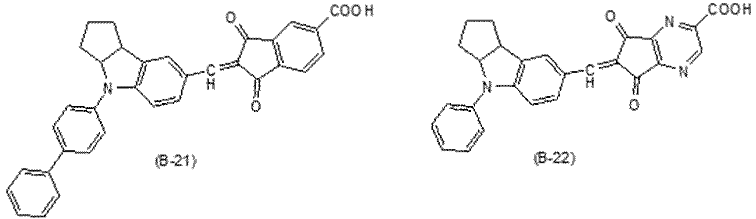

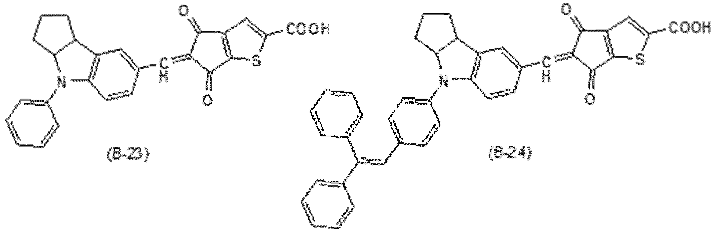

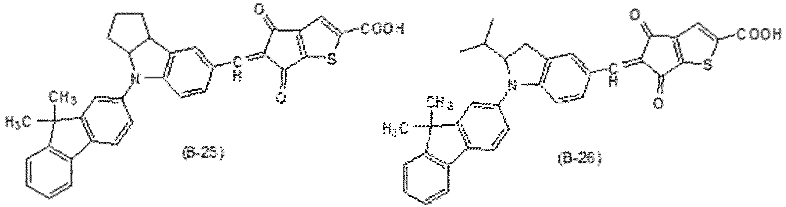

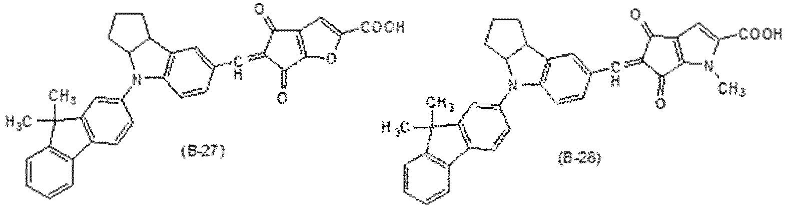

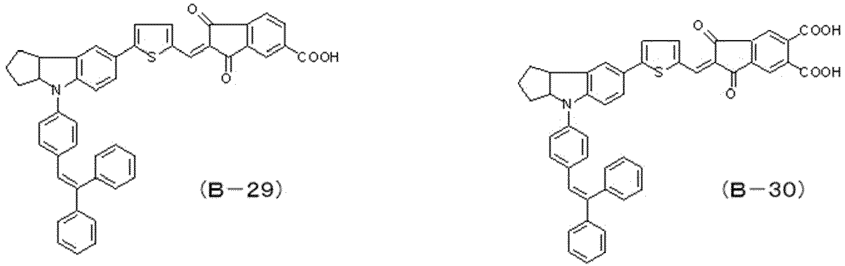

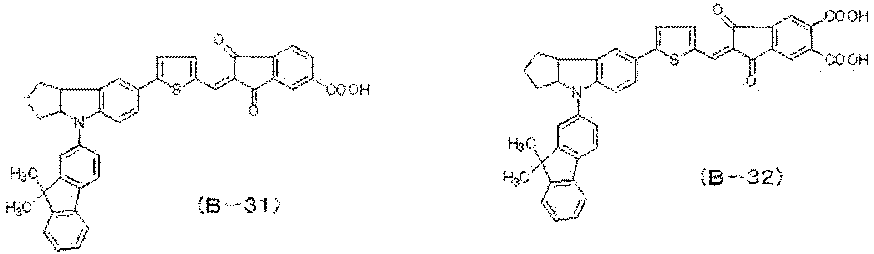

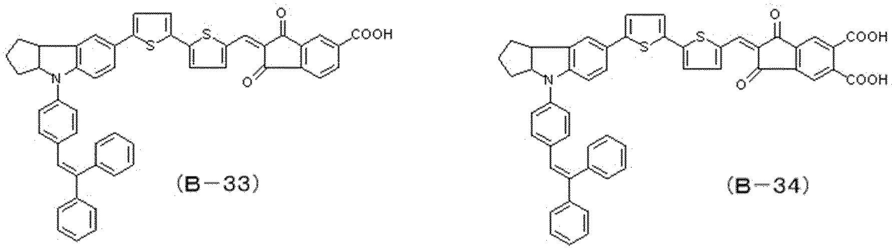

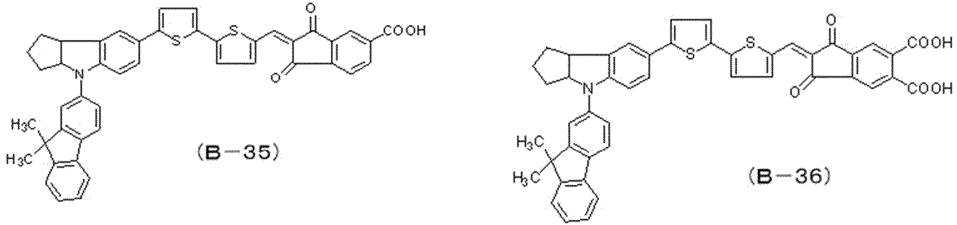

Moreover, examples of the photosensitization compound that is preferably used include a compound represented by General Formula (7).

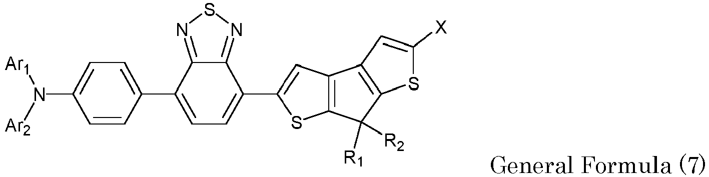

In General Formula (7), Ar₁ and Ar₂ are each an aryl group that may have a substituent; R₁ and R₂ are each a C4-C10 straight-chain or branched-chain alkyl group; and X is a substituent represented by any of the following structural formulae.

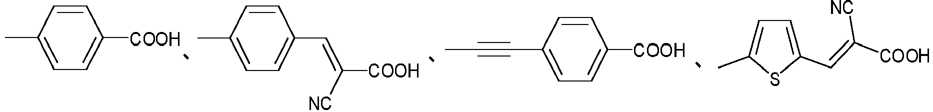

Among the photosensitization compound represented by General Formula (7), a compound represented by General Formula (7') is more preferably used.

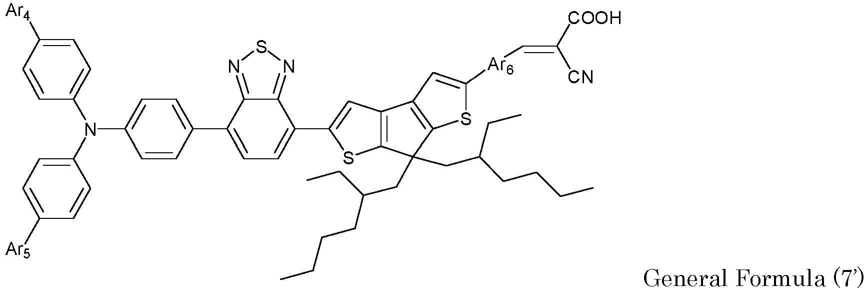

In General Formula (7), Ar₄ and Ar₅ are each a phenyl group that may have a substituent or a naphthyl group that may have a substituent; and Ar₆ are each a phenyl group that may have a substituent or a thiophene group that may have a substituent.

Specific exemplified compounds of the photosensitization compounds represented by General Formulae (7) and (7') will be listed below, but the photosensitization compound for use in the present disclosure is not limited to the following exemplified compounds.

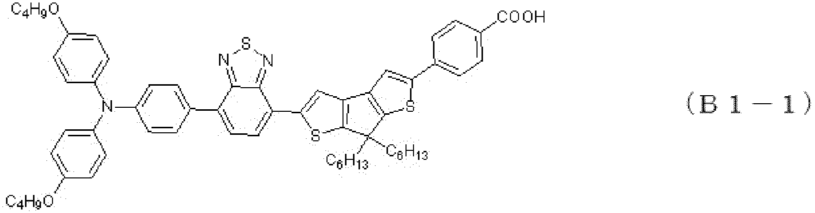

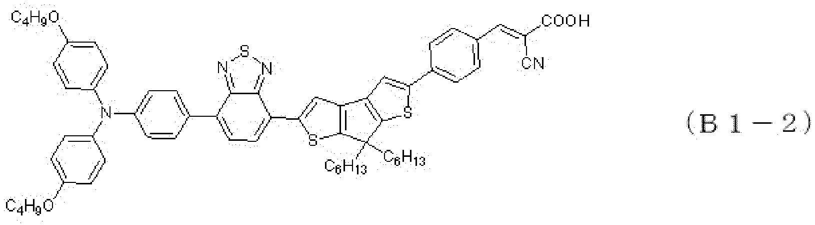

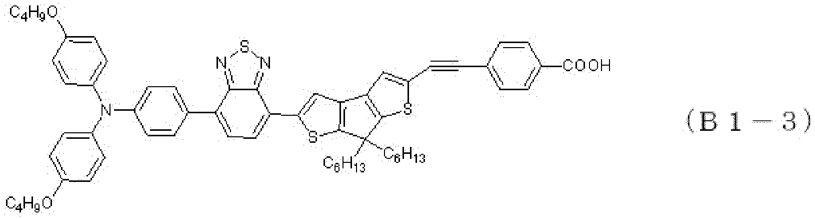

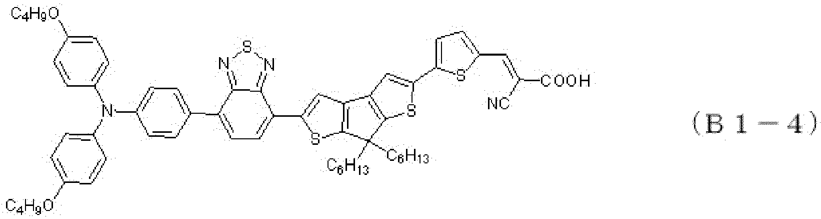

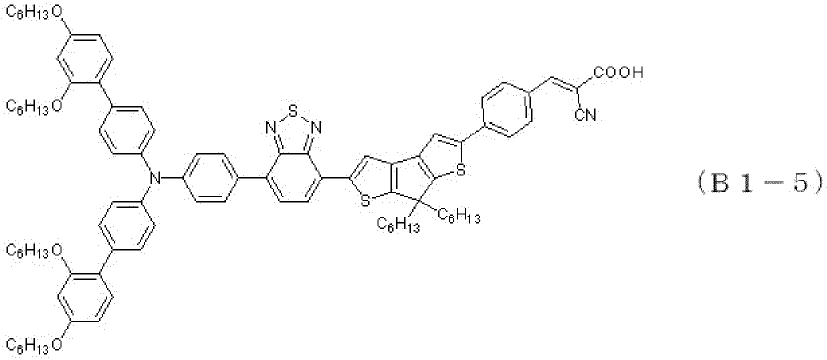

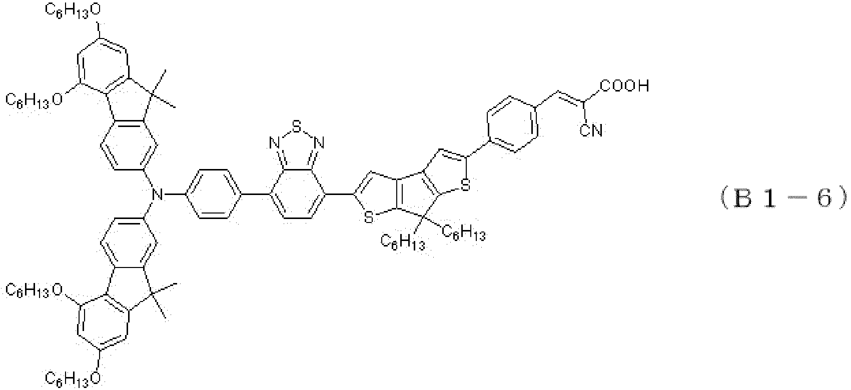

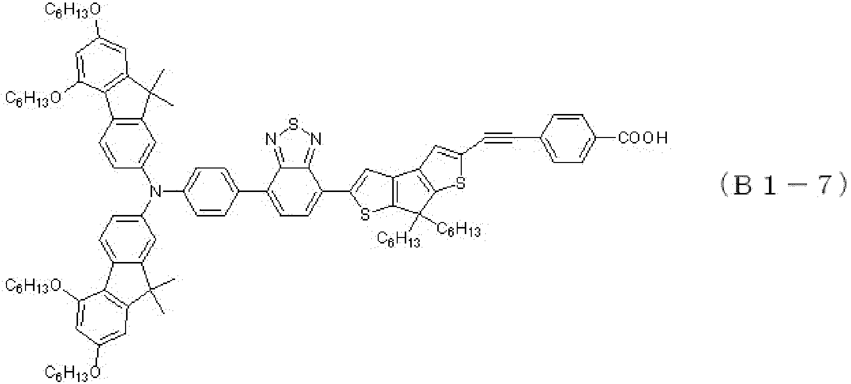

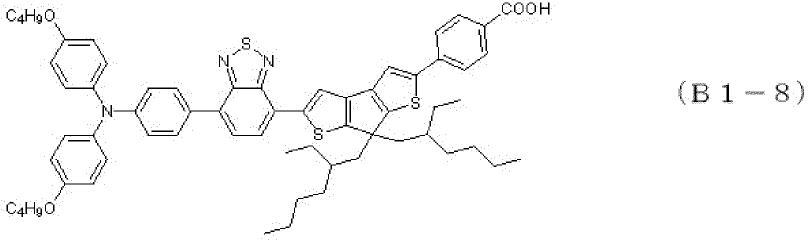

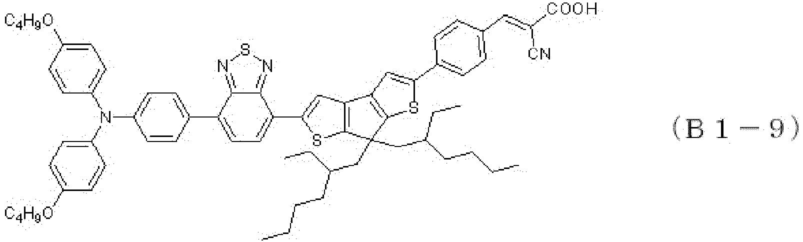

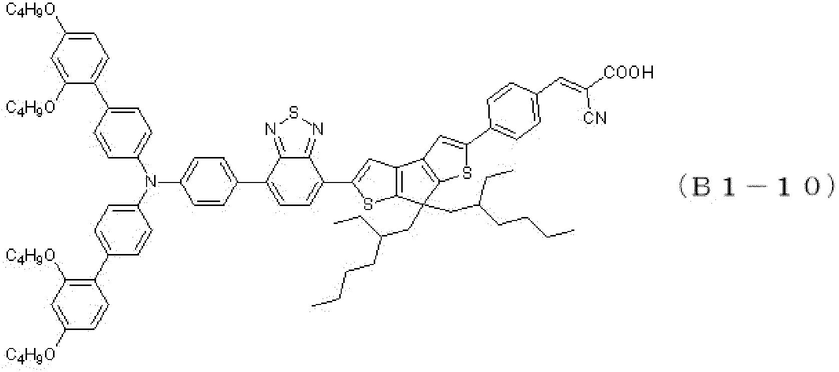

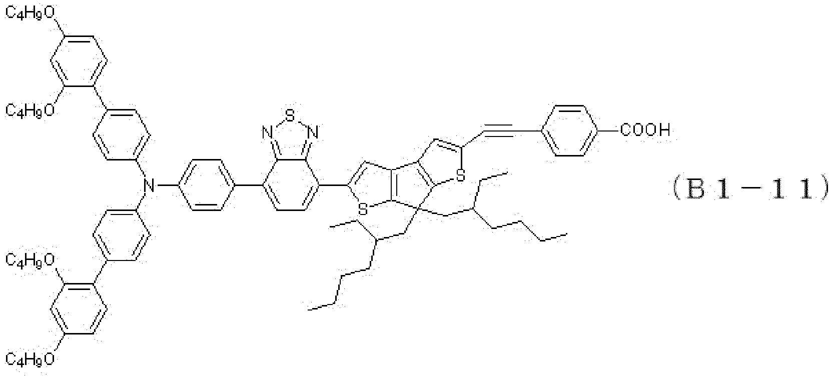

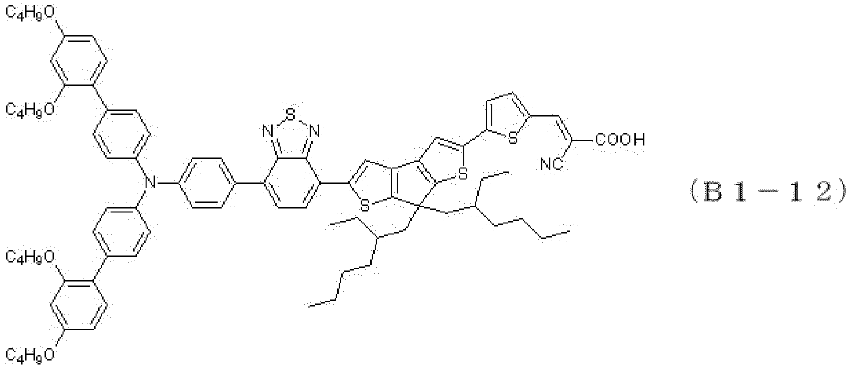

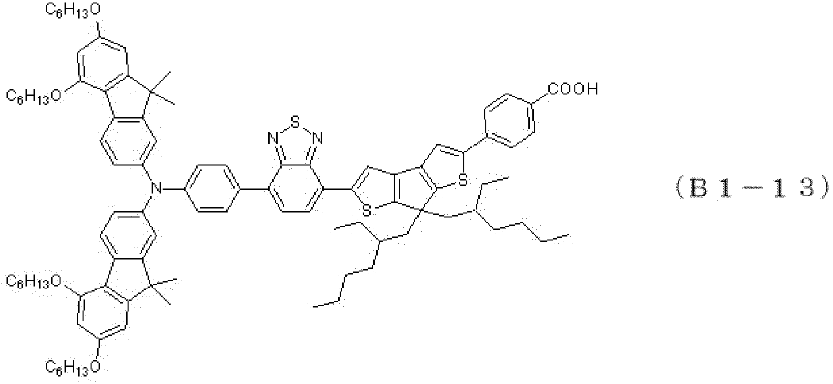

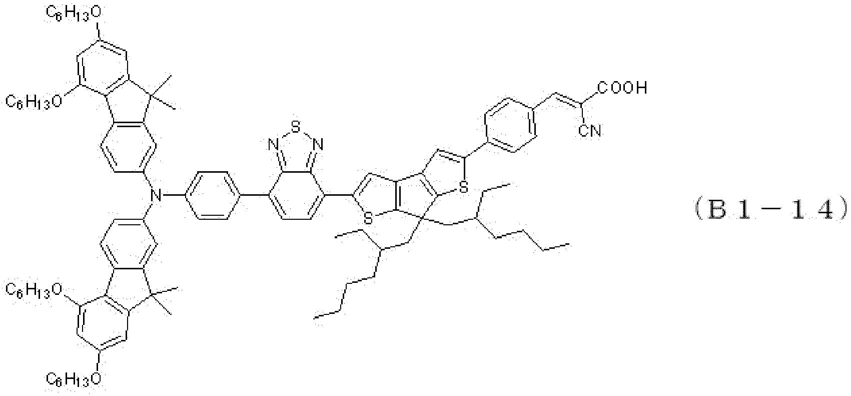

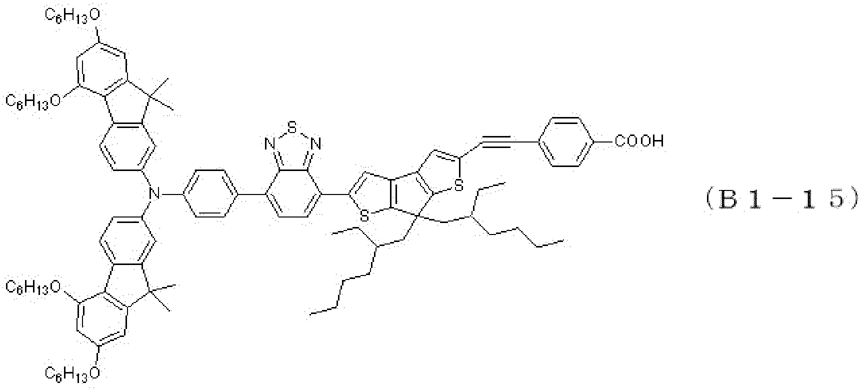

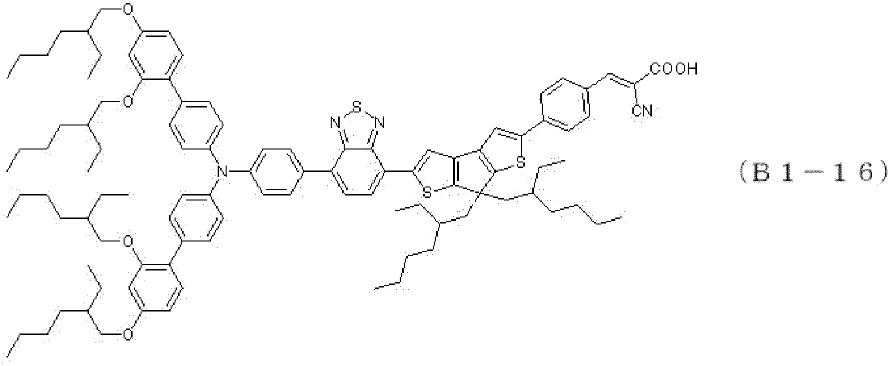

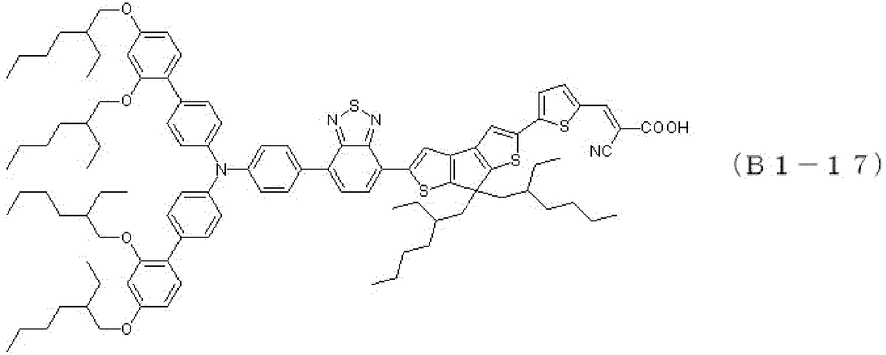

Among the above-listed photosensitization compounds, one of the photosensitization compounds may be used, or two or more of the photosensitization compounds may be used in combination. As a LED light source, light sources of different color tones, such as a warm color, a cold color, and a white color, are used, and spectra thereof are different depending on the color tones. For example, a light source having a color temperature of 3,000 K has a relatively strong tint in the region of 600 nm and emits reddish light. A light source having a color temperature of 5,000 K emits light of a day light white color that is balanced over all. A light source having a color temperature of greater than 6,500 K has a relatively strong tint in the region of 450 nm and emits light of a bluish day light color. Accordingly, it is preferred that high output be maintained even when the color temperature of LED for use varies. In this case, mixing different photosensitization compounds is effective because variation in output due to the color temperature may be reduced.

As a method for adsorbing the first photosensitization compound on the surface of the semiconductor material of the electron-transporting layer, usable methods are a method where the electron-transporting layer including the semiconductor material is immersed in a solution or dispersion liquid of the photosensitization compound, and a method where a solution or dispersion liquid of the photosensitization compound is applied onto the electron-transporting layer to allow the photosensitization compound to be adsorbed thereon. When the electron-transporting layer including the semiconductor material is immersed in a solution or dispersion liquid of the photosensitization compound, immersion, dipping, roller coating, or air knife coating may be used.

When the photosensitization compound is adsorbed on the electron-transporting layer by applying the solution or dispersion liquid of the photosensitization compound onto the electron-transporting layer, wire bar coating, slide hopper coating, extrusion coating, curtain coating, spin coating, or spray coating may be used. Moreover, adsorption may be performed in a supercritical fluid using carbon dioxide etc.

When the photosensitization compound is allowed to be adsorbed on the semiconductor material, a condensing agent may be used.

The condensing agent may be an agent exhibiting a catalytic action to physically or chemically bond the photosensitization compound to the surface of the semiconductor material, or an agent exhibiting a stoichiometric action to advantageously sift the chemical equilibrium.

Moreover, thiol or a hydroxyl compound may be further added as a condensation aid.

Examples of a solvent for dissolving or dispersing the photosensitization compound include water, an alcohol solvent, a ketone solvent, an ester solvent, an ether solvent, an amide solvent, a halogenated hydrocarbon solvent, and a hydrocarbon solvent.

Examples of the alcohol solvent include methanol, ethanol, and isopropyl alcohol.

Examples of the ketone solvent include acetone, methyl ethyl ketone, and methyl isobutyl ketone.

Examples of the ester solvent include ethyl formate, ethyl acetate, and n-butyl acetate.

Examples of the ether solvent include diethyl ether, dimethoxy ethane, tetrahydrofuran, dioxolane, and dioxane.

Examples of the amide solvent include N,N-dimethylformamide, N,N-dimethylacetamide, and N-methyl-2-pyrrolidone.

Examples of the halogenated hydrocarbon solvent include dichloromethane, chloroform, bromoform, methyl iodide, dichloroethane, trichloroethane, trichloroethylene, chlorobenzene, o-dichlorobenzene, fluorobenzene, bromobenzene, iodobenzene, and 1-chloronaphthalene.

Examples of the hydrocarbon solvent include n-pentane, n-hexane, n-octane, 1,5-hexadiene, cyclohexane, methylcyclohexane, cyclohexadiene, benzene, toluene, o-xylene, m-xylene, p-xylene, ethylbenzene, and cumene.

The above-listed examples may be used alone or in combination.

The photosensitization compound may function more effectively when aggregation between the particles of the photosensitization compound is prevented, although it depends on a type of the photosensitization compound for use. Therefore, an aggregation dissociating agent may be used in combination.

Examples of the aggregation dissociating agent include steroid compounds (e.g., cholic acid and chenodexycholic acid), long-chain alkyl carboxylic acid, and long-chain alkyl phosphonic acid.

An amount of the aggregation dissociating agent is preferably 0.5 parts by mole or greater but 100 parts by mole or less, and more preferably 10 parts by mole or greater but 50 parts by mole or less, relative to 1 part by mole of the photosensitization compound.

A temperature at which the photosensitization compound or a combination of the photosensitization compound and the aggregation dissociating agent are adsorbed on the surface of the semiconductor material constituting the electron-transporting layer is preferably -50°C or higher but 200°C or lower.

The adsorption time is preferably 5 seconds or longer but 1,000 hours or shorter, more preferably 10 seconds or longer but 500 hours or shorter, and even more preferably 1 minute or longer but 150 hours or shorter. The adsorption is preferably performed in the dark.

Moreover, the adsorption may be performed with standing still, or with stirring.

A method for the stirring is not particularly limited, and may be appropriately selected depending on the intended purpose. Examples thereof include methods using a stirrer, a ball mill, a paint conditioner, sand mill, Attritor, a disperser, or ultrasonic dispersion.

Moreover, the photoelectric conversion element of the present disclosure may include a perovskite layer. Use of the perovskite layer in the photoelectric conversion element is effective. The perovskite layer is a layer that includes a perovskite compound and is configured to absorb light to sensitize the electron-transporting layer. Therefore, the perovskite layer is preferably disposed next to the electron-transporting layer.

The perovskite compound is a composite material of an organic compound and an inorganic compound, and is represented by General Formula (X) below.

XαYβMγ General Formula (X)

In General Formula (X), the ratio α:B:γ is 3:1:1, and β and γ are each an integer greater than 1. For example, X may be a halogen ion, Y may be an alkylamine compound ion, and M may be a metal ion.

X in General Formula (X) is not particularly limited, and may be appropriately selected depending on the intended purpose. Examples thereof include halogen ions, such as a chloride ion, a bromine ion, and an iodine ion. The above-listed examples may be used alone or in combination.

Examples of Y in General Formula (X) include alkylamine compound ions (e.g., a methylamine ion, an ethylamine ion, an n-butylamine ion, and a formamidine ion), a cesium, potassium, and rubidium. In case of a perovskite compound of halogenated lead-methyl ammonium, moreover, the peak λmax of the light absorption spectrum is about 350 nm when the halogen ion is Cl, the peak λmax of the light absorption spectrum is about 410 nm when the halogen ion is Br, and the peak λmax of the light absorption spectrum is about 540 nm when the halogen ion is I. Since the peak λmax of the light absorption spectrum sequentially sifts to the longer wavelength side as described, the usable spectrum width (band width) varies.

M in General Formula (X) is not particularly limited, and may be appropriately selected depending on the intended purpose. Examples thereof include metals, such as lead, indium, antimony, tin, copper, and bismuth.

Moreover, the perovskite layer preferably has a layered perovskite structure where layers each formed of halogenated metal and layers each formed by aligning organic cation molecules are alternately laminated.

A method for forming the perovskite layer is not particularly limited, and may be appropriately selected depending on the intended purpose. Examples thereof include a method where halogenated metal or halogenated alkyl amine is dissolved or dispersed to prepare a solution, the solution is applied, and the applied solution is dried.

Moreover, examples of a method for forming the perovskite layer include a two-step precipitation method where a solution obtained by dissolving or dispersing halogenated metal is applied, and dried, and the resultant is immersed in a solution obtained by dissolving halogenated alkyl amine to form a perovskite compound.

Furthermore, examples of the method for forming the perovskite layer include a method where a solution obtained by dissolving or dispersing halogenated metal and halogenated alkyl amine is applied with adding a poor solvent of the perovskite compound (a solvent having low dissolving power against to the perovskite compound), to precipitate crystals. In addition, examples of the method for forming the perovskite layer include a method where halogenated metal is deposited through vapor deposition in an atmosphere filled with gas including methyl amine.

Among the above-listed examples, preferable is the method where a solution obtained by dissolving or dispersing halogenated metal and halogenated alkyl amine with adding a poor solvent of the perovskite compound to precipitate crystals.

A method for applying the solution is not particularly limited, and may be appropriately selected depending on the intended purpose. Examples thereof include immersion, spin coating, spray coating, dip coating, roller coating, and air knife coating. Moreover, the method for applying the solution may be a method where precipitation is performed in a supercritical fluid using carbon dioxide etc.

Moreover, the perovskite layer may include a photosensitization compound. The sensitization dye served as the photosensitization compound is not particularly limited, as long as the sensitization dye is a compound that is photoexcited by excitation light for use, and may be appropriately selected depending on the intended purpose. Examples thereof include the above-listed photosensitization compounds.

A method for forming the perovskite layer including the sensitization dye is not particularly limited, and may be appropriately selected depending on the intended purpose. Examples thereof include a method where the perovskite compound and the photosensitization compound are mixed, and a method where the photosensitization compound is adsorbed after forming the perovskite layer.

### <<Hole-transporting layer>>

The hole-transporting layer is a layer capable of transporting holes (positive holes).

An embodiment of the hole-transporting layer is not particularly limited as long as the hole-transporting layer is capable of transporting holes, and may be appropriately selected depending on the intended purpose. Examples thereof include an electrolytic solution in which a redox couple is dissolved in an organic solvent, a gel electrolyte where a polymer matrix is impregnated with a liquid obtained by dissolving a redox couple in an organic solvent, a molten salt including a redox couple, a solid electrolyte, an inorganic hole-transporting material, and an organic hole-transporting material. Among the above-listed examples, a solid electrolyte is preferable, and an organic hole-transporting material is more preferable. The above-listed examples may be used alone or in combination.

The hole-transporting layer includes a pyridine compound, and preferably includes a p-type semiconductor material, and alkali salt.

### -Pyridine compound-

The pyridine compound is a compound having a pyridine ring structure.

The pyridine ring is a structure represented by Structural Formula (4) below. The compound having a pyridine ring structure is a compound including at least one pyridine ring.

It is assumed that the basic compound, such as the pyridine compound, is present near an interface of the electron-transporting layer and prevents reverse electron transfer of electrons from the electron-transporting layer (i.e., electron transfer from the electron-transporting layer to the hole-transporting layer).

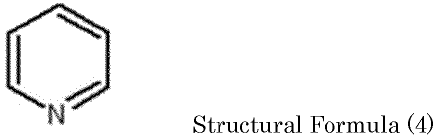

Since the hole-transporting layer includes the pyridine compound, the open circuit voltage is increased, and as a result, an effect of increasing output can be obtained.

Among the above-mentioned pyridine compounds, a compound represented by General Formula (1) below is more preferable.

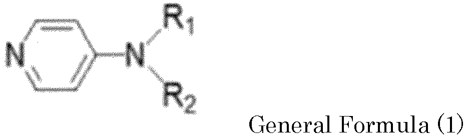

In General Formula (1), R₁ and R₂ are each a hydrogen atom, an alkyl group, a benzyl group that may have a substituent, or an aryl group that may have a substituent, where R₁ and R₂ may be identical or different, and may be bonded together to form a substituted or unsubstituted nitrogen-containing heterocyclic group.

Examples of the aryl group include a phenyl group, a naphthyl group, and a biphenyl group.

Examples of the substituent include an alkyl group, and an alkoxy group.

The tertiary amine pyridine compound is a pyridine compound where R₁ and R₂ are substituted with at least one of an alkyl group, a benzyl group, and an aryl group. The secondary amine pyridine compound is a pyridine compound where one of R₁ and R₂ is a hydrogen atom, and the other is a substituent that is at least one selected from an alkyl group, a benzyl group, and an aryl group.

Among the above-mentioned pyridine compounds, a pyridine compound where either or both R₁ and R₂ are benzyl groups is more preferable.

Examples of the tertiary amine pyridine compound include, but are not limited to, exemplary compounds (C-1) to (C-20) below. The below-listed examples may be used alone or in combination.

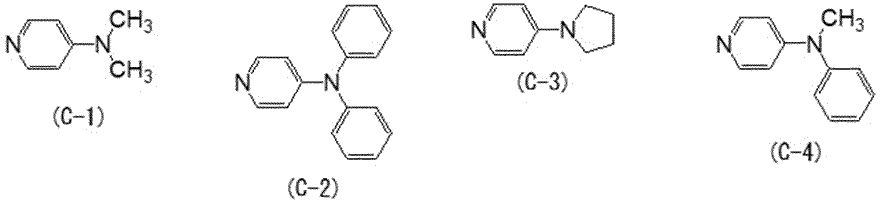

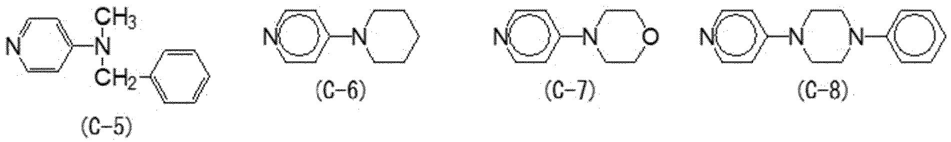

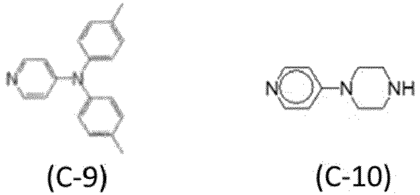

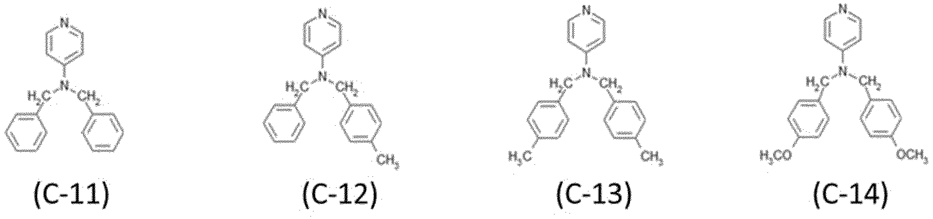

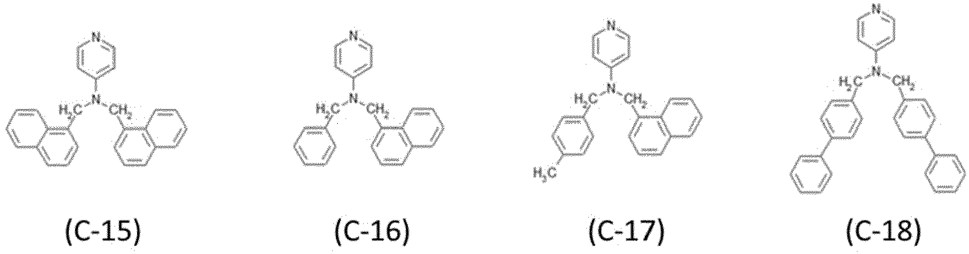

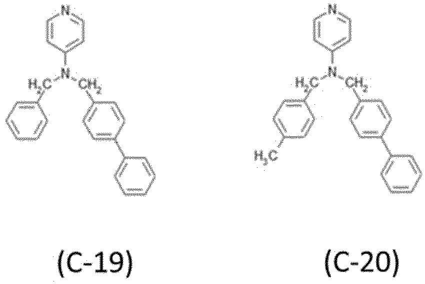

Examples of the secondary amine pyridine compound include, but are not limited to exemplary compounds (C-21) to (C-27) below. The below-listed examples may be used alone or in combination.

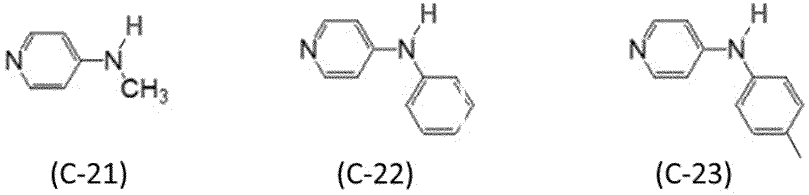

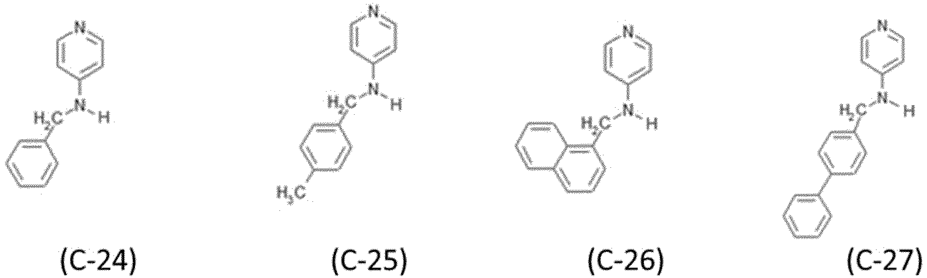

Since the hole-transporting layer includes the tertiary amine pyridine compound, not only output of the photoelectric conversion element is increased, but also durability and stability thereof can be enhanced. Therefore, the hole-transporting layer including the tertiary amine pyridine compound is effective for improvement in durability and stability of the output of the photoelectric conversion element, particularly with light of low illuminance.

Since the hole-transporting layer includes the tertiary amine pyridine compound and the secondary amine pyridine compound, moreover, variation in output of the photoelectric conversion element over time can be reduced, particularly, temporal reduction of output after the start of power generation can be suppressed, and therefore stability of the output can be improved.

An amount (a total amount) of the tertiary amine pyridine compound and the secondary amine pyridine compound relative to an amount of the below-mentioned hole-transporting material is preferably 20% by mole or greater but 65% by mole or less, and more preferably 35% by mole or greater but 50% by mole or less. When the amount (the total amount) of the tertiary amine pyridine compound and the secondary amine pyridine compound is within the above-mentioned preferable range, high open circuit voltage can be maintained, high output can be obtained, and high stability and durability can be achieved even when the photoelectric conversion element is used over a long period in various environments.

Moreover, an amount of the secondary amine pyridine compound relative to a total amount of the pyridine compounds is preferably 20% by mass or less, and more preferably 15% by mass or less.

The lower limit of the amount of the secondary amine pyridine compound is preferably 1% by mass or greater, and more preferably 5% by mass or greater. When the amount of the secondary amine pyridine compound is within the above-mentioned preferable range, the secondary amine pyridine compound does not adversely affect durability, reduction in output, which can be temporarily observed after the start of power generation, can be prevented, and stability of the output can be improved.

Moreover, the tertiary amine pyridine compound and the secondary amine pyridine compound in the photoelectric conversion element or the photoelectric conversion module can be determined by any of analysis methods known in the art. Examples of the analysis methods include nuclear magnetic resonance spectroscopy (NMR), Fourier transform infrared spectroscopy (FT-IR), Raman spectroscopy (Raman), high performance liquid chromatography (HPLC), gas chromatography (GC), and mass spectrometry (MS). Moreover, the pyridine compounds can be determined by a combination of any of the above-listed methods.

### -P-type semiconductor material-

The hole-transporting layer includes a p-type semiconductor material for imparting hole transporting capabilities.

The ionization potential of the hole-transporting layer is greater than the ionization potential of the p-type semiconductor material, but less than 1.07 times the ionization potential of the p-type semiconductor material. When the ionization potential of the hole-transporting layer is greater than the ionization potential of the p-type semiconductor material but less than 1.07 times the ionization potential of the p-type semiconductor material, both high photoelectric conversion properties and stability over time can be achieved with light of low illuminance.

The p-type semiconductor material is not particularly limited and may be appropriately selected depending on the intended purpose. Examples of the p-type semiconductor material include an inorganic p-type semiconductor material, and an organic p-type semiconductor material.

The inorganic p-type semiconductor material is not particularly limited and may be appropriately selected depending on the intended purpose. Examples of the inorganic p-type semiconductor material include CuSCN, CuI, CuBr, NiO, V₂O₅, and graphene oxide.

Among the above-listed examples, an organic p-type semiconductor material is preferable.

The organic p-type semiconductor material is not particularly limited, and may be appropriately selected depending on the intended purpose. For example, any of organic p-type semiconductor materials known in the art can be used.

Examples of the organic p-type semiconductor materials known in the art include an oxadiazole compound, a triphenylmethane compound, a pyrazoline compound, a hydrazine compound, an oxadiazole compound, a tetraarylbenzidine compound, a stilbene compound, and a spiro compound. The above-listed examples may be used alone or in combination. Among the above-listed examples, a spiro compound is preferable.

The spiro compound is preferably a compound represented by General Formula (20) below.

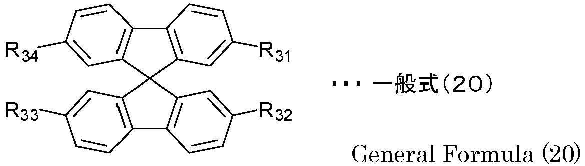

In General Formula (20), R₃₁ to R₃₄ are each independently a substituted amino group, such as a dimethylamino group, a diphenylamino group, and a naphthyl-4-tolylamino group.

Specific examples of the spiro compound include, but not limited to, (D-1) to (D-22) below.

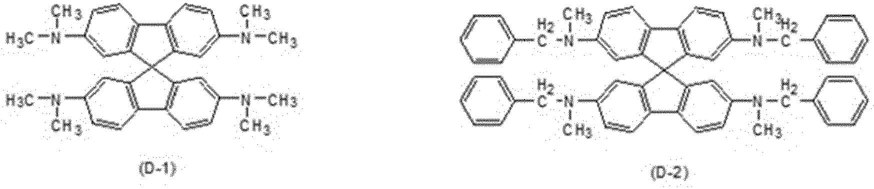

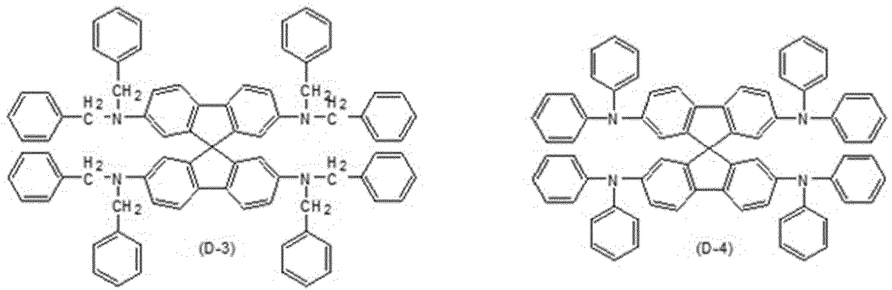

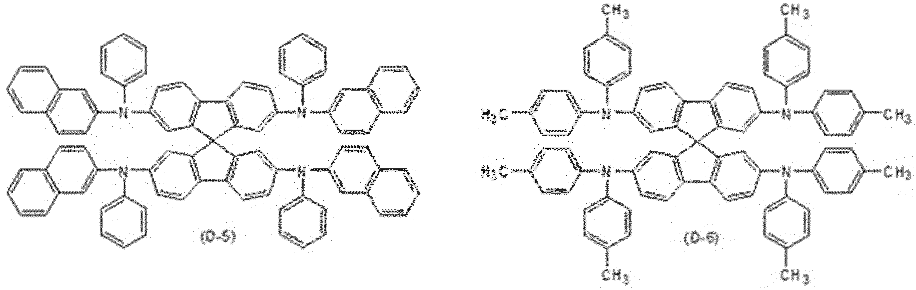

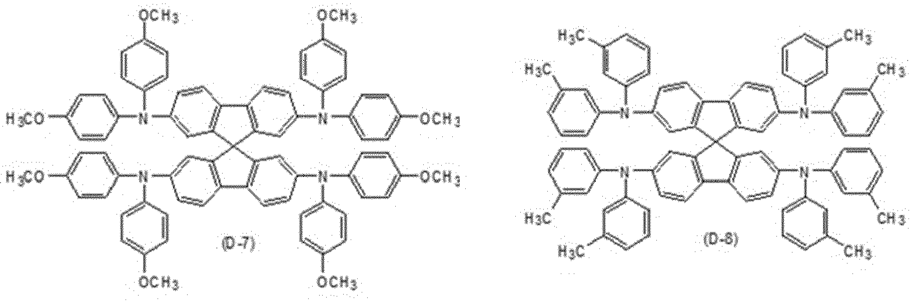

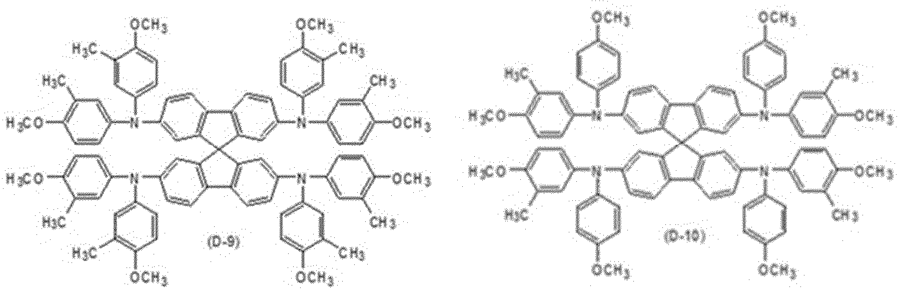

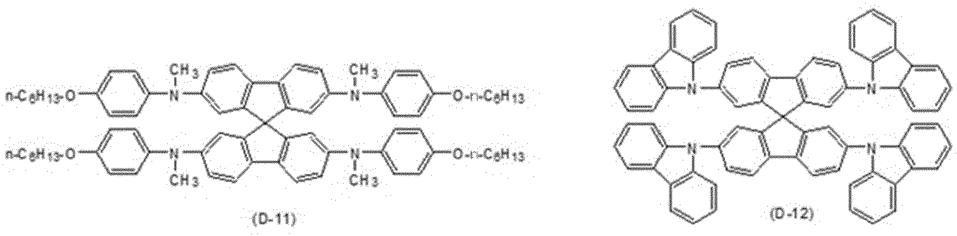

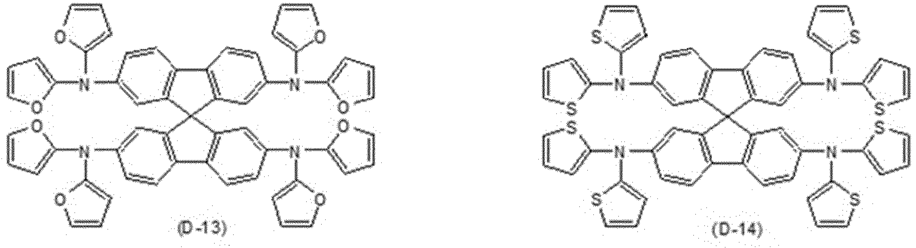

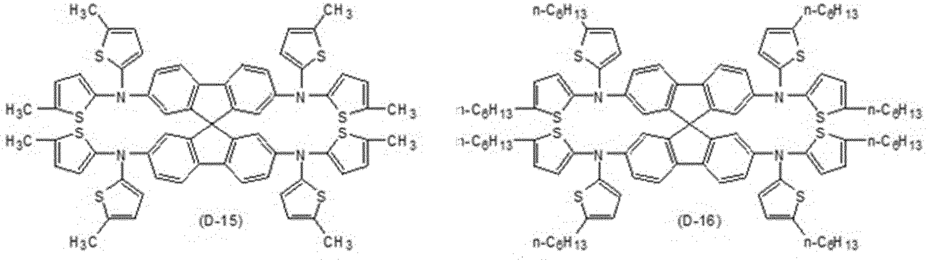

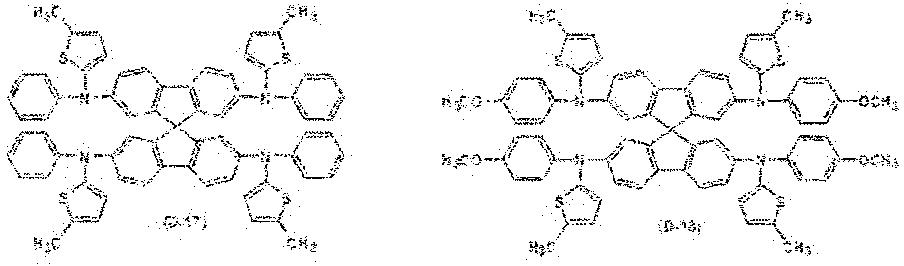

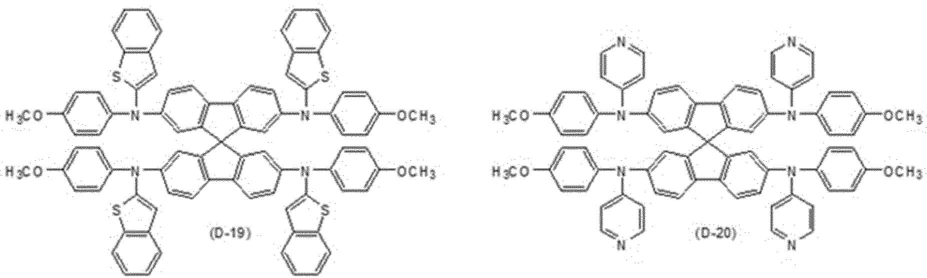

As the spiro compound that is the hole-transporting material, moreover, a compound represented by General Formula (4) below is particularly preferably used.

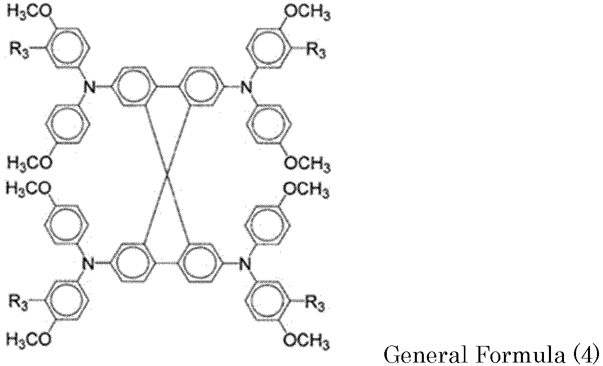

In General Formula (4), R₃ is a hydrogen atom or an alkyl group.

Among (D-1) to (D-20), for example, the compound represented by General Formula (4) is (D-7) or (D-10).

Since the above-listed spiro compounds have high hole mobility and have two benzidine skeleton molecules spirally bonded together, a nearly spherical electron cloud is formed, and excellent photoelectric conversion properties are exhibited due to excellent hopping conductivity between molecules. Moreover, the spiro compound is dissolved in various organic solvents because of high solubility. Since the spiro compounds are amorphous (amorphous substances that do not have a crystal structure), the spiro compounds tend to be densely filled in the porous electron-transporting layer. Furthermore, the spiro compounds do not absorb light of 450 nm or longer, and therefore light is effectively absorbed by the photosensitization compound, which is particularly preferable for a solid dye-sensitized solar battery cell.

### -Alkali metal salt-

When the hole-transporting layer includes an alkali metal salt, output can be improved, and light irradiation resistance or high temperature storage stability can be improved.

Specific examples of the alkali metal salt include, but are not limited to, compounds represented by (J-1) to (J-86), and a compound represented by General Formula (2) below.

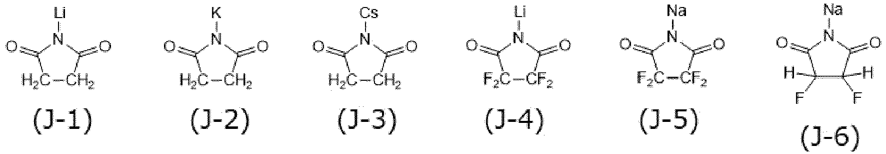

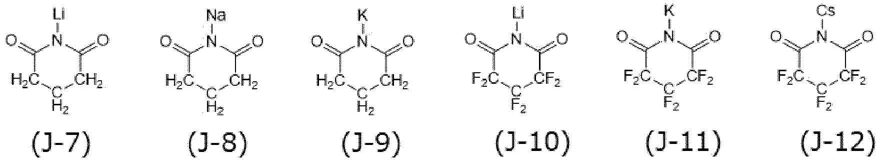

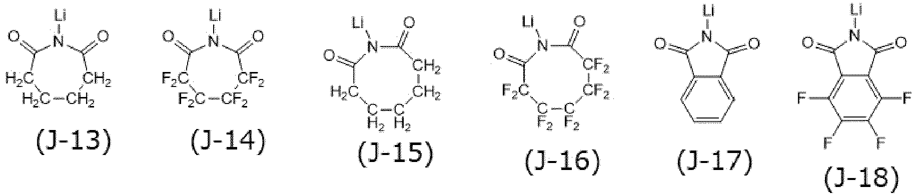

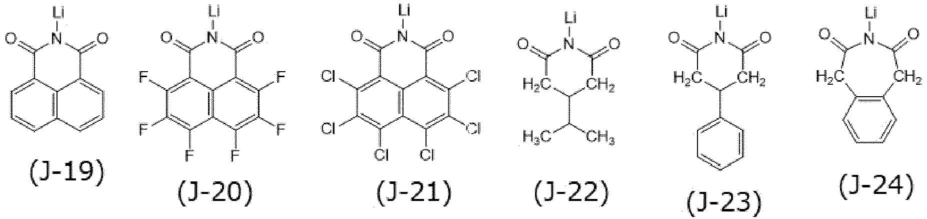

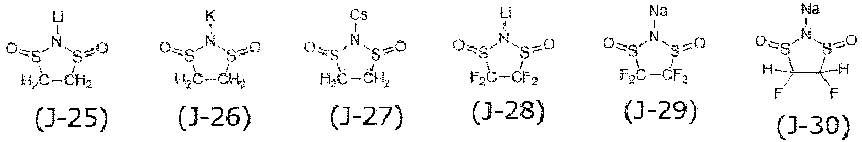

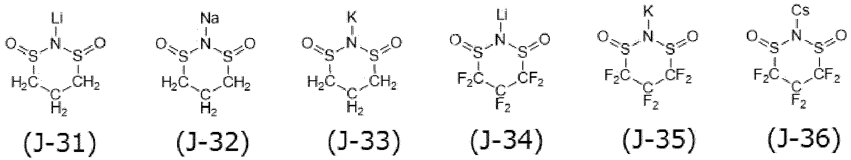

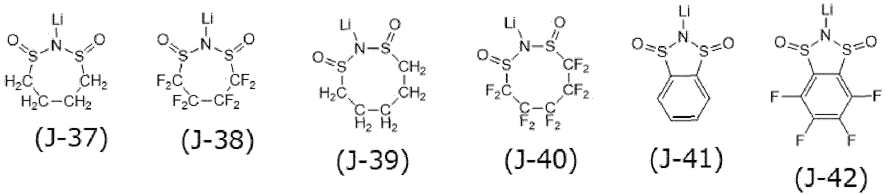

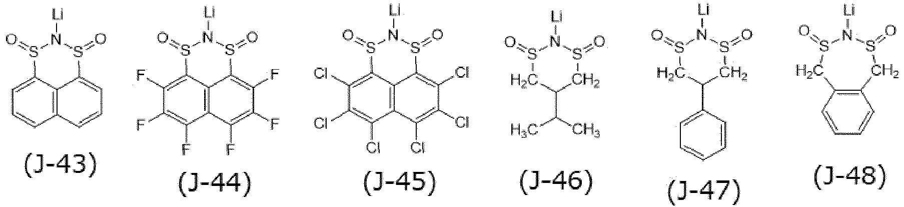

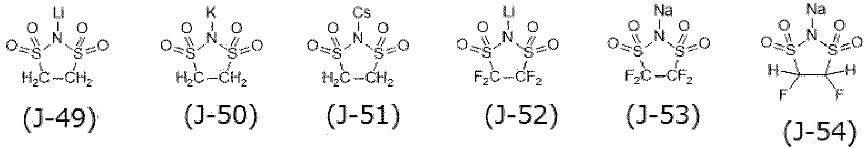

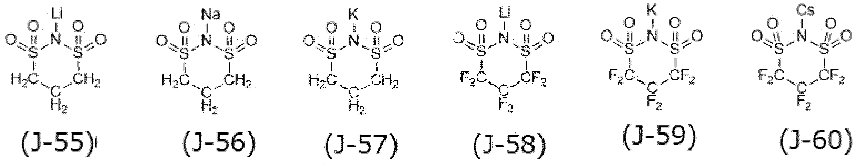

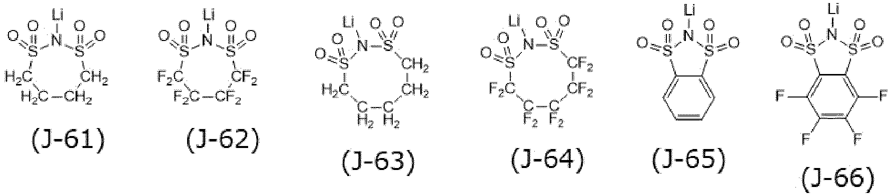

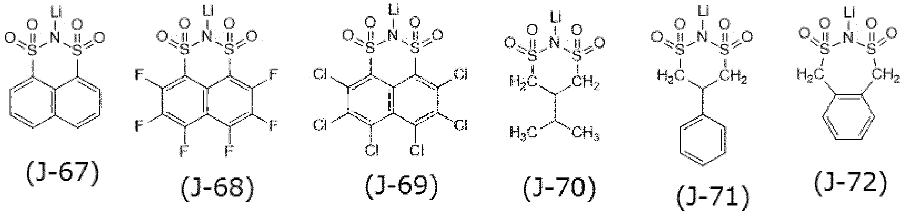

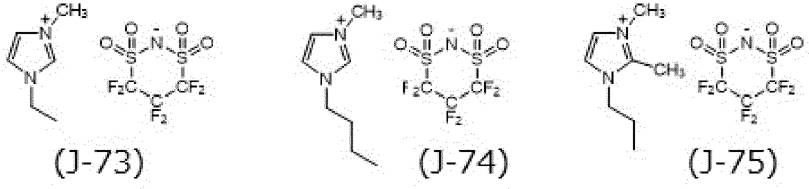

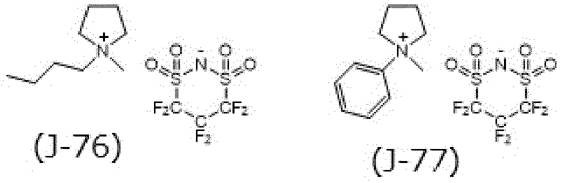

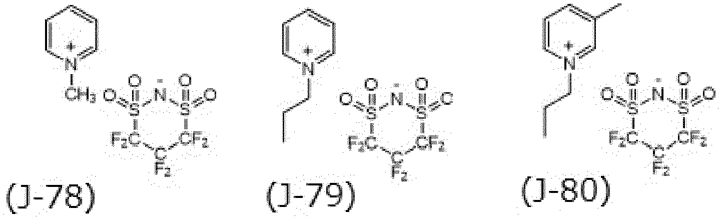

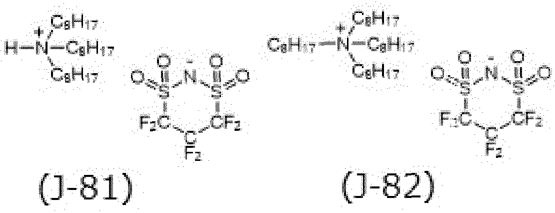

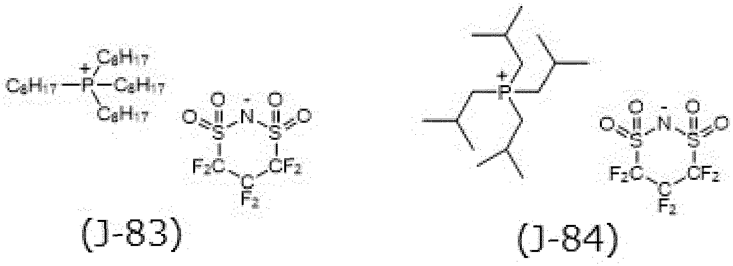

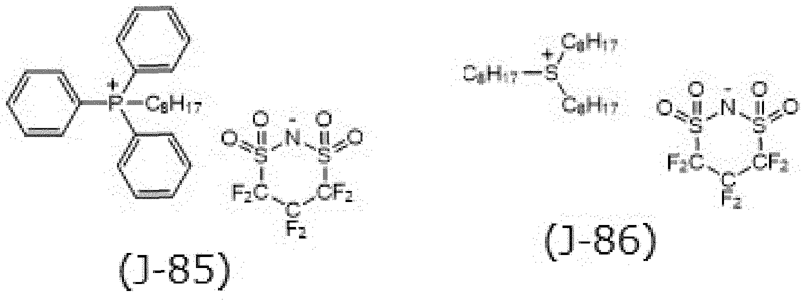

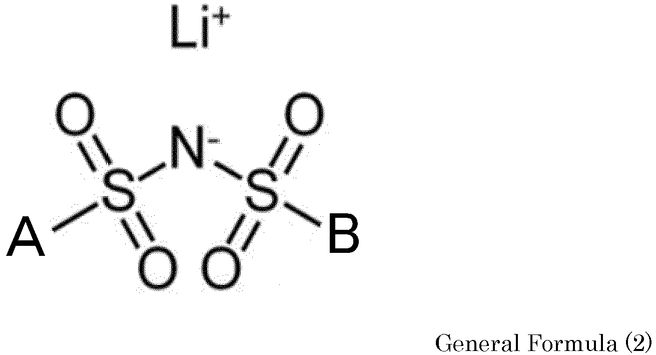

In General Formula (2), A and B are each a substituent that is F, CF₃, C₂F₅, C₃F₇, or C₄F₉, and the substituent of A and the substituent of B may be identical or different.

Examples of lithium salt represented by General Formula (2) include lithium bis(trifluoromethanesulfonyl)imide (Li-TFSI), lithium (fluorosulfonyl)(trifluoromethanesulfonyl)imide (Li-FTFSI), lithium (fluorosulfonyl)(pentafluoroethanesulfonyl)imide (Li-FPFSI), lithium (fluorosulfonyl)(nonafluorobutanesulfonyl)imide (Li-FNFSI), lithium (nonafluorobutanesulfonyl)(trifluoromethanesulfonyl)imide (Li-NFTFSI), and lithium (pentafluoroethanesulfonyl)(trifluoromethanesulfonyl)imide (Li-PFTFSI). Among the above-listed examples, lithium bis(trifluoromethanesulfonyl)imide (Li-TFSI), and lithium (fluorosulfonyl)(trifluoromethylsulfonyl)imide (Li-FTFSI) are particularly preferable.

Specific examples of a structural formula of the lithium salt represented by General Formula (2) are as follows.

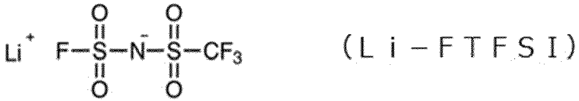

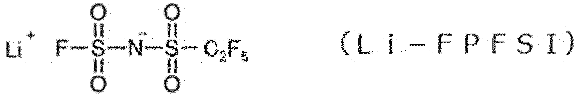

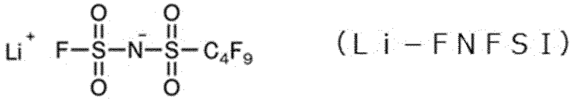

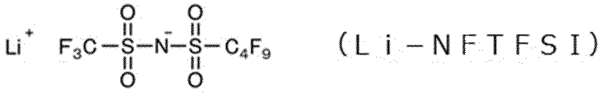

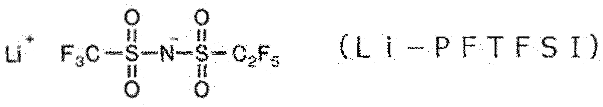

The lithium salt represented by General Formula (2) is involved in transfer of charge, and excellent photoelectric conversion properties can be achieved by adding the lithium salt.

When the hole-transporting layer forming coating liquid including the lithium salt represented by General Formula (2) is applied, for example, the lithium salt in the formed film is not necessarily in the form of a salt where an anion and a cation are bonded, and may be in the state where the lithium cation and the anion are separated.

Specifically, the present inventors have found that the lithium cations migrate into the electron-transporting layer, when the hole-transporting layer is formed with the hole-transporting layer forming coating liquid including the lithium salt represented by General Formula (2), and the amount of the lithium cations included in the electron-transporting layer is greater than the amount of the lithium cations included in the hole-transporting layer. The present inventors have also found that, although part of the anions migrates, the amount of the anions included in the hole-transporting layer is greater than the amount of the anions included in the electron-transporting layer.

In the present disclosure, it is preferred that the cation and anion of the lithium salt represented by General Formula (2) be separated, and the cation and anion form the mutually different distribution states. Since the cation and anion of the lithium salt are included inside the photoelectric conversion layer, a resultant photoelectric conversion element achieves high output with light of low illuminance in various temperature environments, and an excellent output retention effect thereof can be further improved.

An embodiment of the hole-transporting layer is not particularly limited as long as the hole-transporting layer has a function of transporting holes, and may be appropriately selected depending on the intended purpose. Examples thereof include an electrolytic solution in which a redox couple is dissolved in an organic solvent, a gel electrolyte where a polymer matrix is impregnated with a liquid obtained by dissolving a redox couple in an organic solvent, a molten salt including a redox couple, a solid electrolyte, an inorganic hole-transporting material, and an organic hole-transporting material. Among the above-listed examples, a solid electrolyte is preferable, and an organic hole-transporting material is more preferable. The above-listed examples may be used alone or in combination.

In addition to the above-described lithium salt, the hole-transporting layer of the photoelectric conversion layer may further include another lithium salt. For example, such lithium salt may be a lithium salt having a symmetric anion species. Examples thereof include lithium bis(fluorosulfonyl)imide (Li-FSI), lithium bis(pentafluoroethanesulfonyl)imide (Li-BETI), and lithium bis(nonafluorobutanesulfonyl)imide. Moreover, examples thereof also include cyclic imide, such as lithium (cyclohexafluoropropane)(disulfone)imide.

However, the above-listed lithium salts have low solubility due to symmetric anions, and a large amount thereof cannot be added. Evan when any of the above-listed lithium salts is added, therefore, a small amount thereof is preferably added.

An amount of the lithium salt represented by General Formula (2) relative to the hole-transporting material is preferably 5 mol% or greater but 50 mol% or less, and more preferably 20 mol% or greater but 35 mol% or less. When the amount of the lithium salt is within the above-mentioned range, high output is achieved with light of low illuminance, the output retention rate is improved, and high durability is achieved at the same time.

It is assumed that the cation of the lithium salt represented by General Formula (2) is present near the interface of the electron-transporting layer and the hole-transporting layer is doped with the anion of the lithium salt represented by General Formula (2).

An amount of the alkali metal salt relative to a total amount of the hole-transporting material is preferably 30% by mole or greater but 80% by mole or less, and more preferably 50% by mole or greater but 70% by mole or less.

Moreover, lithium cations of the lithium salt represented by General Formula (2) may be migrated into the electron-transporting layer. For example, a half or more of the lithium cations may be included in the below-described electron-transporting layer.

The hole-transporting layer of the present disclosure is more preferably penetrated into the below-described electron-transporting layer because output can be further improved. In this case, the part of the hole-transporting layer penetrated into the electron-transporting layer is also regarded as the hole-transporting layer.

### -Oxidant-

The hole-transporting layer preferably includes an oxidant.

Since the hole-transporting layer includes the oxidant, part of the organic hole-transporting material becomes a radical cation, and therefore conductivity is improved to enhance durability and stability of output characteristics.

Since the organic hole-transporting material is oxidized by the oxidant, the organic hole-transporting material exhibits excellent hole conductivity, and release (reduction) of the oxidized state due to an influence of the surrounding environment of the photoelectric conversion layer can be prevented. Therefore, excellent stability over time is obtained.

The oxidant is not particularly limited and may be appropriately selected depending on the intended purpose. Examples of the oxidant include tris(4-bromophenyl)aluminium hexachloroantimonate, silver hexafluoroantimonate, nitrosonium tetrafluoroborate, silver nitrate, a metal complex, and a hypervalent iodine compound. The above-listed examples may be used alone or in combination. Among the above-listed examples, a metal complex and a hypervalent iodine compound are preferable. Use of a metal complex or hypervalent iodine compound as the oxidant is advantageous because a large amount thereof can be added owing to high solubility thereof to an organic solvent.

### --Metal complex--

For example, the metal complex is formed of a metal cation, a ligand, and an anion.

The metal cation is not particularly limited and may be appropriately selected depending on the intended purpose. Examples thereof include cations of chromium, manganese, zinc, iron, cobalt, nickel, copper, molybdenum, ruthenium, rhodium, palladium, silver, tungsten, rhenium, osmium, iridium, vanadium, gold, platinum, etc. Among the above-listed examples, cations of manganese, zinc, iron, cobalt, nickel, copper, ruthenium, silver, and vanadium are preferable, and a cobalt complex is more preferable.

The ligand preferably includes a 5-membered heterocycle and/or a 6-membered heterocycle including at least one nitrogen, and may include a substituent. Specific examples thereof include, but are not limited to, the following compounds.

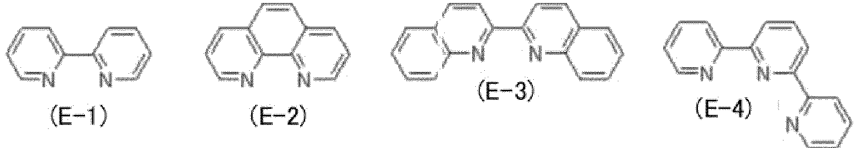

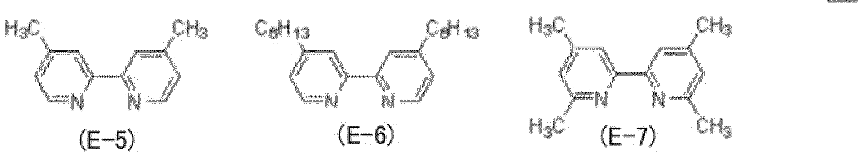

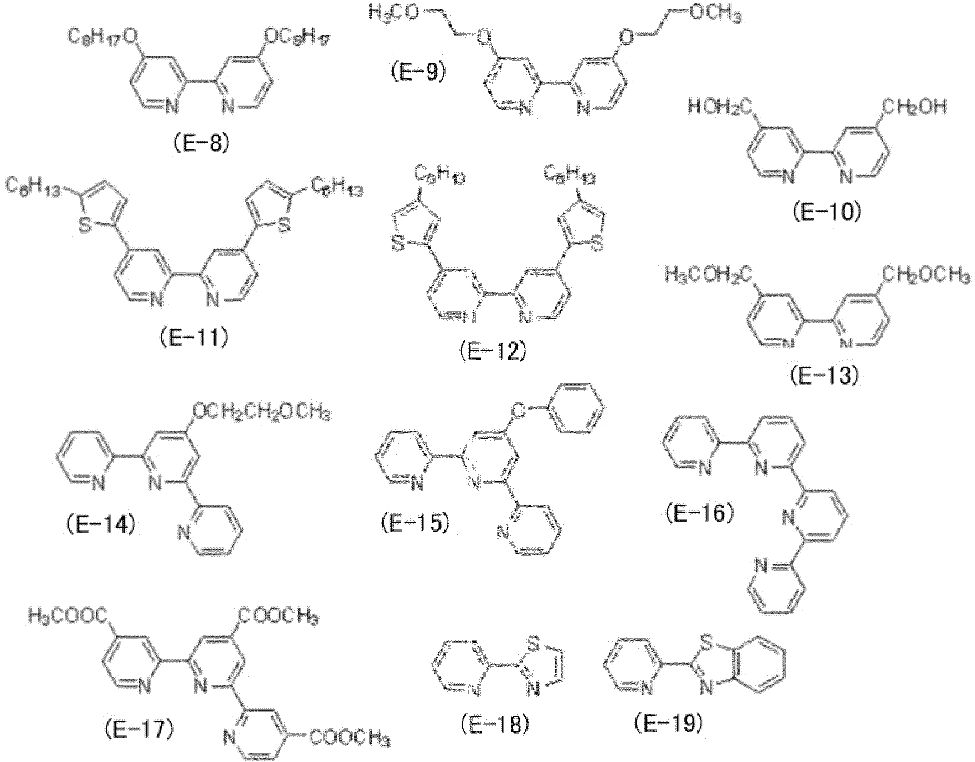

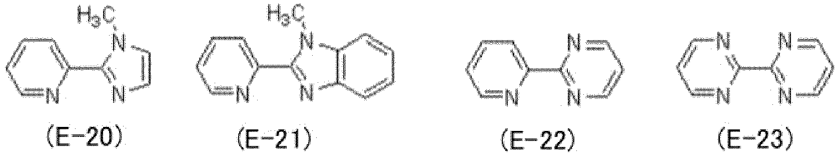

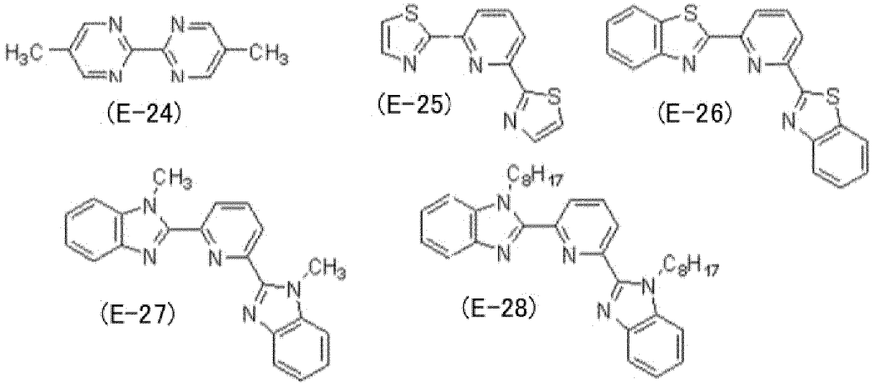

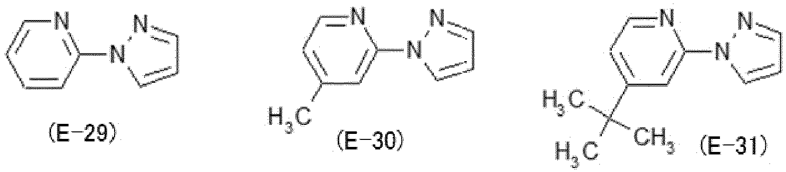

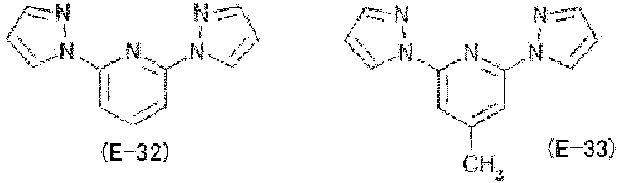

Examples of the anion include a hydride ion (H⁻), a fluoride ion (F⁻), a chloride ion (Cl⁻), a bromide ion (Br⁻), an iodide ion (I⁻), a hydroxide ion (OH⁻), a cyanide ion (CN⁻), a nitric acid ion (NO₃⁻), a nitrous acid ion (NO₂⁻), a hypochlorous acid ion (ClO⁻), a chlorous acid ion (ClO₂⁻), a chloric acid ion (ClO₃⁻), a perchloric acid ion (ClO₄⁻), a permanganic acid ion (MnO₄⁻), an acetic acid ion (CH₃COO⁻), a hydrogen carbonate ion (HCO₃⁻), a dihydrogen phosphate ion (H₂PO4⁻), a hydrogen sulfate ion (HSO₄⁻), a hydrogen sulfide ion (HS⁻), a thiocyanic acid ion (SCN⁻), a tetrafluoroboric acid ion (BF₄⁻), a hexafluorophosphate ion (PF₆⁻), a tetracyanoborate ion (B(CN)₄⁻), a dicyanoamine ion (N(CN)₂⁻), a p-toluenesulfonic acid ion (TsO⁻), a trifluoromethyl sulfonate ion (CF₃SO₂⁻), a bis(trifluoromethylsulfonyl)amine ion (N(SO₂CF₃)₂⁻), a tetrahydroxoaluminate ion ([Al(OH)₄]⁻ or [Al(OH)₄(H₂O)₂]⁻), a dicyanoargentate(I) ion ([Ag(CN)₂]⁻), a tetrahydroxochromate(III) ion ([Cr(OH)₄]⁻), a tetrachloroaurate(III) ion ([AuCl₄⁻), an oxide ion (O²⁻), a sulfide ion (S²⁻), a peroxide ion (O₂²⁻), a sulfuric acid ion (SO₄²⁻), a sulfurous acid ion (SO₃²⁻), a thiosulfuric acid (S₂O₃²⁻), a carbonic acid ion (CO₃²⁻), a chromic acid ion (CrO₄²⁻), a dichromic acid ion (Cr₂O₇²⁻), a monohydrogen phosphate ion (HPO₄²⁻), a tetrahydroxozincate(II) ion ([Zn(OH)₄]²⁻), a tetracyanozincate(II) ion ([Zn(CN)₄]²⁻), a tetrachlorocuprate(II) ion ([CuCl₄]²⁻), a phosphoric acid ion (PO₄³⁻), a hexacyanoferrate(III) ion ([Fe(CN)₆]³⁻), a bis(thiosulfate)argentate(I) ion ([Ag(S₂O₃)₂]³⁻), and a hexacyanoferrate(II) ion ([Fe(CN)₆]⁴⁻). Among the above-listed examples, a tetrafluoroboric acid ion, a hexafluorophosphate ion, a tetracyanoborate ion, a bis(trifluoromethylsulfonyl)amine ion, and a perchloric acid ion are preferable.

As the metal complex, a trivalent cobalt complex is particularly preferably added. When the trivalent cobalt complex is added as the oxidant, the hole-transporting material can be oxidized to stabilize the hole-transporting material, and therefore hole transporting properties can be improved.

In the present disclosure, for example, a trivalent cobalt complex is preferably used as the cobalt complex to be added to the hole-transporting layer forming coating liquid, but the hole-transporting layer of the photoelectric conversion element obtained using the hole-transporting layer forming coating liquid preferably includes a divalent cobalt complex. This is because the trivalent cobalt complex is mixed with the hole-transporting material to oxidize the hole-transporting material, and therefore the cobalt complex becomes divalent. In other words, in the present disclosure, the photoelectric conversion layer preferably further includes a divalent cobalt complex.

It is particularly preferred that the trivalent cobalt complex be hardly remained especially in the hole-transporting layer of the photoelectric conversion element, and almost all of the cobalt complex be turned into a divalent cobalt complex. As a result, hole transporting properties are improved and stabilized, and high output and retention rate of output are improved, and moreover the effects thereof can be exhibited in various temperature environments.

For example, the valence of the cobalt complex included in the hole-transporting layer can be determined by XAFS spectroscopy. The XAFS spectroscopy is abbreviation of X-ray absorption fine structure spectroscopy. For example, a sample is irradiated with X-rays, and the absorption thereof is measured to obtain an XAFS spectrum.

In the XAFS spectrum, the structure near the absorption edge is called an S-ray absorption near edge structure (XANES), and a wide range X-ray absorption fine structure appearing at the higher energy side than the absorption edge by about 100 eV or greater is called an extended X-ray absorption fine structure (EXAFS). The information associated with valence of a target atom or structure thereof can be obtained mainly from the former XANES. In this case, for example, an XAFS spectrum of a divalent cobalt complex powder and an XAFS spectrum of a trivalent cobalt complex powder are separately measured. By comparing the XAFS spectrum of the cobalt complex included in the hole-transporting layer with the XAFS spectra of the divalent and trivalent cobalt complex powder samples, the valence of the cobalt complex included in the hole-transporting layer can be determined.

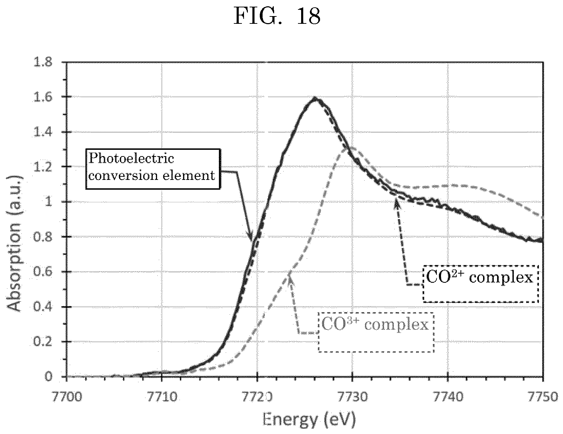

The XAFS spectrum of the photoelectric conversion element (Example 1) of the present disclosure obtained in the above-described manner is presented in FIG. 18. As illustrated in FIG. 18, the cobalt complex included in the hole-transporting layer of the example of the photoelectric conversion element of the present disclosure is matched with the spectrum of the divalent cobalt complex powder well, and does not have a region matched with the spectrum of the trivalent cobalt complex powder. Accordingly, it can be judged that almost all of the cobalt complexes included are divalent cobalt complexes.

The trivalent cobalt complex added to the hole-transporting layer forming coating liquid is preferably a cobalt complex represented by Structural Formula (4) or Structural Formula (5).

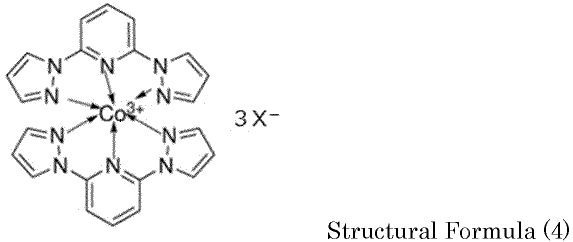

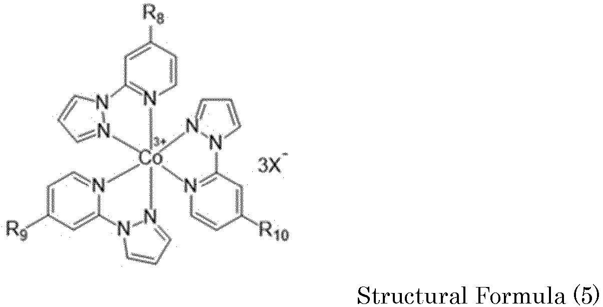

In Structural Formulae (4) and (5), R₈ to R₁₀ are each a hydrogen atom, a methyl group, an ethyl group, a tert-butyl group, or a trifluoromethyl group, and X is any of Structural Formulae (6) to (9).

BF₄ Structural Formula (6)

PF₆ Structural Formula (7)

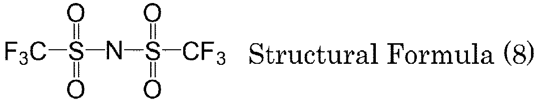

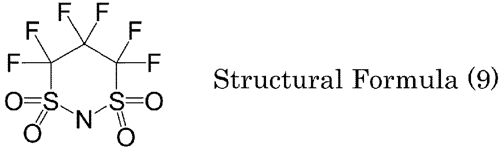

Among the structural formula (6) to (9), X is more preferably Structural Formula (8). X represented by Structural Formula (8) is effective because the hole-transporting material is stably maintained in the oxidized state.

Specific examples of the cobalt complexes above include, but are not limited to, (F-1) to (F-24) below.

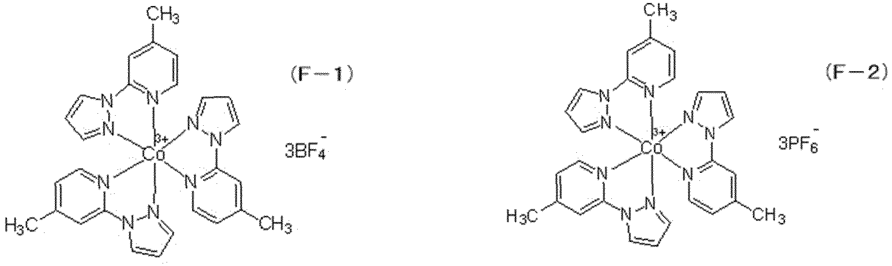

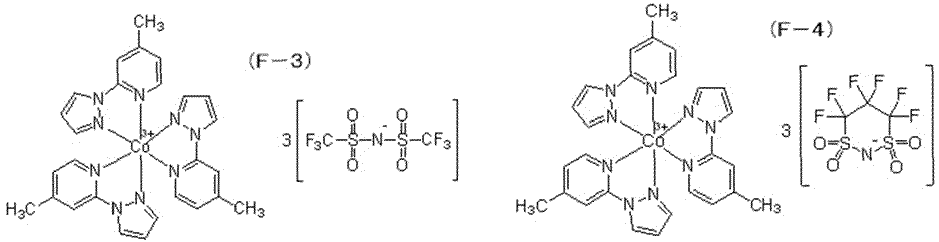

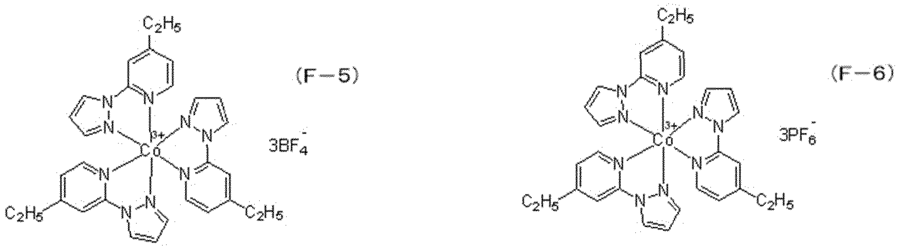

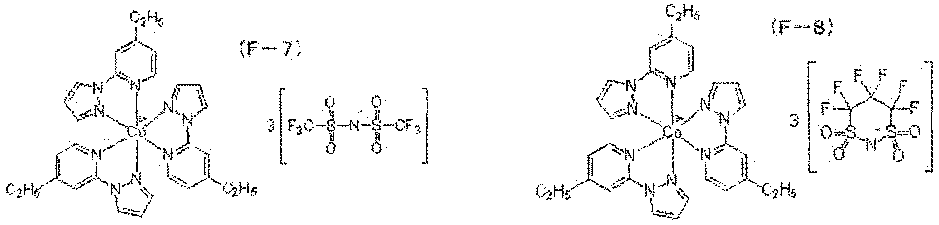

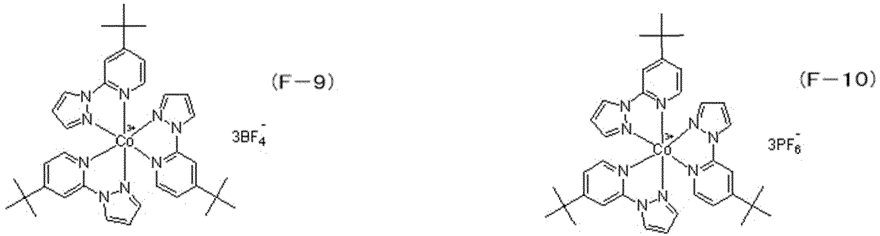

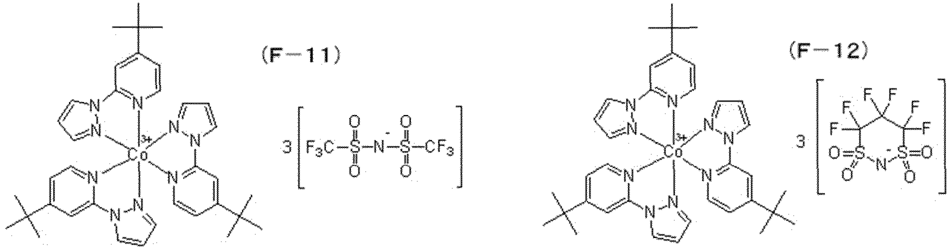

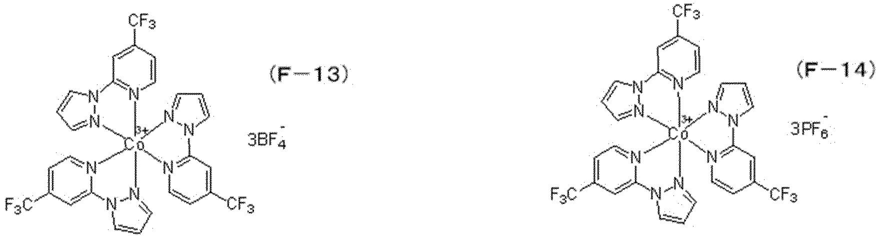

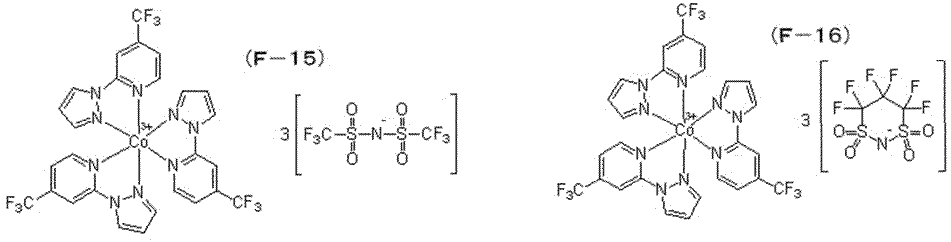

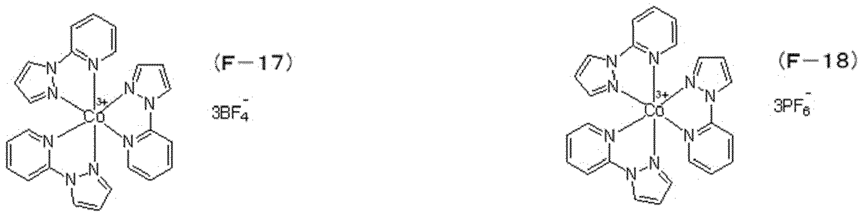

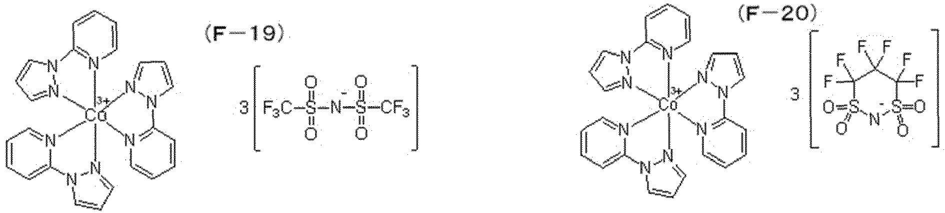

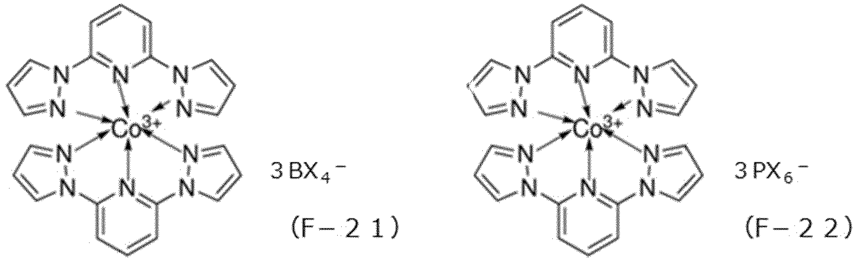

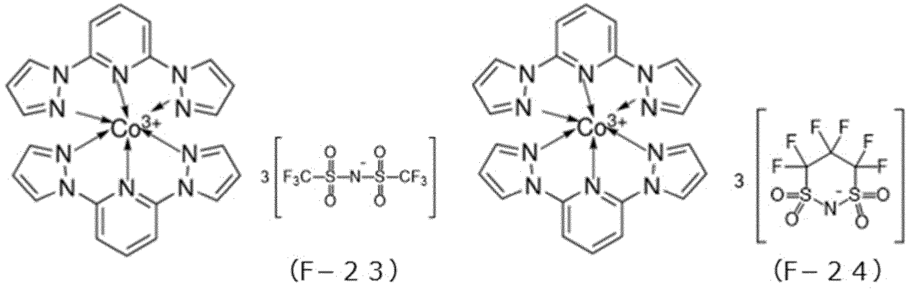

Among the above-listed examples, (F-18) and (F-23) are preferable.

### --Hypervalent iodine compound--

The hypervalent iodine compound is a compound, which includes iodine having 9 or more formal valence electrons exceeding octet. In other words, the hypervalent iodine compound is a compound, which includes an iodine atom having electrons greater than 8 electrons required according to the octet rule, and is in the hypervalent state. The valence electron is also referred to as a valency electron, and is an electron occupying the outer electron shell excluding core electrons in the electron configuration of the atom.

Since the photoelectric conversion element includes the hole-transporting layer including the hypervalent iodine compound, durability and stability of output can be improved.

The hypervalent iodine compound usable in the present disclosure is not particularly limited and may be appropriately selected depending on the intended purpose. The hypervalent iodine compound preferably includes a periodinane compound, diaryliodonium salt, or both.

The periodinane compound and the diaryliodonium salt have high solubility to a halogen-based solvent, such as chlorobenzene, and low crystallinity and acidity. As the hole-transporting layer includes the periodinane compound, or the diaryliodonium salt, or both, therefore, output of the photoelectric conversion element can be improved.

Since open circuit voltage can be improved by reducing acidity of the hole-transporting layer of the photoelectric conversion element, materials used for the hole-transporting layer are preferably materials having low acidity. As a method for reducing the acidity of the hole-transporting layer, for example, the acidity of the hole-transporting layer can be reduced by increasing a ratio (amount) of the basic materials in the hole-transporting layer. In this case, however, a ratio of the hole-transporting compound in the hole-transporting layer reduces. When open circuit voltage is improved by increasing the ratio of the basic materials in the hole-transporting layer, therefore, series resistance increases, and output with light of high illuminance decreases.

When the acidity of the hole-transporting layer is reduced for the above-described reasons, materials having high solubility to a halogen-based solvent (e.g., chlorobenzene) and low crystallinity and acidity, such as a periodinane compound, and diaryliodonium salt, are preferably used.

It has been found that high output can be obtained particularly when the periodinane compound represented by General Formula (8) below and the diaryliodonium salt represented by General Formula (9) below are used as the hypervalent iodine compound serving as an oxidant are used in the hole-transporting layer, owing to high solubility and low crystallinity and acidity. When the acidity of the hole-transporting layer, open circuit voltage becomes low. The open circuit voltage can be increased by increasing an amount of basic materials added, nit series voltage increases and output with light of high illuminance reduces because the concentration of the hole-transporting material reduces. 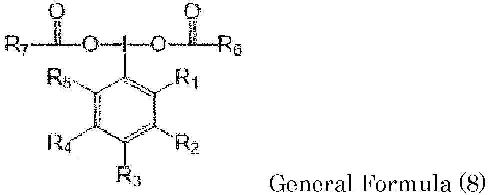 (In General Formula (8), R₁ to R₅ are each a hydrogen atom or a methyl group; and R₆ and R₇ are each a methyl group or a trifluoromethyl group.) 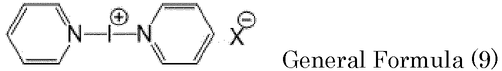 (In General Formula (9), X is any of the following structural formulae.)

BF₄ Structural Formula (1)

PF₆ Structural Formula (2)

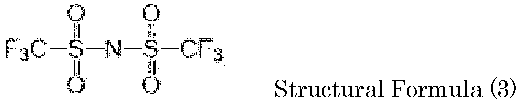

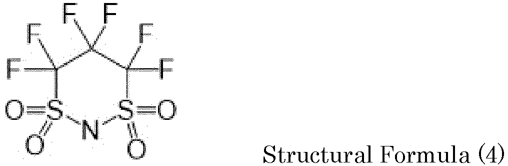

Specific examples of the periodinane compound represented by General Formula (8) and the diaryliodonium salt represented by General Formula (9) include, but are not limited to, (G-1) to (G-10) below.

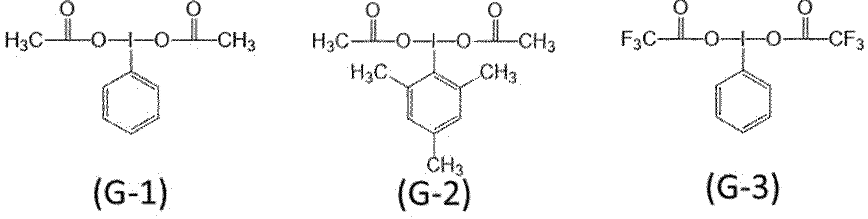

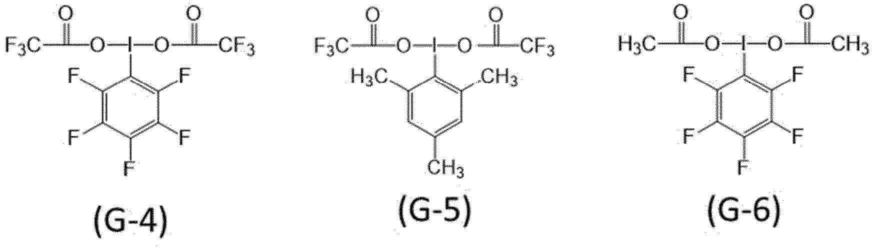

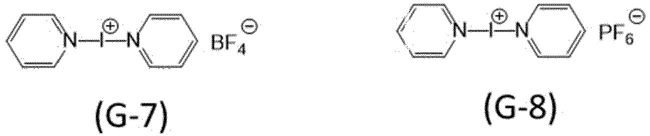

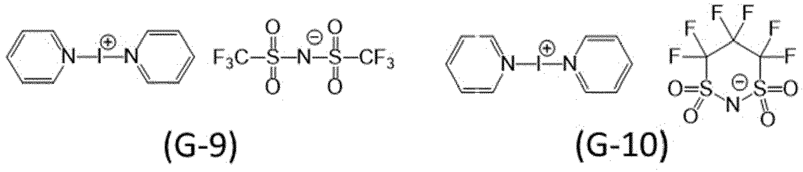

Other than above, the hypervalent iodine compounds represented by structural formulae below may be used.

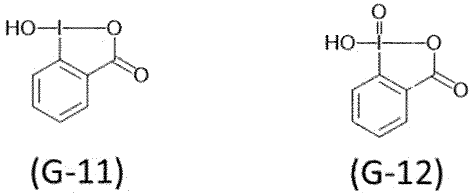

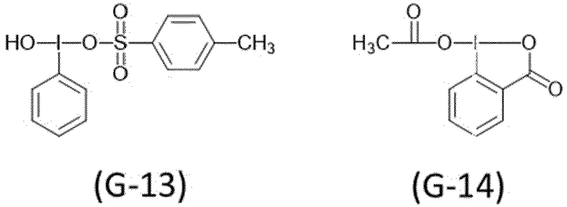

Moreover, a compound represented by General Formula (10) below may be included as the oxidant. 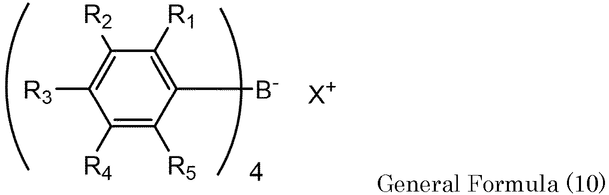 (In General Formula (10), R₁ to R₅ are each a hydrogen atom, a halogen atom, an alkyl group, an alkoxy group, or an aryl group, where R₁ to R₅ may be identical or different; and X is a cation.

Specific examples of the compound represented by General Formula (10) include, but are not limited to, (I-1) to (I-28) below.

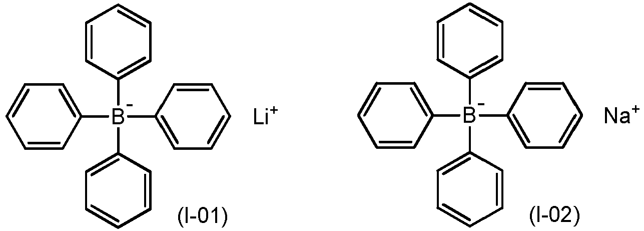

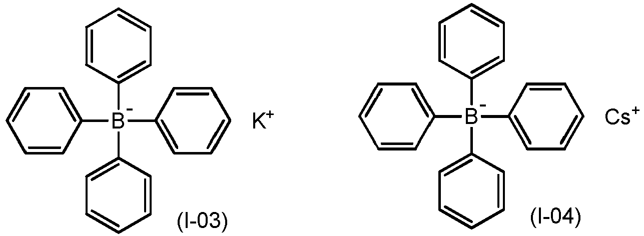

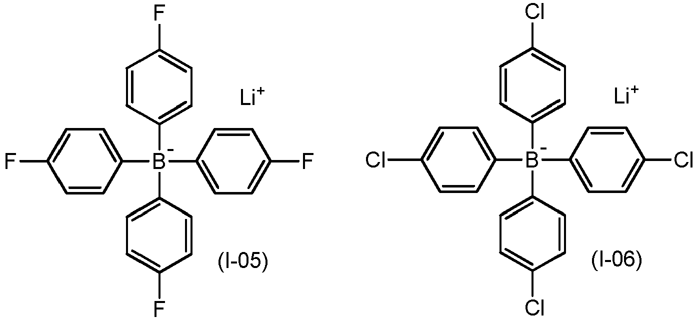

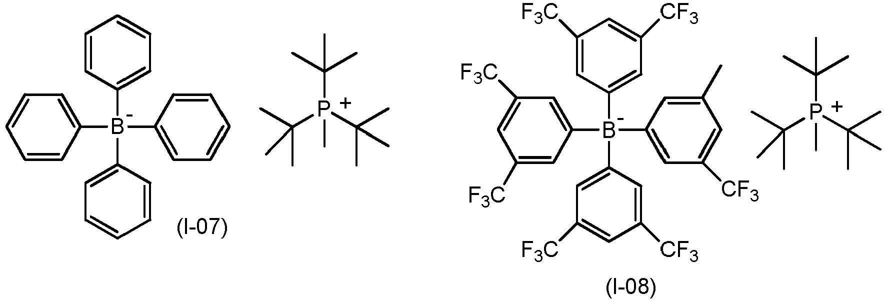

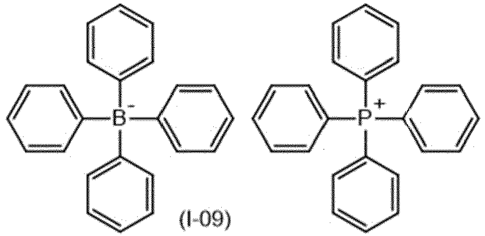

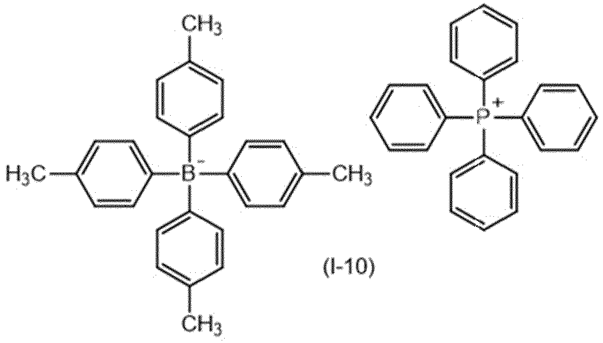

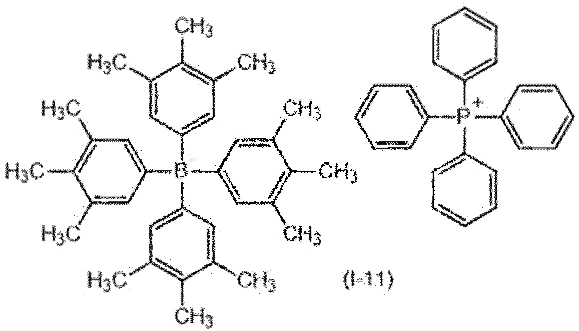

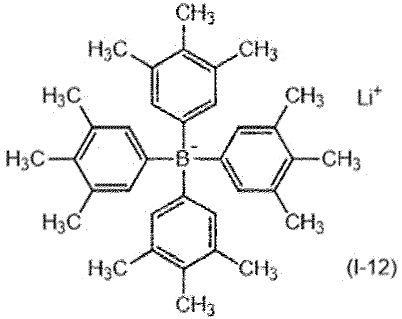

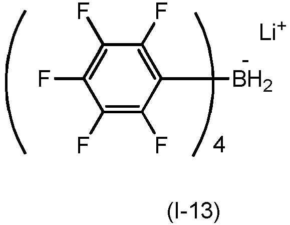

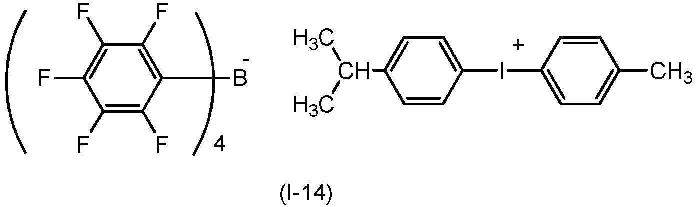

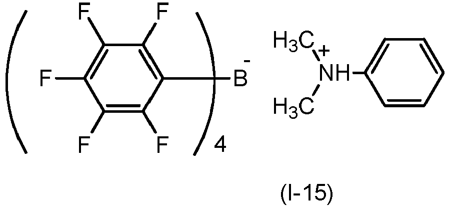

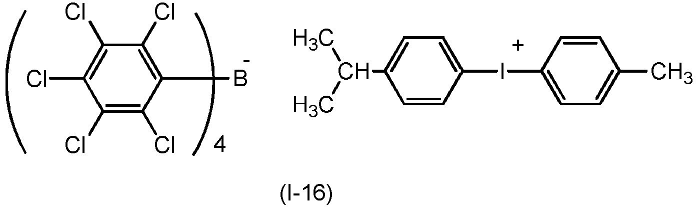

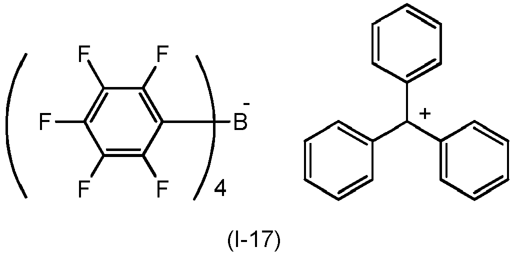

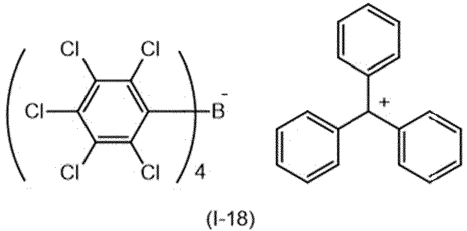

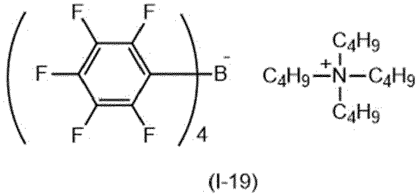

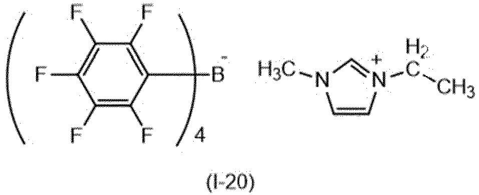

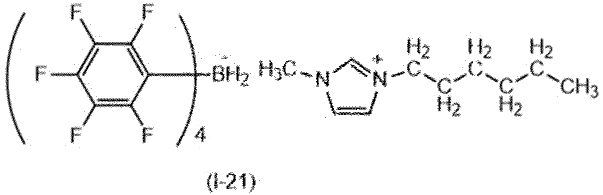

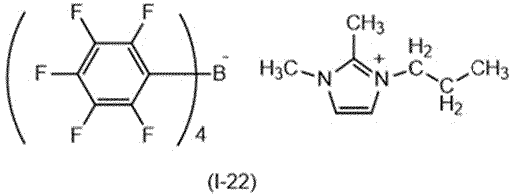

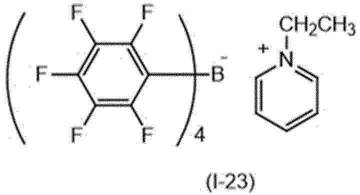

An amount of the oxidant is preferably 0.5 parts by mass or greater but 50 parts by mass or less, and more preferably 5 parts by mass or greater but 30 parts by mass or less, relative to 100 parts by mass of the hole-transporting material. The entire part of the hole-transporting material does not need to be oxidized by addition of the oxidant. The addition of the oxidant is effective as long as at least part of the hole-transporting material is oxidized.

The hole-transporting layer may have a single-layer structure formed of a single material, or a laminate structure including a plurality of compounds. When the hole-transporting layer has a laminate structure, a polymer material is preferably used for a layer close to the below-described second electrode among all the layers in the laminate of the hole-transporting layer. Use of a polymer material having excellent film formability is advantageous because a surface of a porous electron-transporting layer can be leveled, and photoelectric conversion properties can be improved. Since the polymer material does not easily permeate the porous electron-transporting layer, the polymer material provides excellent coverage over the surface of the porous electron-transporting layer, and therefore an effect of preventing short circuit may be obtained when electrodes are disposed.

The polymer material used for the hole-transporting layer is not particularly limited. Examples thereof include hole-transporting polymer materials known in the art.

Examples of the hole-transporting polymer material include a polythiophene compound, a polyphenylene vinylene compound, a polyfluorene compound, a polyphenylene compound, a polyarylamine compound, and a polythiadiazole compound.

Examples of the polythiophene compound include poly(3-n-hexylthiophene), poly(3-n-octyloxythiophene), poly(9,9'-dioctyl-fluorene-co-bithiophene), poly(3,3‴-didodecyl-quarter thiophene), poly(3,6-dioctylthieno[3,2-b]thiophene), poly(2,5-bis(3-decylthiophen-2-yl)thieno[3,2-b]thiophene), poly(3,4-didecylthiophene-co-thieno[3,2-b]thiophene), poly(3,6-dioctylthieno[3,2-b]thiophene-co-thieno[3,2-b]thiophene), poly(3,6-dioctylthienol3,2-b]thiophene-co-thiophene), and poly(3,6-dioctylthieno[3,2-b]thiophene-co-bithiophene).

Examples of the polyphenylene vinylene compound include poly[2-methoxy-5-(2-ethylhexyloxy)-1,4-phenylenevinylene), poly[2-methoxy-5-(3,7-dimethyloctyloxy)-1,4-phenylenevinylene), and poly[(2-methoxy-5-(2-ethylhexyloxy)-1,4-phenylenevinylene)-co-(4,4'-biphenylene-vinylene)] .

Examples of the polyfluorene compound include poly(9,9'-didodecylfluorenyl-2,7-diyl), poly[(9,9-dioctyl-2,7-divinylenefluorene)-alt-co-(9,10-anthracene)], poly[(9,9-dioctyl-2,7-divinylenefluorene)-alt-co-(4,4'-biphenylene)], poly[(9,9-dioctyl-2,7-divinylenefluorene)-alt-co-(2-methoxy-5-(2-ethylhexyloxy)-1,4-phenylene)], and poly[(9,9-dioctyl-2,7-diyl)-co-(1,4-(2,5-dihexyloxy)benzene)].

Examples of the polyphenylene compound include poly[2,5-dioctyloxy-1,4-phenylene] and poly[2,5-di(2-ethylhexyloxy-1,4-phenylene].

Examples of the polyarylamine compound include poly[(9,9-dioctylfluorenyl-2,7-diyl)-alt-co-(N,N'-diphenyl)-N,N'-di(p-hexylphenyl)-1,4-diaminobenzene], poly[(9,9-dioctylfluorenyl-2,7-diyl)-alt-co-(N,N'-bis(4-octyloxyphenyl)benzidine-N,N'-(1,4-diphenylene)], poly[(N,N'-bis(4-octyloxyphenyl)benzidine-N,N'-(1,4-diphenylene)], poly[(N,N'-bis(4-(2-ethylhexyloxy)phenyl)benzidine-N,N'-(1,4-diphenylene)], poly[phenylimino-1,4-phenylenevinylene-2,5-dioctyloxy-1,4-phenylenevinylene-1,4-phenylene], poly[p-tolylimino-1,4-phenylenevinylene-2,5-di(2-ethylhexyloxy)-1,4-phenylenevinylene-1,4-phenylene], and poly[4-(2-ethylhexyloxy)phenylimino-1,4-biphenylene].

Examples of the polythiadiazole compound include poly[(9,9-dioctylfluorenyl-2,7-diyl)-alt-co-(1,4-benzo(2,1',3)thiadiazole] and poly(3,4-didecylthiophene-co-(1,4-benzo(2, 1', 3)thiadiazole).

Among the above-listed examples, a polythiophene compound and a polyarylamine compound are preferable considering carrier mobility and ionization potential thereof.

Various additives may be added to the hole-transporting material.

Examples of the additives include: iodine; metal iodides, such as lithium iodide, sodium iodide, potassium iodide, cesium iodide, calcium iodide, copper iodide, iron iodide, and silver iodide; quaternary ammonium salts, such as tetraalkylammonium iodide, and pyridinium iodide; metal bromides, such as lithium bromide, sodium bromide, potassium bromide, cesium bromide, and calcium bromide; bromates of quaternary ammonium compounds, such as tetraalkylammonium bromide, and pyridinium bromide; metal chlorides, such as copper chloride, and silver chloride; acetic acid metal salts, such as copper acetate, silver acetate, and palladium acetate; metal sulfates, such as copper sulfate, and zinc sulfate; metal complexes, such as ferrocyanide-ferricyanide, ferrocene-ferricinium ion; sulfur compounds, such as sodium polysulfide and alkyl thiol-alkyl disulfide; viologen dyes and hydroquinone; ionic liquids disclosed in Inorg. Chem. 35 (1996) 1168, such as 1,2-dimethyl-3-n-propylimidazolium iodide, 1-methyl-3-n-hexylimidazolium iodide, 1,2-dimethyl-3-ethylimidazolium trifluoromethanesulfonate, 1-methyl-3-butylimidazolium nonafluorobutylsulfonate, and 1-methyl-3-ethylimidazolium bis(trifluoromethyl)sulfonylimide; basic compounds, such as pyridine, 4-t-butylpyridine, and benzoimidazole, and derivatives thereof; and alkali metal salts.

The average thickness of the hole-transporting layer is not particularly limited and may be appropriately selected depending on the intended purpose. The hole-transporting layer preferably has a structure where the hole-transporting layer is penetrated into pores of the porous electron-transporting layer. The average thickness of the hole-transporting layer on the electron-transporting layer is preferably 0.01 µm or greater but 20 µm or less, more preferably 0.1 µm or greater but 10 µm or less, and even more preferably 0.2 µm or greater but 2 µm or less.

The hole-transporting layer can be directly formed on the below-described electron-transporting layer on which the photosensitization compound is adsorbed.

A production method of the hole-transporting layer is not particularly limited as long as an amount (a residual amount) of chlorobenzene after forming the photoelectric conversion element can be 30 µg/mm³ or less, and may be appropriately selected depending on the intended purpose. Examples of the production method thereof include a method where a film is formed in vacuum, such as vacuum vapor deposition, and a wet film formation method. Among the above-listed examples, considering production cost, a wet film formation method is particularly preferable, and a method for applying on the electron-transporting layer is preferable.

When the wet film formation method is used, a coating method is not particularly limited and coating may be performed according to any of methods known in the art. Examples thereof include dip coating, spray coating, wire bar coating, spin coating, roller coating, blade coating, gravure coating, and die coating. As the wet printing method, moreover, various methods, such as relief printing, offset printing, gravure printing, intaglio printing, rubber plate printing, and screen printing, may be used.

Moreover, film formation may be performed in a supercritical fluid, or a subcritical fluid having lower temperature and pressure than a critical point. The supercritical fluid is not particularly limited as long as the supercritical fluid exists as a non-condensable high-density fluid in a temperature and pressure region exceeding the limit (critical point) at which gas and liquid can coexist, the supercritical fluid does not condense even when compressed, and the supercritical fluid is a fluid in a state of being equal to or greater than the critical temperature and the critical pressure. The supercritical fluid may be appropriately selected depending on the intended purpose. The supercritical fluid is preferably a supercritical fluid having a low critical temperature.

Examples of the supercritical fluid include carbon monoxide, carbon dioxide, ammonia, nitrogen, water, alcohol solvents, hydrocarbon solvents, halogen solvents, and ether solvents.

Examples of the alcohol solvent include methanol, ethanol, and n-butanol.

Examples of the hydrocarbon solvent include ethane, propane, 2,3-dimethylbutane, benzene, and toluene.

Examples of the halogen solvent include methylene chloride and chlorotrifluoromethane.

Examples of the ether solvent include dimethyl ether.

The above-listed examples may be used alone or in combination.

Among the above-listed examples, carbon dioxide is preferable because carbon dioxide has a critical pressure of 7.3 MPa and a critical temperature of 31°C, and therefore a supercritical state of carbon dioxide can be easily generated, and the supercritical fluid of carbon dioxide is easily handled due to incombustibility thereof.

The subcritical fluid is not particularly limited as long as the subcritical fluid exists as a high-pressure liquid in a temperature and pressure region near the critical point. The subcritical fluid may be appropriately selected depending on the intended purpose. The compounds listed as the supercritical fluid can be suitably used as the subcritical fluid.

The critical temperature and the critical pressure of the subcritical fluid are not particularly limited, and may be appropriately selected depending on the intended purpose. The critical temperature of the subcritical fluid is preferably -273°C or higher but 300°C or lower, and more preferably 0°C or higher but 200°C or lower.

In addition to the supercritical fluid or the subcritical fluid, moreover, an organic solvent or an entrainer may be used in combination. The solubility in the supercritical fluid can be easily adjusted by adding the organic solvent or entrainer.

The organic solvent is not particularly limited, and may be appropriately selected depending on the intended purpose. Examples of the organic solvent include a ketone solvent, an ester solvent, an ether solvent, an amide solvent, a halogenated hydrocarbon solvent, and a hydrocarbon solvent.

Examples of the ketone solvent include acetone, methyl ethyl ketone, and methyl isobutyl ketone.

Examples of the ester solvent include ethyl formate, ethyl acetate, and n-butyl acetate.

Examples of the ether solvent include diisopropyl ether, dimethoxy ethane, tetrahydrofuran, dioxolane, and dioxane.

Examples of the amide solvent include N,N-dimethylformamide, N,N-dimethylacetamide, and N-methyl-2-pyrrolidone.

Examples of the halogenated hydrocarbon solvent include dichloromethane, chloroform, bromoform, methyl iodide, dichloroethane, trichloroethane, trichloroethylene, chlorobenzene, o-dichlorobenzene, fluorobenzene, bromobenzene, iodobenzene, and 1-chloronaphthalene.

Examples of the hydrocarbon solvent include n-pentane, n-hexane, n-octane, 1,5-hexadiene, cyclohexane, methylcyclohexane, cyclohexadiene, benzene, toluene, o-xylene, m-xylene, p-xylene, ethylbenzene, and cumene.

The above-listed examples may be used alone or in combination.

Moreover, a production method of the hole-transporting layer is preferably a method where a hole-transporting layer forming material including materials for forming the hole-transporting layer is applied onto an electron-transporting layer on which a photosensitization compound is adsorbed, followed by drying before formation of a second electrode to control. Heat-drying is particularly preferably performed.

The pressure as conditions for the heat-drying is not particularly limited. The heat-drying is preferably performed at ambient pressure.

The temperature as conditions for the heat-dying is preferably 30°C or higher but 130°C or lower, and more preferably 50°C or higher but 100°C or lower.

The processing time as conditions for the heat-drying is preferably 10 minutes or longer but 24 hours or shorter, and more preferably 30 minutes or longer but 2 hours or shorter.

After disposing a layer of the hole-transporting material on the electron-transporting layer on which the photosensitization compound is adsorbed, moreover, a press treatment may be performed. As the press treatment is performed, the hole-transporting material is more closely adhered to the electron-transporting layer that is a porous electrode, and therefore efficiency may be improved.

A method of the press treatment is not particularly limited, and may be appropriately selected depending on the intended purpose. Examples thereof include press molding using a flat plate, such as IR pellet dies, and roll pressing using a roller.

The pressure is preferably 10 kgf/cm² or greater, and more preferably 30 kgf/cm² or greater.

The duration of the press treatment is not particularly limited, and may be appropriately selected depending on the intended purpose. The duration thereof is preferably 1 hour or shorter. Moreover, heat may be applied during the press treatment. During the press treatment, a release agent may be disposed between a press and the electrode.

Examples of the release agent include fluororesins, such as polyethylene tetrafluoride, polychloroethylene trifluoride, ethylene tetrafluoride-propylene hexafluoride copolymer, a perfluoroalkoxy fluoride resin, polyvinylidene fluoride, ethylene-ethylene tetrafluoride copolymers, an ethylene-chloroethylene trifluoride copolymer, and polyvinyl fluoride. The above-listed examples may be used alone or in combination.

After performing the press treatment but before disposing a second electrode, metal oxide may be disposed between the hole-transporting material and the second electrode.

Examples of the metal oxide include molybdenum oxide, tungsten oxide, vanadium oxide, and nickel oxide. The above-listed examples may be used alone or in combination. Among the above-listed examples, molybdenum oxide is preferable.

A method for disposing the metal oxide on the hole-transporting layer is not particularly limited, and may be appropriately selected depending on the intended purpose. Examples of the method include: a method where a film is formed in vacuum, such as sputtering, and vacuum vapor deposition; and a wet film formation method.

The wet film formation method is preferably a method where a paste in which powder or sol of metal oxide is dispersed is prepared, and the paste is applied onto the hole-transporting layer. When the wet film formation method is used, a coating method is not particularly limited and coating may be performed according to any of methods known in the art. For example, various methods, such as dip coating, spray coating, wire bar coating, spin coating, roller coating, blade coating, gravure coating, die coating, and wet printing methods (e.g., relief printing, offset printing, gravure printing, intaglio printing, rubber plate printing, and screen printing) may be used.

The average thickness of the applied metal oxide is preferably 0.1 nm or greater but 50 nm or less, and more preferably 1 nm or greater but 10 nm or less.

### <Second electrode>

The second electrode may be formed on the hole-transporting layer, or on the metal oxide of the hole-transporting layer. Moreover, the second electrode may be identical to the first electrode. A second substrate is not necessarily disposed when strength of the resultant photoelectric conversion element is sufficiently maintained.

Examples of a material of the second electrode include metals, carbon compounds, conductive metal oxide, and conductive polymers.

Examples of the metals include platinum, gold, silver, copper, and aluminium.

Examples of the carbon compounds include graphite, fullerene, carbon nanotubes, and graphene.

Examples of the conductive metal oxide include ITO, FTO, and ATO.

Examples of the conductive polymers include polythiophene, and polyaniline.

The above-listed examples may be used alone or in combination.

The second electrode can be formed on the hole-transporting layer by an appropriate method, such as coating, laminating, vapor deposition, CVD, or bonding depending on a material for use or a type of the hole-transporting layer.

In the photoelectric conversion element of the present disclosure, at least one of the first electrode and the second electrode is preferably substantially transparent. A preferable embodiment is that the first electrode side of the photoelectric conversion element is transparent, and incident light is allowed to enter from the first electrode side. In this case, a material that reflects light is preferably used for the side of the second electrode. As the material that reflects light, metal, glass or plastic on which conductive oxide is deposited through vapor deposition, or a thin metal film is preferably used. Moreover, it is also effective to dispose an antireflection layer at the side from which the incident light enters.

### <Second substrate>

The second substrate is not particularly limited. Any of substrates known in the art may be used as the second substrate. Examples thereof include substrates, such as glass, a plastic film, and ceramic. In order to improve adhesion at the contact area between the second substrate and the sealing member, the rough surface texture (convex-concave shapes) may be imparted.

A method for imparting the rough surface texture is not particularly limited, and may be appropriately selected depending on the intended purpose. Examples thereof include sand blasting, water blasting, polishing, chemical etching, and laser processing.

As method for improving adhesion between the second substrate and the sealing member, for example, organic matter deposited on the surface of the second substrate may be removed, or hydrophilicity of the surface thereof may be improved. The method for removing the organic matter deposited on the surface of the second substrate is not particularly limited, and may be appropriately selected depending on the intended purpose. Examples thereof include UV ozone washing, and an enzyme plasma treatment.

### <<Sealing member>>

A sealing member can be used for the photoelectric conversion element of the present disclosure and use of the sealing member can be effective. The sealing member is capable of sealing at least the electron-transporting layer and the hole-transporting layer from the external environment of the photoelectric conversion element. In other words, the photoelectric conversion element of the present disclosure preferably further includes a sealing member configured to seal the photoelectric conversion layer from the external environment of the photoelectric conversion element.

Any of members known in the art can be used as the sealing member, as long as the sealing member is a member capable of suppressing entry of an excessive amount of moisture or oxygen into the internal part of the seal from the external environment. Moreover, the sealing member has an effect of preventing mechanical breakage that may be caused when the photoelectric conversion element is pressed from outside. As long as such an effect can be imparted, any of members known in the art can be used as the sealing member.

The sealing system is roughly classified into "frame sealing" and "plane sealing". The "frame sealing" is sealing where a sealing member is disposed on the peripheral area of the power generation region composed of the photoelectric conversion layer of the photoelectric conversion element photoelectric conversion layer, and is bonded to the second substrate. The "plane sealing" is sealing where a sealing member is disposed on the entire plane of the power generation region, and is bonded to the second substrate. The former "frame sealing" can form a hollow section inside the seal, thus the moisture content or oxygen content inside the seal can be appropriately adjusted. In addition, the second electrode does not come into contact with the sealing member, which leads to an effect that a possibility of the second electrode being peeled off is reduced. Meanwhile, the latter "plane sealing" has an excellent effect of preventing entry of excess water or oxygen from outside, and a large contact area with the sealing member can be secured. Therefore, high sealing strength can be obtained, and the plane sealing is particularly suitable when a flexible substrate is used as the first substrate.

A type of the sealing member is not particularly limited and may be appropriately selected depending on the intended purpose. Examples thereof include a curing resin and a low melting point glass resin. The curing resin is not particularly limited as long as the curing resin is a resin that can be cured with light or heat, and may be appropriately selected depending on the intended purpose. Among the curable resins with light or heat, an acrylic resin and an epoxy resin are preferably used.

As the cured product of the acrylic resin, any of materials known in the art can be used as long as the cured product is a product obtained by curing a monomer or oligomer including an acryl group in a molecule thereof.

As the cured product of the epoxy resin, any of materials known in the art can be used as long as the cured product is a product obtained by curing a monomer or oligomer including an epoxy group in a molecule thereof.

Examples of the epoxy resin include a water-dispersible epoxy resin, a non-solvent epoxy resin, a solid epoxy resin, a heat curable epoxy resin, a curing agent-mixed epoxy resin, and a UV curable epoxy resin. Among the above-listed examples, a heat curable epoxy resin and a UV curable epoxy resin are preferable, and a UV curable epoxy resin is more preferable. Heating may be performed on a UV curable epoxy resin. Heating is preferably performed even after curing the UV curable epoxy resin with UV irradiation.

Examples of the epoxy resin include a bisphenol A epoxy resin, a bisphenol F epoxy resin, a novolac epoxy resin, an alicyclic epoxy resin, a long-chain aliphatic epoxy resin, glycidyl amine epoxy resin, a glycidyl ether epoxy resin, and a glycidyl ester epoxy resin. The above-listed examples may be used alone or in combination.

The epoxy resin is preferably mixed with a curing agent or various additives according to the necessity.

The curing agent is classified into an amine-based curing agent, an acid anhydride-based curing agent, a polyamide-based curing agent, and other curing agents, and may be appropriately selected depending on the intended purpose.

Examples of the amine-based curing agent include: aliphatic polyamine, such as diethylene triamine, and triethylene tetramine; and aromatic polyamine, such as m-phenylene diamine, diaminodiphenylmethane, and diaminodiphenylsulfone.

Examples of the acid anhydride-based curing agent include phthalic anhydride, tetrahydrophthalic anhydride, hexahydrophthalic anhydride, methyltetrahydrophthalic anhydride, methylnadic anhydride, pyromellitic anhydride, HET anhydride, and dodecenylsuccinic anhydride.

Examples of other curing agents include imidazoles and polymercaptan. The above-listed examples may be used alone or in combination.

Examples of the additive include filler, gap agents, polymerization initiators, drying agents (moisture absorbents), curing accelerators, coupling agents, flexibilizers, colorants, flame retardant auxiliaries, antioxidants, and organic solvents. Among the above-listed examples, filler, a gap agent, a curing accelerator, a polymerization initiator, and a drying agent (moisture absorbent) are preferable, and filler and a polymerization initiator are more preferable.

The filler is effective in preventing entry of moisture and oxygen, as well as exhibiting effects of reducing volumetric shrinkage during curing, reducing an amount of outgas generated during curing or heating, improving mechanical strength, controlling thermal conductivity or fluidity, and is very effective in maintaining stable output in various environments. Particularly, output characteristics and durability of the photoelectric conversion element are influenced not only by moisture or oxygen entered but also by outgas generated during curing or heating of the sealing member. The gas generated as outgas during heating significantly affects output characteristics when the photoelectric conversion element is stored in a high temperature environment.

In this case, the filler, the gap agent, or the drying agent are added to the sealing member. As a result, entry of moisture or oxygen can be suppressed by such additives themselves, and an amount of the sealing member to be used can be reduced, and therefore generation of outgas can be reduced. Addition of such additives can be also effective not only for curing, but also when photoelectric conversion element is stored in a high temperature environment.

The filler is not particularly limited, and may be appropriately selected depending on the intended purpose. For example, inorganic filler, such as crystalline or amorphous silica, talc, alumina, aluminum nitride, silicon nitride, calcium silicate, and calcium carbonate, is preferably used. The above-listed examples may be used alone or in combination. The average primary particle diameter of the filler is preferably 0.1 µm or greater but 10 µm or less, and more preferably 1 µm or greater but 5 µm or less. When the average primary particle diameter is within the above-mentioned preferable range, entry of moisture or oxygen can be sufficiently suppressed, appropriate viscosity of the sealing member can be obtained, adhesion to a substrate and defoamability can be improved, a width of sealing can be controlled, and desirable processability is obtained.

An amount of the filler is preferably 10 parts by mass or greater but 90 parts by mass or less, and more preferably 20 parts by mass or greater but 70 parts by mass or less, relative to 100 parts by mass of the entire sealing member. When the amount of the filler is within the above-mentioned range, entry of moisture or oxygen can be sufficiently suppressed, appropriate viscosity of the sealing member can be obtained, and desirable adhesion and processability are obtained.

The gas agent is also called a gap controlling agent or a spacer agent, and can control a gap formed at the sealing area. When the sealing member is applied onto the first substrate or the first electrode, the second substrate is placed thereon, and the stacked structure is sealed, a gap at the sealing area matches with the size of the gap agent as the epoxy resin includes the gap agent. As a result, it is possible to easily control the gap of the sealing area.

Any of materials known in the art can be used as the gap agent, as long as the material is particles having a uniform particle diameter and has high solvent resistance or heat resistance. The material of the gap agent is preferably a material having high affinity to an epoxy resin and being spherical particles. Specific examples thereof include glass beads, silica particles, and organic resin particles. The above-listed examples may be used alone or in combination.

The particle diameter of the gap agent can be selected depending on the gap of the sealing area to be set. The particle diameter thereof is preferably 1 µm or greater but 100 µm or less, more preferably 5 µm or greater but 50 µm or less.

Examples of the polymerization initiator include a thermal polymerization initiator that induces polymerization with heat, and a photopolymerization initiator that incudes polymerization with light.

The thermal polymerization initiator is a compound that generates active species, such as radicals or cations, upon application of heat. Specifically, an azo compound, such as 2,2'-azobisbutyronitrile (AIBN), or peroxide, such as benzoyl peroxide (BPO) is used as the thermal polymerization initiator. As the cationic thermal polymerization initiator, benzenesulfonic acid ester or alkyl sulfonium salt may be used. As the photopolymerization initiator, a cationic photopolymerization initiator is preferably used in case of an epoxy resin. When a cationic photopolymerization initiator is blended in the epoxy resin and light irradiation is performed, the cationic photopolymerization initiator is decomposed to generate strong acid, the acid induces polymerization of the epoxy resin to proceed with a curing reaction. The cationic photopolymerization initiator has advantages that that volumetric shrinkage during curing is small, oxygen inhibition does not occur, and storage stability is high.

Examples of the cationic photopolymerization initiator include aromatic diazonium salt, aromatic iodonium salt, aromatic sulfonium salt, a metallocene compound, and a silanol-aluminum complex.

Moreover, a photoacid generator capable of generating acid upon irradiation of light may be used. The photoacid generator functions as acid that initiates a cationic polymerization. Examples thereof include onium salts such as ionic sulfonium salt-based onium salts and ionic iodonium salt-based onium salts including a cation part and an ionic part. The above-listed examples may be used alone or in combination.

An amount of the polymerization initiator may vary depending on materials for use. The amount of the polymerization initiator is preferably 0.5 parts by mass or greater but 10 parts by mass or less, and more preferably 1 part by mass or greater but 5 parts by mass or less, relative to 100 parts by mass of the entire sealing member. The amount of the polymerization initiator within the above-mentioned range is effective because curing is progressed appropriately, an amount of uncured residue can be reduced, and excessive generation of outgas can be prevented.

The drying agent is also called a moisture absorbent and is a material having a function of physically or chemically adsorbing or absorbing moisture. Inclusion of the drying agent in the sealing member is effective because moisture resistance may be further improved and influence of outgassing can be decreased in some cases.

The drying agent is preferably particulate. Examples thereof include inorganic water-absorbing materials such as calcium oxide, barium oxide, magnesium oxide, magnesium sulfate, sodium sulfate, calcium chloride, silica gel, molecular sieve, and zeolite. Among the above-listed examples, zeolite or calcium oxide is preferable because zeolite or calcium oxide absorbs a large amount of moisture. The above-listed examples may be used alone or in combination.

The curing accelerator is also called a curing catalyst and is used for the purpose of accelerating curing speed. The curing accelerator is mainly used for a heat-curable epoxy resin.

Examples of the curing accelerator include: tertiary amine or tertiary amine salt such as 1,8-diazabicyclo(5,4,0)-undecene-7 (DBU) and 1,5-diazabicyclo(4,3,0)-nonene-5 (DBN); imidazole-based compounds such as 1-cyanoethyl-2-ethyl-4-methylimidazole and 2-ethyl-4-methylimidazole; and phosphine or phosphonium salt such as triphenylphosphine and tetraphenylphosphonium·tetraphenyl borate. The above-listed examples may be used alone or in combination.

The coupling agent has an effect of enhancing a bonding force between molecules, and examples thereof include silane coupling agents. Specific examples thereof include: silane coupling agents such as 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-phenyl-γ-aminopropyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)3-aminopropyltrimethoxysilane hydrochloride, and 3-methacryloxypropyltrimethoxysilane. The above-listed examples may be used alone or in combination.

As the sealing member, resin compositions that are commercially available as sealing materials, seal materials, or adhesives have been known, and can be effectively used in the present disclosure. Among the above-listed examples, there are epoxy resin compositions that are developed and are commercially available to be used in solar battery cells or organic EL elements, and can be particularly effectively used in the present disclosure. Examples of the commercially available products of the epoxy resin include product names: TB3118, TB3114, TB3124, and TB3125F (all of which are available from ThreeBond), World Rock 5910, World Rock 5920, and World Rock 8723 (all available from Kyoritsu Chemical & Co., Ltd.), and WB90US(P) (available from MORESCO).

Examples of the commercially available products of the acrylic resin include product names: TB3035B and TB3035C (both available from ThreeBond Co., Ltd.), and NICHIBAN UM (available from NICHIBAN Co., Ltd.).

A heat treatment may be performed on the sealing member after curing by UV irradiation etc. In the present disclosure, performing the heat treatment is effective. An amount of uncured components may be reduced by performing the heat treatment. Therefore, the heat treatment is effective for reducing an amount of outgassing that may influence output properties, enhancing sealing performance, and enhancing output properties and retention of output.

Meanwhile, the low melting point glass resin is used by applying the resin, followed by firing to decompose the resin component, and adhering to the glass substrate to seal with melting the resin by IR laser light etc. During the above-described process, the low melting point glass substrate is dispersed inside the metal oxide layer to physically join and therefore high sealing properties can be obtained. Since the resin component is disappeared, outgas is not generated as with a UV curable resin, and therefore use of the low melting point glass resin is effective for improving durability of the photoelectric conversion element. Generally, the low melting point glass resin is commercially available as glass frits or glass pastes, which are effectively used. In the present disclosure, the glass resin having the lower melting point is more preferable.

A temperature of the heat treatment is not particularly limited, and may be freely set depending on a sealing member for use. The temperature is preferably 50°C or higher but 200°C or lower, more preferably 60°C or higher but 150°C or lower, and even more preferably 70°C or higher but 100°C or lower. Duration of the heat treatment is not particularly limited, and may be freely set depending on a sealing member for use. The duration is preferably 10 minutes or longer but 10 hours or shorter, more preferably 20 minutes or longer but 5 hours or shorter, and even more preferably 30 minutes or longer but 3 hours or shorter.

Moreover, a sheet-shaped sealing material may be also effectively used in the present disclosure.

The sheet-shaped sealing material is a product where a resin layer is formed on a sheet in advance. As the sheet, glass or a film having high gas barrier properties may be used. The sheet corresponds to the second substrate of the present disclosure. The sealing member and the substrate can be formed at once by bonding the sheet-shaped sealing member onto the second electrode of the photoelectric conversion element, followed by curing the resin. When the resin layer is formed on the entire surface of the sheet, the sealing system is "plane sealing." The sealing system may be "frame sealing" where a hollow section is provided inside the photoelectric conversion element according to the formation pattern of the resin layer.

Since oxygen is provided in the hollow section inside the sealing, hole-transporting function of the hole-transporting layer can be stably maintained over a long period, which may be effective for improving durability of the photoelectric conversion element. In the present disclosure, the above-described effect can be exhibited as long as oxygen is included in the hollow section created by sealing, but the oxygen concentration in the hollow section inside the sealing is more preferably 5.0% by volume or greater but 21.0% by volume or less, and even more preferably 10.0% by volume or greater but 21.0% by volume or less.

The oxygen concentration in the hollow section can be controlled by performing sealing inside the glove box in which the oxygen concentration is adjusted.

The adjustment of the oxygen concentration can be performed by a method using a gas cylinder including gas having the predetermined oxygen concentration, or a method using a nitrogen gas generating device.

The oxygen concentration inside the glove box can be measured by means of a commercially available oxygen meter or oxygen monitor.

The oxygen concentration inside the hollow section formed by sealing can be measured, for example, by internal vapor analysis (IVA) or atmospheric pressure ionization mass spectrometry (API-MS). Specifically, the photoelectric conversion element is placed in a highly vacuumed chamber or a chamber filled with inert gas, the sealing of the photoelectric conversion element is released inside the chamber to determine all of the components in the gas included the hollow section through mass analysis of gas or moisture inside the chamber, and a ratio of oxygen to a total amount of all of the components is calculated to thereby determine an oxygen concentration.

Gas included inside the sealed photoelectric conversion element other than oxygen is preferably inert gas, and more preferably nitrogen or argon.

When sealing is performed, as well as the oxygen concentration, a dew point inside the glove box is preferably controlled. To adjust the dew point is effective for improving output or durability of the photoelectric conversion element. The dew point is determined as a temperature at which condensation starts when gas including water vapor is cooled.

The dew point is not particularly limited. The dew point is preferably 0°C or lower, and more preferably -20°C or lower. The lower limit of the dew point is preferably -50°C or higher.

A method for forming the sealing section is not particularly limited, and the sealing can be performed according to any of methods known in the art. For example, various methods, such as dispensing, wire bar coating, spin coating, roller coating, blade coating, gravure coating, relief printing, offset printing, intaglio printing, rubber plate printing, and screen printing, can be used.

Moreover, a passivation layer may be disposed between the second electrode and the sealing member. The passivation layer is not particularly limited, as long as the passivation layer is arranged so that the sealing member does not come into contact with the second electrode. The passivation layer may be appropriately selected depending on the intended purpose. For example, aluminium oxide, silicon nitrate, and silicon oxide are preferably used for the passivation layer.

Examples of the photoelectric conversion element of the present disclosure will be described with reference to drawings hereinafter. However, the scope of the appended claims is not limited to the following embodiments.

### <First embodiment>

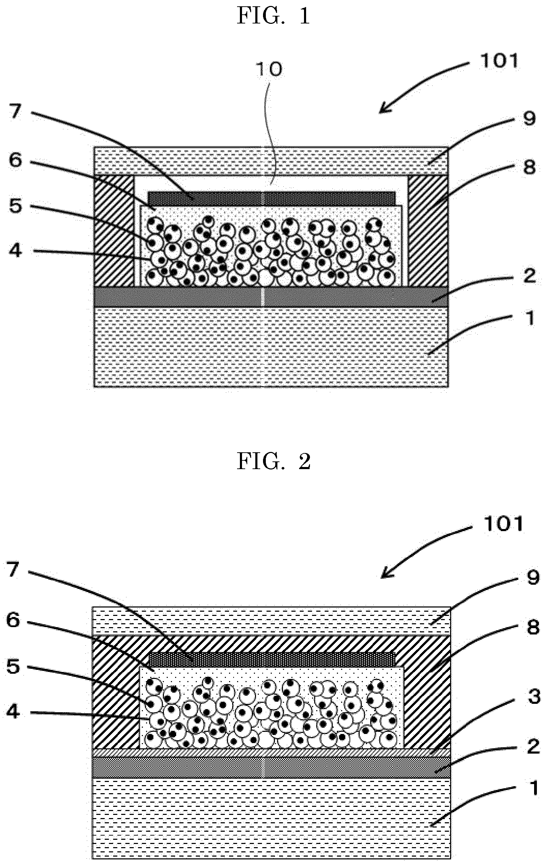

FIG. 1 is a schematic view illustrating an example of the photoelectric element of the first embodiment. The photoelectric conversion element 101 of the first embodiment of FIG. 1 includes a first electrode 2 formed on a first substrate 1. In the photoelectric conversion element 101, as illustrated in FIG. 1, the first electrode 2 is formed on the first substrate. An electron-transporting layer 4 is formed on the first electrode 2, and a photosensitization compound 5 is adsorbed on a surface of an electron-transporting material constituting the electron-transporting layer 4. A hole-transporting layer 6 is formed at the upper part and inner part of the electron-transporting layer 4, and a second electrode 7 is formed on the hole-transporting layer 6. A second substrate 9 is disposed above the second electrode 7, and the second substrate 9 is sealed with a sealing member 8 disposed between the first electrode 2 and the second substrate 9.

The photoelectric conversion element illustrated in FIG. 1 includes a hollow section 10 between the second electrode 7 and the second substrate 9. Since the hollow section is disposed and the oxygen concentration inside the hollow section can be controlled, power generation capability and durability can be further improved. Since the second electrode 7 and the second substrate 9 are not directly in contact with each other, pealing or breakage of the second electrode 7 can be prevented.

Although it is not illustrated, each of the first electrode 2 and the second electrode 7 may have a conduction path to an electrode extraction terminal.

### <Second embodiment>

FIG. 2 is a schematic view illustrating an example of the photoelectric conversion element of the second embodiment. The photoelectric conversion element 101 of the second embodiment of FIG. 2 does not have a hollow section. FIG. 2 illustrates the example where the hollow section of FIG. 1 is filled with the sealing member 8. Moreover, the photoelectric conversion element 101 of the second embodiment includes a hole-blocking layer 3 formed on the first electrode 2.

A production method of the photoelectric conversion element in which a hollow section is not disposed is not particularly limited and may be appropriately selected depending on the intended purpose. Examples of the production method thereof include: a method where a sealing member 8 is applied on an entire surface of a second electrode 7, followed by arranging a second substrate 9 thereon; and a method using the above-described sheet-shaped sealing material.

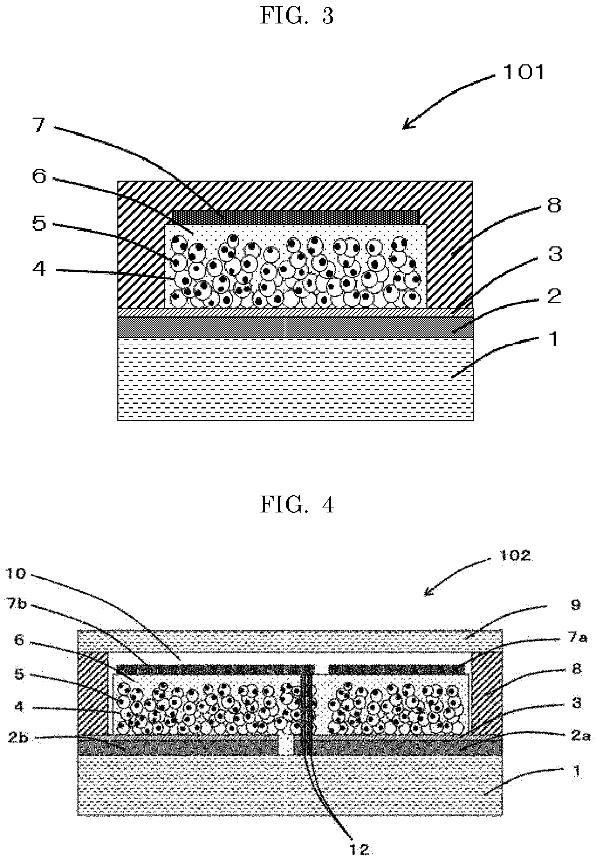

A hollow section inside the sealing may be completely removed, or a hollow section may be partially left. Since almost the entire surface of the second substrate 9 is covered with the sealing member, the second substrate 9 is prevented from pealing or being damaged when stress is applied by twisting or dropping the photoelectric conversion element etc., and therefore mechanical strength of the photoelectric conversion element can be enhanced. Moreover, a buffer layer may be disposed between the second electrode 7 and the sealing member 8. As a modified example of FIG. 2, the photoelectric conversion element may have a structure where a second substrate is not disposed, as illustrated in FIG. 3.

### (Method for producing photoelectric conversion element)

A method for producing a photoelectric conversion element of the present disclosure includes a photoelectric conversion layer forming step, and a heat-drying step, and may further include other steps according to the necessity. The photoelectric conversion layer forming step includes forming a photoelectric conversion layer including a hole-transporting layer on a first electrode. The heat-drying step includes heat-drying the hole-transporting layer.

The method for producing a photoelectric conversion element of the present disclosure includes forming a first electrode on a first substrate, forming a photoelectric conversion layer on the first electrode, and forming a second electrode on the photoelectric conversion layer, and may further include a step for forming other members, such as a hole-blocking layer and a sealing member, according to the necessity.

In the method for producing a photoelectric conversion element of the present disclosure, the first electrode, the photoelectric conversion layer, the second electrode, and other members and layers are identical to those described in the photoelectric conversion element of the present disclosure.

In the method for producing a photoelectric conversion element of the present disclosure, the hole-transporting layer includes a tertiary amine pyridine compound and a secondary amine pyridine compound.

It has been found that a photoelectric conversion element capable of yielding high output even with light of low illuminance, reducing variation in output over time, and achieving stable output can be obtained when a hole-transporting layer includes a tertiary amine pyridine compound and a secondary amine pyridine compound.

### <Photoelectric conversion layer forming step>

The photoelectric conversion layer forming step is a step including forming a photoelectric conversion layer including a hole-transporting layer on a first electrode.

The photoelectric conversion layer forming step is a step including forming the photoelectric conversion layer according to the method described with the photoelectric conversion layer of the photoelectric conversion element of the present disclosure.

### <Heat-drying step>

The heat-drying step is a step for heat-drying the formed hole-transporting layer.

As the heat-drying step is performed, the solvent included in a layer (film) formed of the hole-transporting layer coating liquid is evaporated.

As the heat-drying conditions in the heat-drying step, heating is preferably performed for 10 minutes or longer but 24 hours or shorter at 30°C or higher but 130°C or lower under ambient pressure, and more preferably for 30 minutes or longer but 2 hours or shorter at 50°C or higher but 100°C or lower under ambient pressure.

A method for performing the heat-drying is not particularly limited as long as the above-described heat-drying conditions are met and may be appropriately selected depending on the intended purpose. Examples thereof include the following methods. Specifically, any of methods known in the art, such as a method using an oven, a dryer, a thermostat chamber, or a hotplate, may be used.

### (Photoelectric conversion module)

The photoelectric conversion module of the present disclosure includes a plurality of the photoelectric conversion elements of the present disclosure, where the photoelectric conversion elements disposed next to one another are electrically connected in series or parallel.

For example, the photoelectric conversion module of the present disclosure has a photoelectric conversion element arranging region, in which a plurality of the photoelectric conversion elements are disposed next to one another and are connected in series or parallel. The photoelectric conversion module includes the photoelectric conversion elements, in each of which a photoelectric conversion layer including an electron-transporting layer and a hole-transporting layer is formed between a first electrode and a second electrode.

In the photoelectric conversion module of the present disclosure, a plurality of the photoelectric conversion elements of the present disclosure are electrically connected in series or parallel.

For example, the photoelectric conversion module of the present disclosure has a photoelectric conversion element arranging region, in which a plurality of the photoelectric conversion elements are disposed next to one another and are connected in series or parallel. The photoelectric conversion module includes the photoelectric conversion elements, in each of which a photoelectric conversion layer including an electron-transporting layer and a hole-transporting layer is formed between a first electrode and a second electrode.

The photoelectric conversion module of the present disclosure includes a plurality of the photoelectric conversion elements. Moreover, the photoelectric conversion elements may be connected in series and/or parallel, or may include the photoelectric conversion element that is independently disposed without being connected to other photoelectric conversion elements.

The structure of each layer of the photoelectric conversion module of the present disclosure may be identical to the structure of each layer of the photoelectric conversion element.

The structure of the photoelectric conversion module of the present disclosure is not particularly limited, and may be appropriately selected depending on the intended purpose. Among at least two photoelectric conversion element disposed next to each other, the first electrode, the electron-transporting layer, and the second electrode of one photoelectric conversion element are separated from the first electrode, the electron-transporting layer, and the second electrode of another photoelectric conversion element. Among at least two photoelectric conversion element disposed next to each other, meanwhile, the hole-transporting layer of one photoelectric conversion element may be separated from the hole-transporting layer or another photoelectric conversion element, or the hole-transporting layer of one photoelectric conversion element and the hole-transporting layer or another photoelectric conversion element may be extended from each other to form a continuous layer.

In the photoelectric conversion module of the present disclosure, which includes at least two photoelectric conversion elements disposed next to each other, moreover, the first electrode of one photoelectric conversion element and the second electrode of another photoelectric conversion element are electrically connected via a conduction part penetrating at least from the hole-transporting layer to the hole-blocking layer.

Moreover, the photoelectric conversion module of the present disclosure may have a structure where a pair of substrates are disposed, a photoelectric conversion element aligned region, where photoelectric conversion elements are connected in series or parallel, is disposed between the pair of the substrates, and the sealing member is disposed between the pair of the substrate. Specifically, the photoelectric conversion module preferably includes a sealing member configured to seal the hole-transporting layers of the photoelectric conversion elements in the photoelectric conversion module from the external environment of the photoelectric conversion module.

Examples of the photoelectric conversion module of the present disclosure will be described with reference to drawings hereinafter. However, the following embodiments shall not be construed as to limit the scope of the appended claims.

### <Fourth embodiment>

FIG. 4 is a schematic view illustrating an example of the photoelectric conversion module of the present disclosure, and an example illustrating a cross-section of part of the photoelectric conversion element where a plurality of the photoelectric conversion elements are included, and the photoelectric conversion elements are connected in series.

As in FIG. 4, a through hole 12 is formed after forming a hole-transporting layer 6, followed by forming a second electrode 7. As a result, the second electrode material is introduced inside the through hole 12 to electrically connect with the first electrode 2b of the adjacent cell. Although it is not illustrated in FIG. 4, the first electrode 2a and the second electrode 7b each have a path electrically connecting with an electrode of the adjacent photoelectric conversion element, or with an output extraction terminal.

The through hole 12 may penetrate through the first electrode 2 to reach the first substrate 1. Alternatively, processing may be stopped when the through hole 12 reaches inside the first electrode 2 so that the through hole 12 does not reach the first substrate 1.

When a shape of the through hole 12 is a pore penetrating through the first electrode 2 to reach the first substrate 1, and a total opening area of the pore is excessively large relative to the area of the through hole 12, the resistance value increases as the cross-sectional film area of the first electrode 2 reduces, which may lower a photoelectric conversion efficiency. Therefore, the total opening area of the pore relative to the area of the through hole 12 is preferably 5/100 or greater but 60/100 or less.

A method for forming the through hole 12 is not particularly limited, and may be appropriately selected depending on the intended purpose. Examples thereof include sand blasting, water blasting, polishing, chemical etching, and laser processing. Among the above-listed examples, laser processing is preferable. According to the laser processing, a fine hole can be formed without using sand, etching, or a resist, and processing can be performed cleanly with excellent reproducibility. When the through hole 12 is formed, moreover, at least one selected from the group consisting of the hole-blocking layer 3, the electron-transporting layer 4, the hole-transporting layer 6, and the second electrode 7 may be removed through impact peeling by laser processing. Therefore, it is not necessary to dispose a mask when layers are laminated, and the removal of the layer and formation of the fine through hole 12 can be easily performed at once.

### <Fifth embodiment>

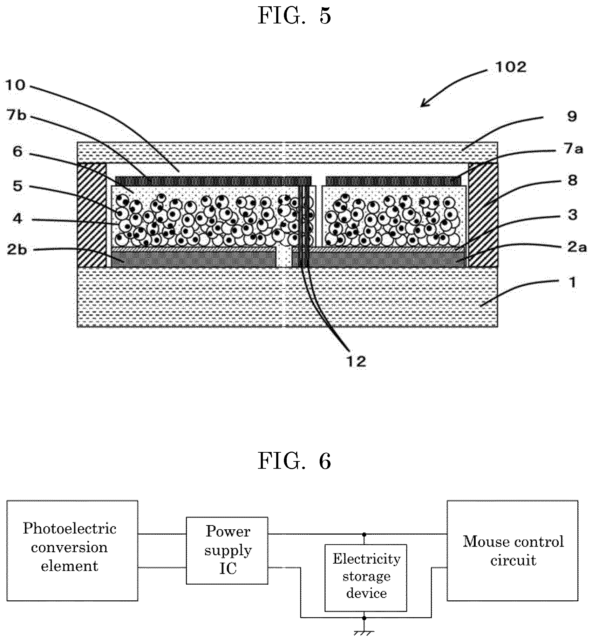

FIG. 5 is a schematic view illustrating an example of the photoelectric conversion module of the present disclosure. Unlike FIG. 4, the hole-transporting layer 6 is separated from the adjacent photoelectric conversion element and the hole-transporting layer of each photoelectric conversion element has an independent layer structure. As a result, diffusion of electrons can be suppressed to reduce leakage of electric current, and therefore durability of the photoelectric conversion module may be improved even more. Accordingly, the photoelectric conversion module having such a layer structure is effective.

### (Electronic device)

The electronic device of the present disclosure includes the photoelectric conversion element of the present disclosure or the photoelectric conversion module of the present disclosure, and a device driven by electric power generated through photoelectric conversion performed by the photoelectric conversion element or the photoelectric conversion module. The electronic device may further include other devices according to the necessity.

Moreover, the electronic device of the present disclosure includes the photoelectric conversion element of the present disclosure or the photoelectric conversion module of the present disclosure, an electricity storage device capable of storing electric power generated through photoelectric conversion performed by the photoelectric conversion element or the photoelectric conversion module, and a device driven by the electric power stored in the electricity storage device. The electronic device may further include other devices according to the necessity.

### (Power supply module)

The power supply module of the present disclosure includes the photoelectric conversion module of the present disclosure, and a power supply integrated circuit (IC). The power supply module may further include other devices according to the necessity.

Next, a specific embodiment of the electronic device including the photoelectric conversion module of the present disclosure and a device driven by the power generated by the photoelectric conversion module will be described.

FIG. 6 is a block diagram illustrating a mouse of a personal computer as an example of the electronic device of the present disclosure.

As illustrated in FIG. 6, the photoelectric conversion module is combined with the power supply IC, and the electricity storage device, and the electric power supplied is connected to the power source of the control circuit of the mouse. As a result, the electricity storage device can be charged when the mouse is not used, and the charged electricity can be used to drive the mouse, and therefore the mouse that does not need wiring or replacement of a battery can be obtained. Moreover, the weight of the mouse can be reduced as it is not necessary to mount a battery. Therefore, the mouse as the electronic device of the present disclosure is effective.

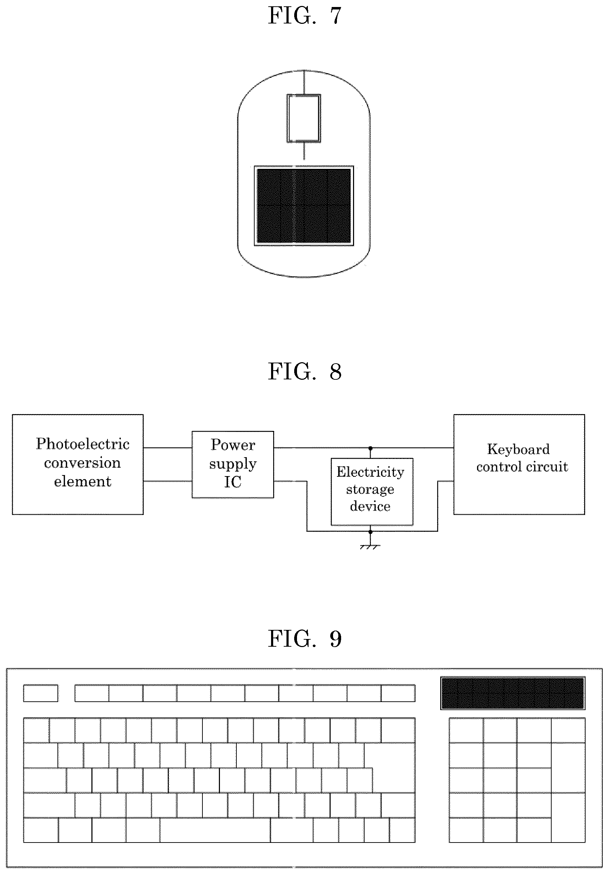

FIG. 7 is a schematic external view illustrating an example of the mouse of FIG. 6.

As illustrated in FIG. 7, the photoelectric conversion module, the power supply IC, and the electricity storage device are mounted inside the mouse, but the upper part of the photoelectric conversion elements is covered with a transparent casing to allow light to reach the photoelectric conversion elements of the photoelectric conversion module. Moreover, the entire casing of the mouse may be formed of a transparent resin. The arrangement of the photoelectric conversion elements is not limited to the arrangement illustrated in FIG. 7. For example, the photoelectric conversion elements may be arranged in a position where the photoelectric conversion elements can be irradiated with light even when the mouse is covered with a hand, and such an arrangement may be preferable in some cases.

Next, another embodiment of the electronic device including the photoelectric conversion module of the present disclosure, and a device driven by electric power generated by the photoelectric conversion module will be described.

FIG. 8 is a block view illustrating a keyboard for a personal computer as an example of the electronic device of the present disclosure.

As illustrated in FIG. 8, the photoelectric conversion elements of the photoelectric conversion module are combined with the power supply IC, and the electricity storage device, and the supplied electricity can be transmitted to a power source of the control circuit of the keyboard. As a result, the electricity storage device can be charged when the keyboard is not used, and the charged electricity can be used to drive the keyboard, and therefore the keyboard that does not need wiring or replacement of a battery can be obtained. Moreover, the weight of the keyboard can be reduced as it is not necessary to mount a battery. Therefore, the keyboard as the electronic device of the present disclosure is effective.

FIG. 9 is a schematic external view illustrating an example of the keyboard illustrated in FIG. 8.

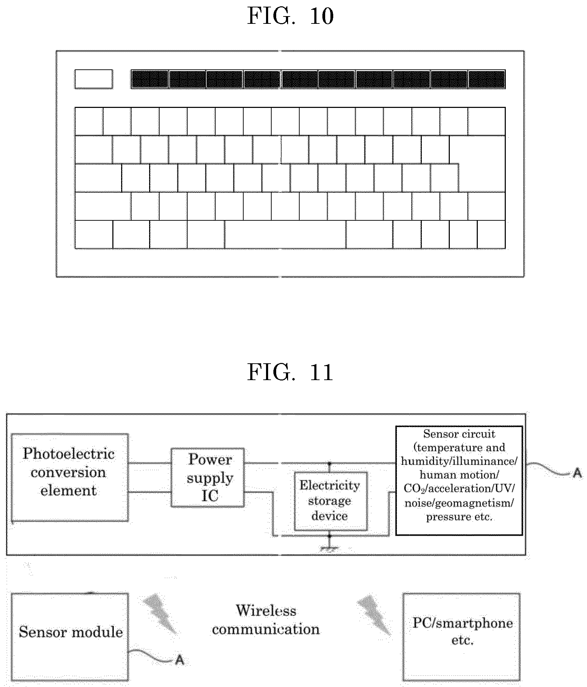

As illustrated in FIG. 9, the photoelectric conversion elements of the photoelectric conversion module, the power supply IC, and the electricity storage device are mounted inside the keyboard, but the upper part of the photoelectric conversion elements is covered with a transparent casing to allow light to reach the photoelectric conversion elements. Moreover, the entire casing of the keyboard may be formed of a transparent resin. The arrangement of the photoelectric conversion elements is not limited to the arrangement illustrated in FIG. 9. In case of a small keyboard having a small space in which the photoelectric conversion element is mounted, as illustrated in FIG. 10, the photoelectric conversion element may be embedded as part of keys, and such an arrangement is effective.

Next, yet another embodiment of the electronic device including the photoelectric conversion module of the present disclosure, and a device driven by electric power generated by the photoelectric conversion module will be described.

FIG. 11 is a block view illustrating a sensor as an example of the electronic device of the present disclosure.

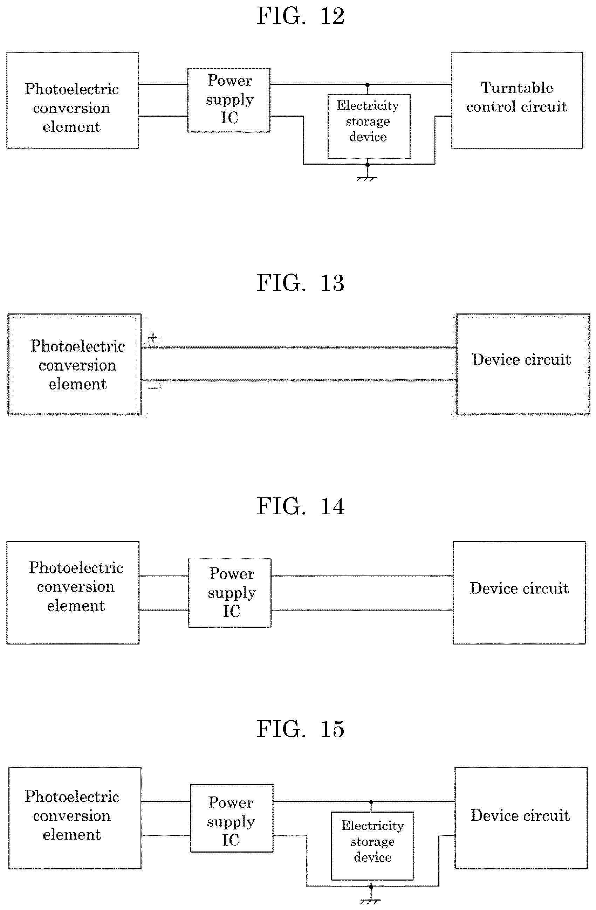

As illustrated in FIG. 11, the photoelectric conversion elements of the photoelectric conversion module are combined with the power supply IC and the electricity storage device, and the supplied electricity is transmitted to the power source of the sensor circuit. As a result, the sensor module can be composed without connecting to an external power source and without performing replacement of a battery. The sensing target may be a temperature and humidity, illuminance, motions of humans, CO₂, acceleration, UV, noise, geomagnetism, or pressure. The sensor module can be applied for various sensors and is effective. As illustrated in FIG. 12, the sensor module is configured to sense a target to be measured on a regular basis and to transmit the read data to a personal computer (PC) or a smartphone through wireless communication.

It is expected that use of sensors is significantly increased as the internet of things (IoT) society approaches. To replace batteries of numerous sensors one by one is time consuming and is not realistic. Moreover, the fact that a sensor is installed at a position such as a ceiling and a wall where a cell is not easily replaced also makes workability bad. Moreover, supplying electric power by the photoelectric conversion element is also a significantly large advantage. Furthermore, the photoelectric conversion module of the present disclosure has advantages that high output can be obtained with light of low illuminance, a high degree of freedom in installation can be achieved because the output has low dependency to the light incident angle.

Next, yet another embodiment of the electronic device including the photoelectric conversion module of the present disclosure, and a device driven by electric power generated by the photoelectric conversion module will be described.

FIG. 12 is a block view illustrating a turntable as an example of the electronic device of the present disclosure.

As illustrated in FIG. 12, the photoelectric conversion element is combined with the power supply IC and the electricity storage device, and the supplied electricity is transmitted to the power source of the turntable circuit. As a result, the turntable can be composed without connecting to an external power source and without performing replacement of a battery.

The turntable is used, for example, in a display case in which products are displayed. Wiring of a power supply degrades appearance of the display, and moreover displayed products need to be removed at the time of replacing a battery cell, which is time-consuming. Use of the photoelectric conversion module of the present disclosure is effective because the above-mentioned problems can be solved.

The photoelectric conversion module of the present disclosure, the electronic device including a device driven by electric power generated by the photoelectric conversion module, and the power supply module have been described above, but the embodiments described above are only a part of the present disclosure, and use of the photoelectric conversion module of the present disclosure is not limited to the embodiments described above.

### <Use>

The photoelectric conversion module of the present disclosure can function as a self-sustaining power supply, and a device can be driven by the electric power generated through photoelectric conversion performed by the photoelectric conversion module. The photoelectric conversion module of the present disclosure can generate power upon irradiation of light. Therefore, the electronic device does not need to connect with a power source, or perform battery replacement. Therefore, the electronic device can be driven in a place where there is no power supply facility, the electronic device can be worn or carried, and the electronic device can be driven without replacement of a battery cell even in a place where a battery cell is not easily replaced. Moreover, when a dry battery cell is used, the electronic device becomes heavy by a weight of the dry battery cell, or the electronic device becomes large by a size of the dry battery cell. Therefore, there may be a problem in installing the electronic device on a wall or ceiling, or transporting the electronic device. Since the photoelectric conversion module of the present disclosure is light and thin, it can be freely installed, and can be worn and carried, which is advantageous.

As described above, the photoelectric conversion module of the present disclosure can be used as a self-sustaining power supply, and can be used in combination with various electronic devices. For example, the photoelectric conversion module of the present disclosure can be used in combination with a display device (e.g., an electronic desk calculator, a watch, a mobile phone, an electronic organizer, and electronic paper), an accessory device of a personal computer (e.g., a mouse and a keyboard), various sensor devices (e.g., a temperature and humidity sensor and a human detection sensor), transmitters (e.g., a beacon and a global positioning system (GPS)), and numerous electronic devices (e.g., an auxiliary lamp and a remote controller).

The photoelectric conversion module of the present disclosure is widely applied because the photoelectric conversion element can generate electricity particularly with light of low illuminance and can generate electricity indoors and in dimmed or shaded places. Moreover, the photoelectric conversion element is highly safe because liquid leakage found in the case of a dry battery cell does not occur, and accidental ingestion found in the case of a button battery cell does not occur. Furthermore, the photoelectric conversion module can be used as an auxiliary power supply for the purpose of prolonging a continuous operation time of a charge-type or dry cell-type electronic equipment. By using the photoelectric conversion module of the present disclosure and a device driven by the electric power generated by the photoelectric conversion in combination, as described above, an electronic device that is light in weight and easy to use, has a high degree of freedom in installation, does not require replacement of a battery cell, is highly safe, and is effective in decreasing environmental loads can be obtained.

FIG. 13 illustrates a basic structural view of the electronic device in which the photoelectric conversion module of the present disclosure and the device driven by the electric power generated by the photoelectric conversion. The electronic device can generate electricity when the photoelectric conversion module is irradiated with light, and can extract electric power. A circuit of the device can be driven by the generated electric power.

Since the output of the photoelectric conversion element varies depending on circumferential illuminance, the electronic device illustrated in FIG. 13 may not be stably driven in some cases. In this case, as illustrated in FIG. 14, a power supply IC for a photoelectric conversion element can be incorporated between the photoelectric conversion element and the circuit of the device in order to supply stable voltage to a side of the circuit, and such arrangement is effective.

However, the photoelectric conversion element of the photoelectric conversion module has the following problem. That is, desired electric power cannot be obtained when light of sufficient illuminance is not applied, although the photoelectric conversion element can generate electric power as long as light of sufficient illuminance is applied. In this case, as illustrated in FIG. 15, an electricity storage device, such as a capacitor, is mounted between the power supply IC and a device circuit to store the excessive electric power from the photoelectric conversion element in the electricity storage device. As a result, the electricity stored in the electricity storage device can be supplied to the device circuit even when illuminance of light is too low, or light is not applied to the photoelectric conversion element, and the electronic device can be stably driven and the advantages obtained by the photoelectric conversion element can be maximized.

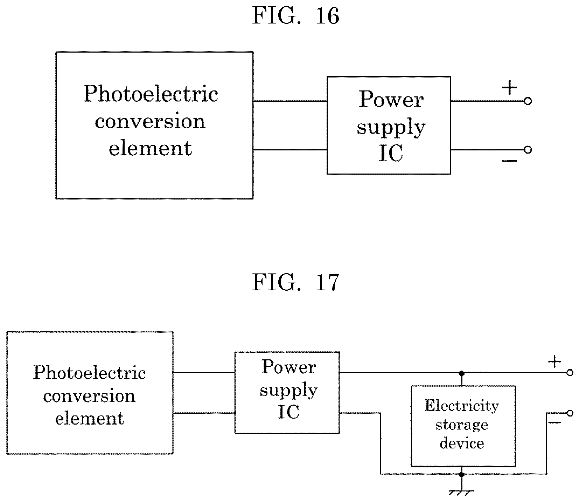

Meanwhile, the photoelectric conversion module of the present disclosure can be also used as a power supply module and use of the photoelectric conversion module as the power supply module is effective. As illustrated in FIG. 16, for example, a DC power supply module capable of supplying electricity generated through photoelectric conversion performed by the photoelectric conversion element of the photoelectric conversion module at a constant voltage level with the power supply IC when the photoelectric conversion module of the present disclosure is connected with the power supply IC for the photoelectric conversion element.

As illustrated in FIG. 17, furthermore, the electricity storage device is combined with the power supply IC. As a result, the electricity generated by the photoelectric conversion element of the photoelectric conversion module can be stored in the electricity storage device, which enables to constitute a power supply module capable of supplying electricity even when illuminance of light is too low, or light is not applied to the photoelectric conversion element.

The power supply module of the present disclosure as illustrated in FIGs. 16 and 17 can be used as a power supply module that does not need to replace a battery cell, unlike a primary battery cell known in the art.

### Examples

The present disclosure will be described below by way of Examples, but should not be construed as being limited to these Examples in any way.

### (Example 1)

### <Production of photoelectric conversion element>

On a glass substrate serving as a first substrate, a film of indium-doped tin oxide (ITO) and a film of niobium-doped tin oxide (NTO) were sequentially formed as a first electrode by sputtering.

Subsequently, a dense layer of titanium oxide was formed as a hole-blocking layer on the first electrode by reactive sputtering with oxygen gas.

Next, 3 parts by mass of titanium oxide (ST-21, available from ISHIHARA SANGYO KAISHA, LTD.), 0.2 parts by mass of acetyl acetone, and 0.3 parts by mass of polyoxyethylene octylphenyl ether (available from Wako Pure Chemical Industries, Ltd.) serving as a surfactant together with 5.5 parts by mass of water and 1.0 part by mass of ethanol were subjected to a bead mill treatment for 12 hours, to thereby obtain a titanium oxide dispersion liquid. To the obtained titanium oxide dispersion liquid, 1.2 parts by mass of polyethylene glycol (polyethylene glycol 20,000, available from Wako Pure Chemical Industries, Ltd.) was added to produce a paste. The produced paste was applied (average thickness: about 1.2 µm) onto the hole-blocking layer, and the applied paste was dried at 110°C, followed by firing in air at 550°C for 30 minutes, to thereby form a porous electron-transporting layer.

The glass substrate on which the electron-transporting layer had been formed was immersed in a mixed solution including a photosensitization compound represented by B-5 and acetonitrile/t-butanol (volume ratio: 1:1), followed by leaving to stand in the dark for 1 hour. Thereafter, the excess photosensitization compound was removed, and the photosensitization compound was adsorbed on the surface of the electron-transporting layer.

Next, to 1,550 parts by mass of chlorobenzene, 28.3 parts by mass of lithium (fluorosulfonyl)(trifluoromethanesulfonyl)imide (LiFTFSI) (available from PROVISCO CS) serving as lithium salt, 50.0 parts by mass of the tertiary amine pyridine compound represented by C-11, 5.5 parts by mass (10% by mass relative to a total amount of the pyridine compounds) of the secondary amine pyridine compound represented by C-24, 274 parts by mass of the hole-transporting material represented by D-7 (available from Merck KGaA), 26.2 parts by mass of a trivalent cobalt complex represented by F-11 (available from Sigma-Aldrich Japan) serving as an oxidant, and 86 parts by mass of an acetonitrile (available from KANTO CHEMICAL CO., INC.) were added and dissolved, to thereby prepare a hole-transporting layer coating liquid. The hole-transporting layer coating liquid was applied onto the electron-transporting layer, on which the photosensitization compound had been adsorbed, by die coating, to thereby form a hole-transporting layer (average thickness: about 550 nm).

Thereafter, the hole-transporting layer applied on the outer rim section of the glass substrate was removed, and silver was deposited on the hole-transporting layer by vacuum vapor deposition to form a second electrode (average thickness: 80 nm).

Next, a UV-curable resin (World Rock No. 5910, available from Kyoritsu Chemical & Co., Ltd.) serving as a sealing member was applied on the outer rim section of the glass substrate, from which the hole-transporting layer had been removed, by a dispenser (2300N, available from SAN-EI TECH Ltd.) so as to surround a power generation region. Thereafter, the resultant was moved into a glove box, in which nitrogen mixed gas having the oxygen concentration of 15% (dew point: -60°C) was introduced, cover glass serving as a second substrate was placed on the UV-curable resin, and the resin was cured by UV irradiation to seal the power generation region. Finally, a heat treatment was performed at 80°C for 1 hour, to thereby produce a photoelectric conversion element of Example 1 illustrated in FIG. 1.

### (Example 2)

### <Production of photoelectric conversion module>

On a glass substrate serving as a first substrate, a film of indium-doped tin oxide (ITO) and a film of niobium-doped tin oxide (NTO) were sequentially formed as a first electrode by sputtering.

Next, a dense layer of titanium oxide was formed as a hole-blocking layer by reactive sputtering with oxygen gas.

The first electrode and the hole-blocking layer formed on the substrate was partially etched by laser processing, and insulation patterning was performed to partially separate the cells next to each other.

Next, an electron-transporting layer was formed in the same manner as in Example 1.

Subsequently, etching of the electron-transporting layer was performed by laser processing to separate the cells next to each other.

Next, a photosensitization compound was adsorbed on the surface of the electron-transporting layer in the same manner as in Example 1.

Furthermore, a hole-transporting layer coating liquid was prepared in the same manner as in Example 1. The hole-transporting layer coating liquid was applied onto the electron-transporting layer by die coating, to thereby form a hole-transporting layer (average thickness: about 550 nm).

Thereafter, the outer rim of the glass substrate to which a sealing member was to be disposed was etched by laser processing, and a through hole for connecting photoelectric conversion elements in series was formed by laser processing.

Furthermore, silver was deposited thereon by vacuum vapor deposition to form a second electrode (average thickness: about 80 nm). It was confirmed that the silver was deposited on the inner wall of the through hole to connect the cells next to each other in series.

Next, a UV-curable resin (WorldRock No. 5910, available from Kyoritsu Chemical & Co., Ltd.) serving as a sealing member was applied onto the outer rim of the glass substrate by a dispenser (2300N, available from SAN-EI TECH Ltd.) to surround a power generation region.

Thereafter, the resultant was moved into a glove box, in which nitrogen mixed gas having the oxygen concentration of 15% (dew point: -60°C) was introduced, cover glass serving as a second substrate was placed on the UV-curable resin, and the resin was cured by UV irradiation. Moreover, a heat treatment was performed at 80°C for 1 hour, to thereby produce a photoelectric conversion module illustrated in FIG. 5.

### (Example 3)

A photoelectric conversion module of Example 3 was produced in the same manner as in Example 2, except that, in the preparation of the hole-transporting layer coating liquid of Example 2, the amount of the tertiary amine pyridine compound was changed to 52.4 parts by mass, and the amount of the secondary amine pyridine compound was changed to 2.8 parts by mass (5% by mass relative to the total amount of the pyridine compounds).

### (Example 4)

A photoelectric conversion module of Example 4 was produced in the same manner as in Example 2, except that, in the preparation of the hole-transporting layer coating liquid of Example 2, the amount of the tertiary amine pyridine compound was changed to 54.6 parts by mass, and the amount of the secondary amine pyridine compound was changed to 0.6 parts by mass (1% by mass relative to the total amount of the pyridine compounds).

### (Example 5)

A photoelectric conversion module of Example 5 was produced in the same manner as in Example 2, except that, in the preparation of the hole-transporting layer coating liquid of Example 2, the amount of the tertiary amine pyridine compound was changed to 46.9 parts by mass, and the amount of the secondary amine pyridine compound was changed to 8.3 parts by mass (15% by mass relative to the total amount of the pyridine compounds).

### (Example 6)

A photoelectric conversion module of Example 6 was produced in the same manner as in Example 2, except that, in the preparation of the hole-transporting layer coating liquid of Example 2, the amount of the tertiary amine pyridine compound was changed to 44.1 parts by mass, and the amount of the secondary amine pyridine compound was changed to 11.0 parts by mass (20% by mass relative to the total amount of the pyridine compounds).

### (Example 7)

A photoelectric conversion module of Example 7 was produced in the same manner as in Example 2, except that, in the preparation of the hole-transporting layer coating liquid of Example 2, the materials were changed to the materials presented below.
Lithium salt: 29.9 parts by mass
Tertiary amine pyridine compound represented by C-13: 49.5 parts by mass
Secondary amine pyridine compound represented by C-25: 5.5 parts by mass (10% by mass relative to the total amount of the pyridine compounds)
Trivalent cobalt complex represented by F-22 (available from Sigma-Aldrich Japan): 25.5 parts by mass

### (Example 8)

A photoelectric conversion module of Example 8 was produced in the same manner as in Example 7, except that, in the preparation of the hole-transporting layer coating liquid of Example 7, the amount of the tertiary amine pyridine compound was changed to 44.0 parts by mass, the amount of the secondary amine pyridine compound was changed to 11.0 parts by mass (20% by mass relative to the total amount of the pyridine compounds).

### (Example 9)

A photoelectric conversion module of Example 9 was produced in the same manner as in Example 7, except that, in the preparation of the hole-transporting layer coating liquid of Example 7, the amount of the tertiary amine pyridine compound was changed to 41.25 parts by mass, the amount of the secondary amine pyridine compound was changed to 13.75 parts by mass (25% by mass relative to the total amount of the pyridine compounds).

### (Example 10)

A photoelectric conversion module of Example 10 was produced in the same manner as in Example 2, except that the photosensitization compound for use was changed to the photosensitization compound represented by B1-10, and in the preparation of the hole-transporting layer coating liquid, the materials were changed to the following materials.
Lithium salt: 31.3 parts by mass
Tertiary amine pyridine compound: 48.9 parts by mass
Secondary amine pyridine compound: 5.4 parts by mass (10% by mass relative to the total amount of the pyridine compounds)
Trivalent cobalt complex represented by F-11 (available from Sigma-Aldrich Japan): 27.6 parts by mass

### (Example 11)

A photoelectric conversion module of Example 11 was produced in the same manner as in Example 10, except that, in the preparation of the hole-transporting layer coating liquid of Example 10, the amount of the tertiary amine pyridine compound was changed to 46.2 parts by mass, the amount of the secondary amine pyridine compound was changed to 8.2 parts by mass (15% by mass relative to the total amount of the pyridine compounds).

### (Example 12)

A photoelectric conversion module of Example 12 was produced in the same manner as in Example 11, except that, in the preparation of the hole-transporting layer coating liquid, the materials were changed to the following materials.
Lithium salt [lithium bis(trifluoromethanesulfonyl)imide (LiTFSI)](available from Tokyo Chemical Industry Co., Ltd.): 27.8 parts by mass
Tertiary amine pyridine compound represented by C-11: 48.1 parts by mass
Secondary amine pyridine compound represented by C-25: 7.2 parts by mass (13% by mass relative to the total amount of the pyridine compounds)
Trivalent cobalt complex represented by F-11 (available from Sigma-Aldrich Japan): 26.2 parts by mass

### (Example 13)

A photoelectric conversion module of Example 13 was produced in the same manner as in Example 12, except that, in the preparation of the hole-transporting layer coating liquid, the materials were changed to the following materials.
Tertiary amine pyridine compound represented by C-12: 45.9 parts by mass
Secondary amine pyridine compound represented by C-23: 9.4 parts by mass (17% by mass relative to the total amount of the pyridine compounds)
Hole-transporting material represented by D-10: 274 parts by mass
Trivalent cobalt complex represented by F-11 (available from Sigma-Aldrich Japan): 26.2 parts by mass

### (Comparative Example 1)

A photoelectric conversion module of Comparative Example 1 was produced in the same manner as in Example 12, except that, in the preparation of the hole-transporting layer coating liquid, the amount of the tertiary amine pyridine compound was changed to 55.3 parts by mass, and the secondary amine pyridine compound was not added.

### (Comparative Example 2)

A photoelectric conversion module of Comparative Example 1 was produced in the same manner as in Example 12, except that, in the preparation of the hole-transporting layer coating liquid, the tertiary amine pyridine compound was not added, and the amount of the secondary amine pyridine compound was changed to 55.3 parts by mass (100% by mass relative to the total amount of the pyridine compound).

### <Durability test of photoelectric conversion element and photoelectric conversion module>

IV characteristics of each of the produced photoelectric conversion element and photoelectric conversion modules were evaluated by means of a solar cell test system (As-510-PV03, available from NF CORPORATION) with white LED irradiation adjusted to 200 lux to determine initial maximum output power Pmax (µW/cm²).

Next, each of the photoelectric conversion element and photoelectric conversion module was irradiated with light emitted from white LED adjusted to 10,000 lux for 150 hours, and IV characteristics were again evaluated with white LED irradiation adjusted to 200 lux, to thereby determine the maximum output power Pmax2 (µW/cm²) after the test.

Moreover, each of the photoelectric conversion element and photoelectric conversion module was irradiated with light emitted from white LED adjusted to 10,000 lux for 450 hours (600 hours in total), and IV characteristics were again evaluated with white LED irradiation adjusted to 200 lux, to thereby determine the maximum output power Pmax2 (µW/cm²) after the test.

Finally, the Pmax retention rate (Pmax2/Pmax1×100) of 150 hours after the durability test and the Pmax retention rate (Pmax2/Pmax1×100) of 600 hours after the durability test were determined by dividing the maximum output power Pmax2 (µW/cm²) after the test by the initial maximum output power Pmax1 (µW/cm²). The results are presented in Table 1-2.

**Table 1-1**

| | Photosensitization compound (dye) | Lithium salt | Pyridine compounds | | | Hole transporting material | Oxidant |
|---|---|---|---|---|---|---|---|
| | | | Tertiary amine | Secondary amine | | | |
| | | | | type | amount (mass%) | | |
| Ex. 1 | B-5 | Li-FTFSI | C-11 | C-24 | 10 | D-7 | F-11 |
| Ex. 2 | B-5 | Li-FTFSI | C-11 | C-24 | 10 | D-7 | F-11 |
| Ex. 3 | B-5 | Li-FTFSI | C-11 | C-24 | 5 | D-7 | F-11 |
| Ex. 4 | B-5 | Li-FTFSI | C-11 | C-24 | 1 | D-7 | F-11 |
| Ex. 5 | B-5 | Li-FTFSI | C-11 | C-24 | 15 | D-7 | F-11 |
| Ex. 6 | B-5 | Li-FTFSI | C-11 | C-24 | 20 | D-7 | F-11 |
| Ex. 7 | B-5 | Li-FTFSI | C-13 | C-25 | 10 | D-7 | F-22 |
| Ex. 8 | B-5 | Li-FTFSI | C-13 | C-25 | 20 | D-7 | F-22 |
| Ex. 9 | B-5 | Li-FTFSI | C-13 | C-25 | 25 | D-7 | F-22 |
| Ex. 10 | B1-10 | Li-FTFSI | C-11 | C-24 | 10 | D-7 | F-11 |
| Ex. 11 | B1-10 | Li-FTFSI | C-11 | C-24 | 15 | D-7 | F-11 |
| Ex. 12 | B1-10 | Li-TFSI | C-11 | C-25 | 13 | D-7 | F-11 |
| Ex. 13 | B1-10 | Li-TFSI | C-12 | C-23 | 17 | D-10 | F-11 |
| Comp. Ex. 1 | B1-10 | Li-TFSI | C-12 | - | - | D-10 | F-11 |
| Comp. Ex. 2 | B1-10 | Li-TFSI | - | C-23 | 100 | D-10 | F-11 |

**Table 1-2**

| | Evaluation results | | | |
|---|---|---|---|---|
| | Initial Pmax (µW/cm²) | Pmax retention rate (%) | | |
| | | 150 h later | 600 h later | Ratio 600 h later/150h later |
| Ex. 1 | 9.5 | 98 | 98 | 1.0 |
| Ex. 2 | 36.7 | 100 | 99 | 1.0 |
| Ex. 3 | 37.5 | 97 | 100 | 1.0 |
| Ex. 4 | 37.8 | 94 | 98 | 1.0 |
| Ex. 5 | 35.7 | 99 | 96 | 1.0 |
| Ex. 6 | 34.3 | 98 | 91 | 0.9 |
| Ex. 7 | 35.1 | 98 | 98 | 1.0 |
| Ex. 8 | 32.5 | 98 | 92 | 0.9 |
| Ex. 9 | 29.8 | 97 | 83 | 0.9 |
| Ex. 10 | 41.2 | 98 | 99 | 1.0 |
| Ex. 11 | 40.8 | 97 | 94 | 1.0 |
| Ex. 12 | 39.5 | 97 | 86 | 0.9 |
| Ex. 13 | 37.4 | 97 | 85 | 0.9 |
| Comp. Ex. 1 | 37.6 | 73 | 85 | 1.2 |
| Comp. Ex. 2 | 38.1 | 72 | 12 | 0.2 |

It was found from the results above that variation in output after the start of the durability test could be suppressed and power generation was stably performed because the hole-transporting layer included the two kinds of pyridine compounds, i.e., the tertiary amine and the secondary amine.

Meanwhile, it was found that the output was significantly dropped 150 hours later, and stability of the power generation over time was deteriorated even through the output recovered after 150 hours, when the secondary amine was not included as in Comparative Example 1.

Moreover, it was found that durability was significantly degraded when only the secondary amine pyridine compound was included as in Comparative Example 2.

## Claims

1. A photoelectric conversion element (101) comprising:
a first electrode (2);
a photoelectric conversion layer; and
a second electrode (7),
wherein the photoelectric conversion layer includes a hole-transporting layer (6), and the hole-transporting layer (6) includes a tertiary amine pyridine compound and a secondary amine pyridine compound.

2. The photoelectric conversion element (101) according to claim 1,
wherein the tertiary amine pyridine compound and the secondary amine pyridine compound are pyridine compounds represented by General Formula (1): 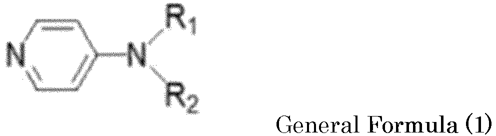
where, in General Formula (1), R₁ and R₂ are each a hydrogen atom, an alkyl group, or an aryl group that may include a substituent, where R₁ and R₂ are identical or different, and may be bonded together to form a substituted or unsubstituted nitrogen-containing heterocyclic group.

3. The photoelectric conversion element (101) according to claim 1 or 2,
wherein an amount of the secondary amine pyridine compound is 20% by mass or less relative to a total amount of the pyridine compounds.

4. The photoelectric conversion element (101) according to any one of claims 1 to 3, wherein the hole-transporting layer (6) further includes an organic hole-transporting material, and
the organic hole-transporting material includes a spiro compound.

5. The photoelectric conversion element (101) according to any one of claims 1 to 4, wherein the hole-transporting layer (6) further includes lithium salt represented by General Formula (2): 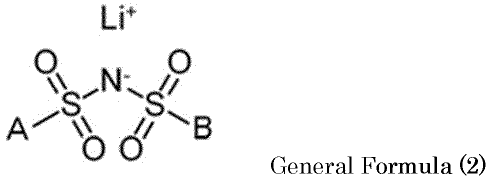 where, in General Formula (2), A and B are each a substituent selected from F, CF₃, C₂F₅, C₃F₇, and C₄F₉, but the substituent of A and the substituent of B are different.

6. The photoelectric conversion element (101) according to any one of claims 1 to 5, wherein the hole-transporting layer (6) further includes an oxidant.

7. The photoelectric conversion element (101) according to any one of claims 1 to 6, further comprising
an electron-transporting layer (4),
wherein the electron-transporting layer (4) includes titanium oxide particles and a photosensitization compound adsorbed on surfaces of the titanium oxide particles.

8. The photoelectric conversion element (101) according to claim 7, further comprising
a hole-blocking layer (3) disposed between the first electrode (2) and the electron-transporting layer (4).

9. The photoelectric conversion element (101) according to any one of claims 1 to 8, further comprising:
a sealing member (8) configured to seal the hole-transporting layer (6) from an external environment of the photoelectric conversion element (101).

10. The photoelectric conversion element (101) according to any of claims 1 to 9, wherein the tertiary amine pyridine is selected from the group consisting of the compounds: 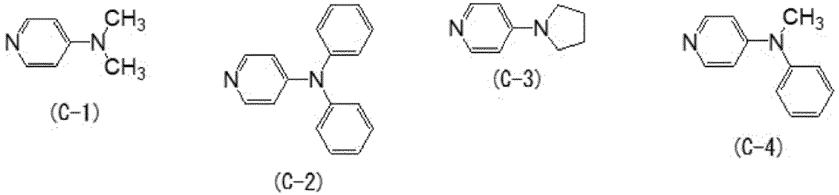 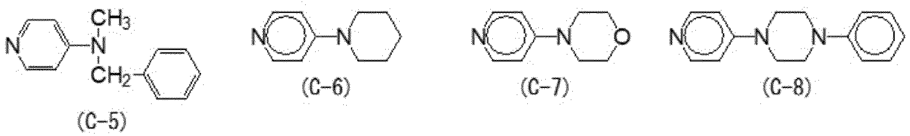 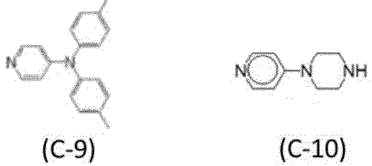 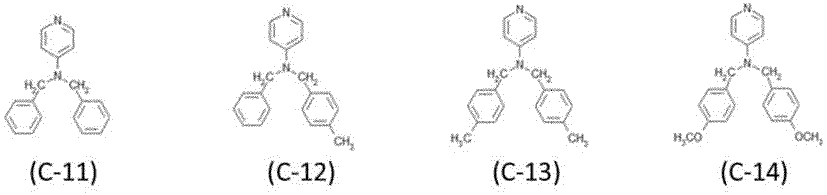 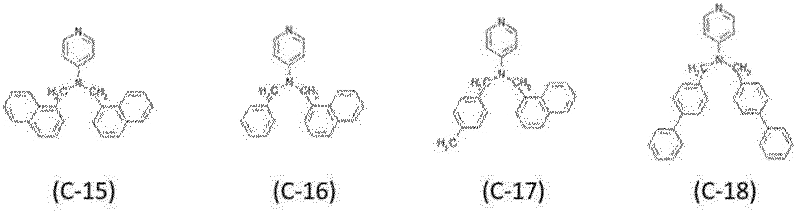 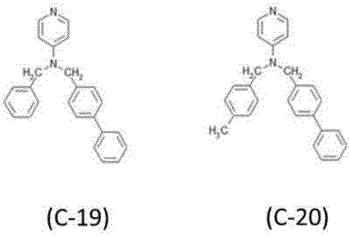 and wherein the secondary amine pyridine is selected from the group consisting of the compounds:

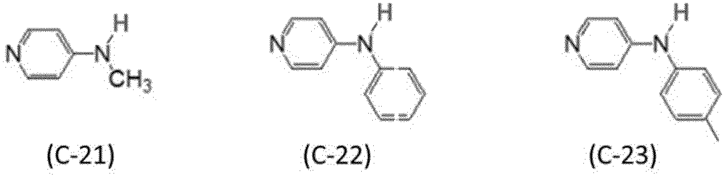

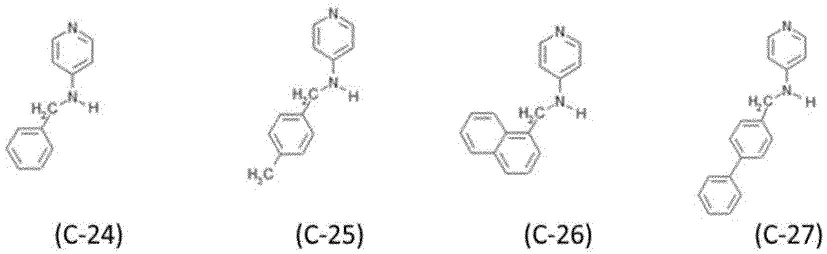

11. A photoelectric conversion module comprising:
a plurality of the photoelectric conversion elements (101) according to any one of claims 1 to 10,
wherein the photoelectric conversion elements (101) are electrically connected in series or parallel.

12. The photoelectric conversion module according to claim 11,
wherein at least two of the photoelectric conversion elements (101) are disposed next to one another in the photoelectric conversion module, and
wherein the first electrode (2) in one photoelectric conversion element (101) and the second electrode (7) in another photoelectric conversion element (101) are electrically connected through a conduction part piercing through the hole-transporting layer (6), or the electron-transporting layer (4), or both.

13. The photoelectric conversion module (101) according to claim 11 or 12, further comprising
a sealing member (8) configured to seal the photoelectric conversion layers of the photoelectric conversion elements (101) in the photoelectric conversion module from an external environment of the photoelectric conversion module.

14. An electronic device comprising:
the photoelectric conversion element (101) according to any one of claims 1 to 10, or the photoelectric conversion module according to any one of claims 11 to 13, or both; and
a device driven by electricity generated through photoelectric conversion performed by the photoelectric conversion element (101) or the photoelectric conversion module.

15. An electronic device comprising:
the photoelectric conversion element (101) according to any one of claims 1 to 9, or the photoelectric conversion module according to any one of claims 11 to 13, or both;
an electricity storage device capable of storing electricity generated through photoelectric conversion performed by the photoelectric conversion element (101), or the photoelectric conversion module, or both; and
a device driven by the electricity stored in the electricity storage device.

## Patentansprüche

1. Fotoelektrisches Umwandlungselement (101), umfassend:
eine erste Elektrode (2);
eine photoelektrische Umwandlungsschicht; und
eine zweite Elektrode (7),
wobei die photoelektrische Umwandlungsschicht eine Lochtransportschicht (6) beinhaltet und die Lochtransportschicht (6) eine tertiäre Aminpyridinverbindung und eine sekundäre Aminpyridinverbindung beinhaltet.

2. Photoelektrisches Umwandlungselement (101) nach Anspruch 1, wobei die tertiäre Aminpyridinverbindung und die sekundäre Aminpyridinverbindung Pyridinverbindungen sind, die durch allgemeine Formel (1) angegeben sind: 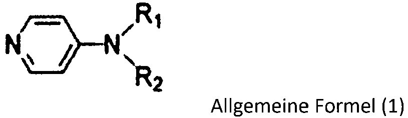 wobei in allgemeiner Formel (1) R₁ und R₂ jeweils ein Wasserstoffatom, eine Alkylgruppe oder eine Arylgruppe sind, die einen Substituenten beinhalten kann, wobei R₁ und R₂ identisch oder verschieden sind und miteinander verbunden sein können, um eine substituierte oder unsubstituierte stickstoffhaltige heterocyclische Gruppe zu bilden.

3. Fotoelektrisches Umwandlungselement (101) nach Anspruch 1 oder 2,
wobei eine Menge der sekundären Aminpyridinverbindung 20 Masseprozent oder weniger relativ zu einer Gesamtmenge der Pyridinverbindungen beträgt.

4. Fotoelektrisches Umwandlungselement (101) nach einem der Ansprüche 1 bis 3,
wobei die Lochtransportschicht (6) weiter ein organisches Lochtransportmaterial beinhaltet, und
das organische Lochtransportmaterial eine Spiroverbindung beinhaltet.

5. Fotoelektrisches Umwandlungselement (101) nach einem der Ansprüche 1 bis 4,
wobei die Lochtransportschicht (6) weiter ein Lithiumsalz beinhaltet, das durch allgemeine Formel (2) angegeben ist: 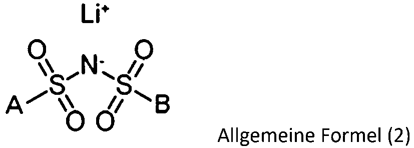 wobei in allgemeiner Formel (2) A und B jeweils ein Substituent sind, der aus F, CF₃, C₂F₅, C₃F₇und C₄F₉ausgewählt ist, aber der Substituent von A und der Substituent von B unterschiedlich sind.

6. Fotoelektrisches Umwandlungselement (101) nach einem der Ansprüche 1 bis 5, wobei die Lochtransportschicht (6) weiter ein Oxidationsmittel beinhaltet.

7. Fotoelektrisches Umwandlungselement (101) nach einem der Ansprüche 1 bis 6, weiter umfassend
eine Elektronentransportschicht (4),
wobei die Elektronentransportschicht (4) Titanoxidpartikel und eine auf Oberflächen der Titanoxidpartikel adsorbierte Photosensibilisierungsverbindung beinhaltet.

8. Fotoelektrisches Umwandlungselement (101) nach Anspruch 7, weiter umfassend
eine Lochblockierschicht (3), die zwischen der ersten Elektrode (2) und der Elektronentransportschicht (4) angeordnet ist.

9. Fotoelektrisches Umwandlungselement (101) nach einem der Ansprüche 1 bis 8, weiter umfassend:
ein Dichtungselement (8), das so konfiguriert ist, dass es die Lochtransportschicht (6) gegenüber einer äußeren Umgebung des fotoelektrischen Umwandlungselements (101) abdichtet.

10. Fotoelektrisches Umwandlungselement (101) nach einem der Ansprüche 1 bis 9, wobei das tertiäre Aminpyridin aus der Gruppe ausgewählt ist, die aus den folgenden Verbindungen besteht: 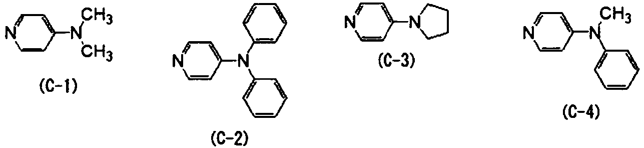 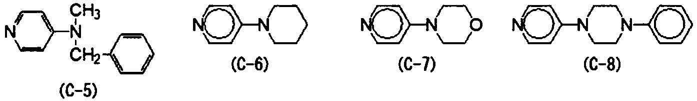 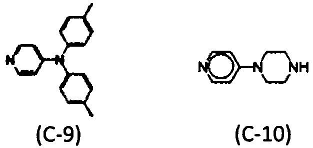 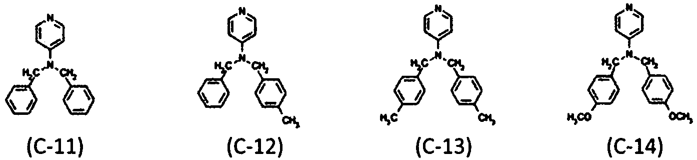 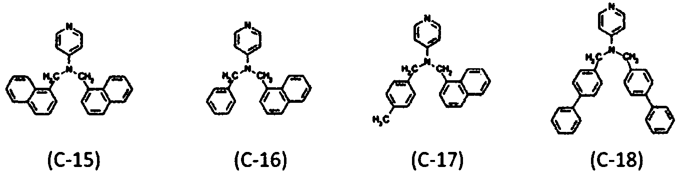 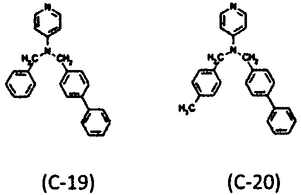 und wobei das sekundäre Aminpyridin aus der Gruppe ausgewählt ist, die aus den folgenden Verbindungen besteht:

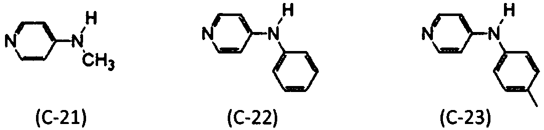

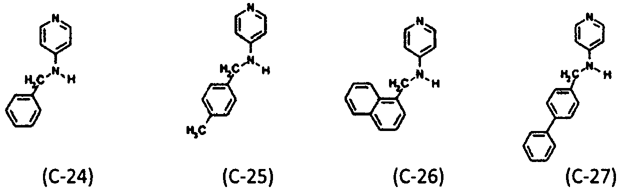

11. Fotoelektrisches Umwandlungsmodul, umfassend:
eine Vielzahl der photoelektrischen Umwandlungselemente (101) nach einem der Ansprüche 1 bis 10,
wobei die photoelektrischen Umwandlungselemente (101) elektrisch in Reihe oder parallel verbunden sind.

12. Fotoelektrisches Umwandlungsmodul nach Anspruch 11,
wobei mindestens zwei der fotoelektrischen Umwandlungselemente (101) im photoelektrischen Umwandlungsmodul nebeneinander angeordnet sind, und
wobei die erste Elektrode (2) in einem fotoelektrischen Umwandlungselement (101) und die zweite Elektrode (7) in einem anderen fotoelektrischen Umwandlungselement (101) elektrisch über einen leitenden Teil verbunden sind, der die Lochtransportschicht (6) oder die Elektronentransportschicht (4) oder beide durchdringt.

13. Fotoelektrisches Umwandlungsmodul (101) nach Anspruch 11 oder 12, weiter umfassend
ein Dichtungselement (8), das so konfiguriert ist, dass es die fotoelektrischen Umwandlungsschichten der fotoelektrischen Umwandlungselemente (101) im fotoelektrischen Umwandlungsmodul gegenüber einer äußeren Umgebung des fotoelektrischen Umwandlungsmoduls abdichtet.

14. Elektronische Vorrichtung, umfassend:
das fotoelektrische Umwandlungselement (101) nach einem der Ansprüche 1 bis 10 oder das fotoelektrische Umwandlungsmodul nach einem der Ansprüche 11 bis 13 oder beides; und
eine Vorrichtung, die mit Elektrizität angetrieben wird, die durch photoelektrische Umwandlung erzeugt wird, die vom fotoelektrischen Umwandlungselement (101) oder dem fotoelektrischen Umwandlungsmodul durchgeführt wird.

15. Elektronische Vorrichtung, umfassend:
das fotoelektrische Umwandlungselement (101) nach einem der Ansprüche 1 bis 9 oder das fotoelektrische Umwandlungsmodul nach einem der Ansprüche 11 bis 13 oder beides;
eine Elektrizitätsspeichervorrichtung, die imstande ist, Elektrizität zu speichern, die durch photoelektrische Umwandlung erzeugt wird, die vom fotoelektrischen Umwandlungselement (101) oder dem fotoelektrischen Umwandlungsmodul oder beiden durchgeführt wird; und
eine Vorrichtung, die von der in der Elektrizitätsspeichervorrichtung gespeicherten Elektrizität angetrieben wird.

## Revendications

1. Élément de conversion photoélectrique (101) comprenant :
une première électrode (2) ;
une couche de conversion photoélectrique ; et
une seconde électrode (7),
dans lequel la couche de conversion photoélectrique inclut une couche de transport de trous (6), et la couche de transport de trous (6) inclut un composé de pyridine-amine tertiaire et un composé de pyridine-amine secondaire.

2. Élément de conversion photoélectrique (101) selon la revendication 1, dans lequel le composé pyridine-amine tertiaire et le composé pyridine-amine secondaire sont des composés pyridine représentés par la formule générale (1) : 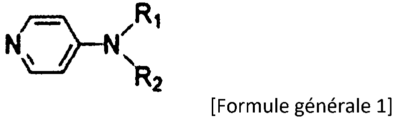 dans laquelle, dans la formule générale (1), R₁ et R₂ sont chacun un atome d'hydrogène, un groupe alkyle ou un groupe aryle qui peut inclure un substituant, où R₁ et R₂ sont identiques ou différents, et peuvent être liés ensemble pour former un groupe hétérocyclique contenant de l'azote substitué ou non substitué.

3. Élément de conversion photoélectrique (101) selon la revendication 1 ou 2,
dans lequel la quantité du composé pyridine-amine secondaire est de 20 % en masse ou moins par rapport à la quantité totale des composés pyridine.

4. Élément de conversion photoélectrique (101) selon l'une quelconque des revendications 1 à 3,
dans lequel la couche de transport de trous (6) inclut en outre un matériau organique de transport de trous, et
le matériau organique de transport de trous inclut un composé spiro.

5. Élément de conversion photoélectrique (101) selon l'une quelconque des revendications 1 à 4,
dans lequel la couche de transport de trous (6) inclut en outre un sel de lithium représenté par la formule générale (2) : 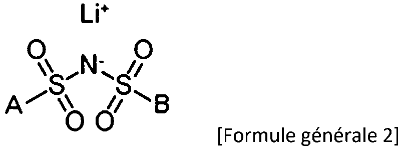 dans laquelle, dans la formule générale (2), A et B sont chacun un substituant choisi parmi F, CF₃, C₂F₅, C₃F₇, et C₄F₉, mais le substituant de A et le substituant de B sont différents.

6. Élément de conversion photoélectrique (101) selon l'une quelconque des revendications 1 à 5, dans lequel la couche de transport de trous (6) inclut en outre un oxydant.

7. Élément de conversion photoélectrique (101) selon l'une quelconque des revendications 1 à 6, comprenant en outre
une couche de transport d'électrons (4),
dans lequel la couche de transport d'électrons (4) inclut des particules d'oxyde de titane et un composé photosensibilisant adsorbé sur les surfaces des particules d'oxyde de titane.

8. Élément de conversion photoélectrique (101) selon la revendication 7, comprenant en outre
une couche de blocage des trous (3) disposée entre la première électrode (2) et la couche de transport d'électrons (4).

9. Élément de conversion photoélectrique (101) selon l'une quelconque des revendications 1 à 8, comprenant en outre :
un élément d'étanchéité (8) configuré pour sceller la couche de transport de trous (6) d'un environnement extérieur de l'élément de conversion photoélectrique (101).

10. Élément de conversion photoélectrique (101) selon l'une quelconque des revendications 1 à 9, dans lequel la pyridine-amine tertiaire est choisie dans le groupe constitué des composés suivants : 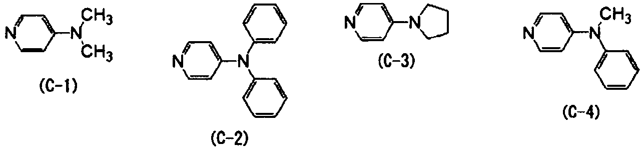 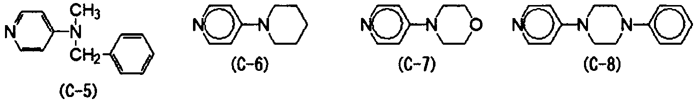 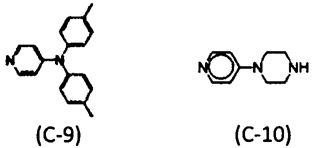 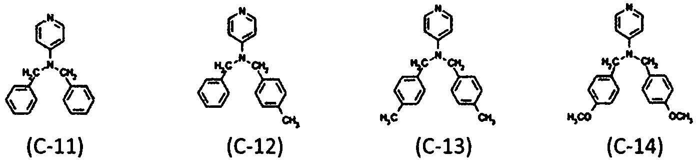 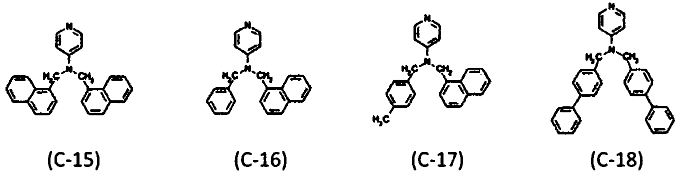 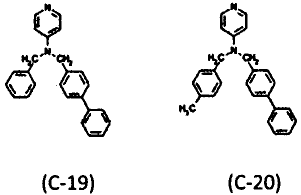 et dans lequel la pyridine-amine secondaire est choisie dans le groupe constitué des composés suivants :

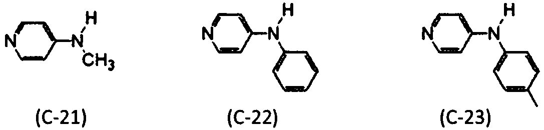

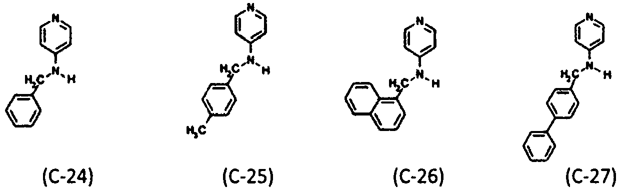

11. Module de conversion photoélectrique comprenant :
une pluralité d'éléments de conversion photoélectrique (101) selon l'une quelconque des revendications 1 à 10,
dans lequel les éléments de conversion photoélectrique (101) sont connectés électriquement en série ou en parallèle.

12. Module de conversion photoélectrique selon la revendication 11,
dans lequel au moins deux des éléments de conversion photoélectrique (101) sont disposés côte à côte dans le module de conversion photoélectrique, et
dans lequel la première électrode (2) d'un élément de conversion photoélectrique (101) et la seconde électrode (7) d'un autre élément de conversion photoélectrique (101) sont électriquement connectées par une partie conductrice traversant la couche de transport de trous (6), ou la couche de transport d'électrons (4), ou les deux.

13. Module de conversion photoélectrique (101) selon la revendication 11 ou 12, comprenant en outre
un élément d'étanchéité (8) configuré pour sceller les couches de conversion photoélectrique des éléments de conversion photoélectrique (101) dans le module de conversion photoélectrique d'un environnement extérieur du module de conversion photoélectrique.

14. Dispositif électronique, comprenant :
l'élément de conversion photoélectrique (101) selon l'une quelconque des revendications 1 à 10, ou le module de conversion photoélectrique selon l'une quelconque des revendications 11 à 13, ou les deux ; et
un dispositif commandé par l'électricité générée par conversion photoélectrique réalisée par l'élément de conversion photoélectrique (101) ou le module de conversion photoélectrique.

15. Dispositif électronique, comprenant :
l'élément de conversion photoélectrique (101) selon l'une quelconque des revendications 1 à 9, ou le module de conversion photoélectrique selon l'une quelconque des revendications 11 à 13, ou les deux;
un dispositif de stockage d'électricité capable de stocker l'électricité produite par conversion photoélectrique réalisée par l'élément de conversion photoélectrique (101), ou le module de conversion photoélectrique, ou les deux ; et
un appareil alimenté par l'électricité stockée dans un dispositif de stockage d'électricité.
